(19) Europäisches Patentamt
European Patent Office
Office européen des brevets

(11) EP 3 261 987 B1

(12) **EUROPÄISCHE PATENTSCHRIFT**

(45) Veröffentlichungstag und Bekanntmachung des Hinweises auf die Patenterteilung:
**28.08.2024 Patentblatt 2024/35**

(21) Anmeldenummer: **16708621.4**

(22) Anmeldetag: **23.02.2016**

(51) Internationale Patentklassifikation (IPC):
***C08F 8/30*** *(2006.01)* ***C09K 5/14*** *(2006.01)*
***H01B 1/24*** *(2006.01)* ***C01B 32/174*** *(2017.01)*
***B82Y 30/00*** *(2011.01)*

(52) Gemeinsame Patentklassifikation (CPC):
**C01B 32/174; C08F 8/30; C09K 5/14; H01B 1/24;**
B82Y 30/00; C09K 23/16

(86) Internationale Anmeldenummer:
**PCT/EP2016/053790**

(87) Internationale Veröffentlichungsnummer:
**WO 2016/135152 (01.09.2016 Gazette 2016/35)**

(54) **DISPERGIER-ADDITIV**

DISPERSING ADDITIVE

ADDITIF DE DISPERSION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.02.2015 DE 102015102553**

(43) Veröffentlichungstag der Anmeldung:
**03.01.2018 Patentblatt 2018/01**

(73) Patentinhaber: **Technische Hochschule Nuernberg Georg-Simon-Ohm**
**90489 Nuernberg (DE)**

(72) Erfinder:
- **WEHNERT, Gerd**
**91220 Schnaittach (DE)**
- **STECKLEIN, Katharina**
**90489 Nuernberg (DE)**
- **HELBIG, Jens**
**90403 Nuernberg (DE)**
- **SCHLACHTER, Herbert**
**90449 Nuernberg (DE)**

(74) Vertreter: **Huebner, Stefan Rolf et al**
**Postfach 101317**
**80087 München (DE)**

(56) Entgegenhaltungen:
**US-A1- 2009 061 125 US-A1- 2012 298 925**
**US-A1- 2014 001 416**

- **DATABASE WPI Week 200905, Derwent World Patents Index; AN 2009-A95794, XP002756171**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Processed by Luminess, 75001 PARIS (FR)

## Beschreibung

### Gebiet der Erfindung

Die Erfindung betrifft eine Dispersion eines Kohlenstoffnanomaterials in einem Dispergiermedium. Sie betrifft außerdem eine Verwendung einer Elektronenmangelverbindung in einem Dispergiermedium. Schließlich betrifft die Erfindung ein verbessertes Verfahren zum Herstellen eines polymerhaltigen Werkstoffs.

### Hintergrund der Erfindung

Die mechanischen Eigenschaften von Kohlenstoffnanoröhren (CNTs) sind überragend. CNTs haben bei einer Dichte von 1,3 bis 1,4 g/cm$^3$ eine enorme Zugfestigkeit von mehreren Megapascal. Im Vergleich hierzu hat Stahl bei einer Dichte von mindestens 7,8 g/cm$^3$ eine maximale Zugfestigkeit von nur etwa 2 MPa, woraus sich für einzelne CNTs rechnerisch ein mindestens 135-mal besseres Verhältnis von Zugfestigkeit zu Dichte als für Stahl ergibt. Für den Bereich der Elektronik sind vor allem die Strombelastbarkeit und die elektrische wie Wärmeleitfähigkeit interessant. Die Strombelastbarkeit liegt schätzungsweise 1000 mal höher als bei Kupferdrähten, während die Wärmeleitfähigkeit bei Raumtemperatur beinahe doppelt so hoch wie die von Diamant ist. Aufgrund ihrer mechanischen und elektrischen Eigenschaften können Kohlenstoffnanoröhren auch in Kunststoffen als Additive für Polymere Anwendung finden. Dadurch werden beispielsweise die mechanischen Eigenschaften der Kunststoffe stark verbessert. Außerdem ist es möglich, auf diese Weise elektrisch leitende Kunststoffe herzustellen. Die Verbesserung der Eigenschaften erfolgt dabei bereits bei geringen Gewichtsanteilen, womit so ein Composite-Material hervorragen für den Leichtbau geeignet ist.

Ein großes Problem für den effektiven Einsatz von derartigen Nanoteilchen in Polymeren kann deren Dispergierbarkeit sein, da sie sich über van der Waals-Kräfte stark anziehen und herstellbedingt gewöhnlich stark ineinander verknäulen und agglomeriert vorliegen. Um die Vorteile der Eigenschaften von Kohlenstoffnanoröhrchen ausnutzen zu können, sollten diese möglichst als vereinzelte Röhrchen im Komposit vorliegen. Dies ist grundsätzlich schwierig, weil die starken van der Waals-Kräfte zwischen den Kohlenstoffnanoröhrchen dazu überwunden werden müssen. Wenn es möglich ist die CNTs zu separieren, neigen diese dazu, sich wieder zu reagglomerien.

Bekannte Verfahren können den Nachteil aufweisen, dass eine homogene Verteilung der CNTs in dem Polymer nicht zu erreichen ist, da die gleichmäßige Dispergierung der Kohlenstoffnanotubes im aufgeschmolzenen Polymer unzureichend ist. CNTs lassen sich nur sehr schwer in stabile Dispersionen überführen, insbesondere weil die Kohlenstoffnanoröhren (CNTs) über ein sehr großes Aspektverhältnis verfügen und gewöhnlich stark agglomeriert und/oder verknäuelt vorliegen. Daher hat es im Stand der Technik nicht an Versuchen gefehlt, CNTs stabil zu dispergieren. Die aus dem Stand der Technik bekannten Verfahren sind aber nur wenig geeignet, um stabile und konzentrierte Dispersionen von CNTs zu erzeugen: Meist führen die Verfahren des Standes der Technik nicht zu lagerstabilen Dispersionen, und zudem ist in den meisten Fällen die Konzentration an CNTs in den Dispersionen des Standes der Technik nur äußerst gering.

Neben den rein mechanischen Dispergier-Ansätzen gibt es zusätzlich die Möglichkeit, CNTs zu funktionalisieren, um Wechselwirkungen zu verbessern. Dies erfolgt entweder direkt durch chemische, kovalente Funktionalisierung der CNTs oder durch Zugabe von Dispergier-Additiven, welche als Phasenvermittler dienen. Weiterhin gibt es noch einige spezielle Dispergier-Methoden wie die in situ Polymerisation, bei der die CNTs zunächst im Monomer dispergiert werden und anschließend die Polymerisation der Monomer-Bausteine erfolgt oder das Solvent Casting, bei dem das Polymer aufgelöst und mit den CNTs vermischt wird. Nachfolgend sind die möglichen Nachteile der Dispergier-Strategien aufgelistet:

*Rein mechanische Dispergierung*

- Keine vollständige Separation und Homogenisierung;
- Schlechte Langzeitstabilität, da es zur Re-Agglomeration der CNTs kommt;
- Die Struktur der CNTs wird bei harschen Dispergier-Bedingungen beschädigt, womit besonderen Eigenschaften des Materials zum Teil eingebüßt werden.

*Mechanische Dispergierung und kovalente Funktionalisierung*

- Die Struktur der CNTs (sp$^2$-Hybridisierung) wird bei chemischer Funktionalisierung beschädigt, womit besonderen

Eigenschaften (elektrische Leitfähigkeit, mechanische Stabilität) des Materials zum Teil eingebüßt werden.
- Die kovalente Modifikation muss jedem Polymer aufwändig angepasst werden. Die ist großtechnisch schwer umzusetzen und mit hohen Kosten verbunden.

*Mechanische Dispergierung mit Dispergier-Additiven*

- Wechselwirkungen zwischen CNTs und Additiven sind nicht sehr stark ausgeprägt (meist nicht stärker als die Wechselwirkungen unter den CNTs selbst);
- Geringe Wirksamkeit, besonders bei höheren CNT-Konzentrationen;
- Ionische Dispergieradditive (z.B.: Poly(styrolsulfonat) PSS, Cetylpyridiumchlorid (CPC)) können für Dispergierung von CNTs in Wasser eingesetzt werden, sind aber für den Einsatz in Polymeren ungeeignet.

*Weitere Dispergier-Methoden*

- Die in situ Polymerisation ist nur auf spezielle Monomer-Bausteine anzuwenden. Es kann zur Störung der Polymerisationsreaktion kommen;
- Beim Solvent Casting (vgl. z. B. US 2004/0131859A1 und WO 02/076888A1 ) können nur lösliche Polymere verwendet werden;
- In beiden Fällen muss in einem zusätzlichen Verfahrensschritt das Lösungsmittel abgetrennt werden;
- Beide Methoden erleichtern die Dispergierbarkeit durch Herabsetzung der Viskosität. Das Re-Agglomerations-Bestreben wird nicht unterbunden.

Die zuvor beschriebenen Verfahren des Standes der Technik resultieren zumeist in inhomogenen, oftmals nicht langzeitstabilen Dispersionen von Kohlenstoffnanoröhren mit geringen Konzentrationen bzw. Gehalten von CNTs. Weiterhin zeigen die Dispersionen des Standes der Technik - im Vergleich zum reinen Dispersionsmittel bzw. Dispersionsmedium - typischerweise einen hohen bis extremen Anstieg in der Viskosität bei zugleich nur geringen Partikelgehalten von Kohlenstoffnanoröhren von im allgemeinen nur bis zu ca. 1 Gew.-%.

Die nachfolgende Tabelle 1 gibt einen kurzen Überblick über die Dispergier-Verfahren und Herstellungsverfahren von CNT-Polymer-Composites:

Tabelle 1: Dispergier-Verfahren und Herstellungsverfahren von CNT-Polymer-Composites

| Typ | Lösemittelbasiert | Reaktives Präpolymer | Polymer-Schmelze |
|---|---|---|---|
| **Varianten** | • reines Lösungsmittel als Vorstufe<br>• gelöstes Polymer (Solvent Casting)<br>• Dispergierung in Monomer, dann Polymerisation (In-situ Polymerisation) | • Reaktionsharze | • Melt Mixing |
| **Dispergier-verfahren** | • Ultraschall<br>• Kugelmühle<br>• Microfluidizer | • Dreiwalzwerk (auch bei sehr hoher Viskosität einsetzbar)<br>• (Kugelmühle)<br>• (Disperser) | • Extruder<br>• Spritzgussmaschine |
| **Vorteile** | • Viskosität kann eingestellt werden | • Lösemittel wird nicht unbedingt benötigt | • Direkteste und wirtschaftlichste Methode, um ein CNT-Compound herzustellen<br>• Universell anwendbar auf alle Polymere |

(fortgesetzt)

| Typ | Lösemittelbasiert | Reaktives Präpolymer | Polymer-Schmelze |
|---|---|---|---|
| **Nachteile** | • Lösemittel muss entfernt werden<br>• Solvent Casting und In-situ Polymerisation können nur auf geeignete Polymere angewendet werden | • Auf reaktive polymere Vorstufen beschränkt<br>• schwierige Verarbeitung bei hohen Füllstoffgehalten wegen der hohen Viskosität | • Agglomerate werden schlecht aufgebrochen<br>• CNTs müssen vorbehandelt sein |
| **mögliche Additiv Zugabe** | • Zugabe im DispergierSchritt<br>• Bei In-situ-Polymerisation evtl. Störung der Polymerisationsreaktion | • Direkte Zugabe im Dispergier- Schritt oder Zugabe nach Vor-Dispergierung in Lösemittel | • Zugabe nach Vor-Dispergierung in Lösemittel |

Dispergierhilfsmittel, die Pyrene beinhalten, sind an sich bekannt und wurden von Lou et. al., Chem. Mater, 16, 4005-4011,2004, sowie von Bahun et. al., J. Polym. Sci. Part A: Polym. Chem. 44, 1941-1951,2006, zur Dispergierung von Kohlenstoffnanoröhrchen als Zusatz in organischen Lösungsmitteln bereits eingesetzt. Diese Dispergierhilfsmittel waren in den organischen Lösungsmitteln aber wenig effektiv und es wurde lediglich eine geringe Löslichkeit (d. h. fein disperse Lösung) der CNT bis maximal 0.65 mg/mL in THF erreicht.

Eine ähnlich schlechte Dispergierwirkung wurde in EP 1965451 A1 mit Dispergierhilfsmitteln, die aus einem aromatischen Kopf, der die Hauptkette bildet, und einem aliphatischen Schwanz, der die Seitenkette bildet, bestehen, erzielt.

DE102009013418 A1 offenbart ein Verfahren zur Dispergierung von Nanoteilchen, insbesondere Kohlenstoffnanoröhren, in einem mittelviskosen fluiden Medium, bei dem die Nanoteilchen und das fluide Medium zusammen eine Anzahl m Passagen eines oder mehrerer Mehrschneckenextruder mit einer oder mehreren Knetzonen durchlaufen, wobei m eine ganze Zahl und größer oder gleich 1 ist.

In DE 102009012675 A1 wird ein Verfahren zur Dispergierung graphitartiger Nanoteilchen beschrieben, bei dem die graphitartigen Nanoteilchen in einer kontinuierlichen flüssigen Phase unter Energieeintrag in Gegenwart des Dispergierhilfsmittels dispergiert werden. Die Dispergiermittel bestehen aus Block-Copolymeren, von denen mindestens ein Block eine aromatische Gruppe trägt, die über aliphatische Kettenglieder an die Hauptkette des Block-Copolymeren gebunden sind.

DE 102009012674 A1 offenbart mit Kohlenstoffnanoröhren gefüllte, semi-kristalline Polyurethan-(PUR)-Zusammensetzungen, die auf Basis von wasserbasierenden Polyurethan-CNT-Mischungen erhalten werden. Offenbart wird weiter ein Verfahren zur Herstellung der Polyurethanzusammensetzungen, bei denen wasserbasierte Polyurethanlatices mit Kohlenstoffnanoröhren, die in Wasser dispergiert sind, gemischt sind. Die Erfindung betrifft weiterhin Filme, die durch Druckspritzgießverfahren oder Verarbeiten von Gießlösungen hergestellt werden.

DE 102006055106 A1 beschreibt ein Verfahren zum Dispergieren von Kohlenstoffnanoröhren in einer kontinuierlichen Phase, insbesondere in mindestens einem Dispersionsmittel, wobei die Kohlenstoffnanoröhren in einer kontinuierlichen Phase, insbesondere in mindestens einem Dispersionsmittel, in Gegenwart mindestens eines Dispergiermittels unter Einbringung eines für die Dispergierung ausreichenden Energieeintrags dispergiert werden.

DE10301996 A1 offenbart ein Verfahren zur Herstellung von Kohlenstoffnanoröhrenverstärkten Polymeren, mit den Verfahrensschritten Synthetisieren des Polymers mittels Polykondensationsreaktion, und Zumischen von Kohlenstoffnanoröhren.

Aus WO 2013073259 A1 ist eine Polystyrolsulfonsäure (-salz) bekannt, die/das sich als Dispergiermittel zur Herstellung einer wässrigen Dispersion eines Kohlenstoffnanomaterial wie einem Kohlenstoffnanoröhren, Graphen oder Fulleren oder einer wässrigen Dispersion eines leitfähigen Polymers, wie ein Polythiophen, Polypyrrol, Polyanilin , Polyphenylenvinylen oder Polyphenylensulfid, eignet.

WO 2012177975 A1 offenbart ein Verfahren zur Herstellung von Kohlenstoffnanoröhren-Filmen. Dabei reagieren Kohlenstoffnanoröhrchen (CNTs) in der Gegenwart einer starken Säure mit Verbindungen, die polyaromatische Reste aufweisen.

KR 2008 0015532 A beschreibt ein Verfahren zur Herstellung einer Dispersion von Kohlenstoffnanomaterial.

Aus der Schrift US 2009/061125 A1 sind thermisch und elektrisch leitende Struktur mit Kohlenstoffnanoröhren bekannt.

US 2014/001416 A1 offenbart ein Verfahren zur Herstellung von Polymer-Kohlenstoffnanoröhren-Gemischen in Pulverform.

Aus der Schrift US 2012/298925 A1 sind elektrisch leitfähige Füllstoffe zur Herstellung elektrisch leitfähiger Kunststoffe bekannt.

## Aufgabe der Erfindung

Der Erfindung liegt die Aufgabe zugrunde, eine verbesserte Dispersion eines Kohlenstoffnanomaterials in einem Dispersionsmedium bereit zu stellen. Insbesondere soll erreichbar sein, das Dispergierverhalten des Kohlenstoffnanomaterials in der Dispersion den jeweiligen technischen Anforderungen an die Dispersion anzupassen, zum Beispiel zu verschlechtern oder zu verbessern. Weiter liegt der Erfindung die Aufgabe zugrunde, eine neue Verwendung einer Elektronenmangelverbindung in einem Dispergiermedium bereit zu stellen. Insbesondere soll mit der Erfindung erreicht werden, durch die Verwendung der Elektronenmangelverbindung in dem Dispergiermedium Dispersionen mit neuen, vorteilhaften Eigenschaften, zum Beispiel vorteilhaften mechanischen, elektrischen, chemischen oder thermischen Eigenschaften, zu schaffen. Schließlich liegt der Erfindung die Aufgabe zugrunde, ein verbessertes Verfahren zum Herstellen eines polymerhaltigen Werkstoffs bereitzustellen.

## Erfindungsgemäße Lösung

In einem Aspekt der Erfindung wird die Aufgabe durch eine Dispersion mit den Merkmalen des Anspruchs 1 gelöst. In einem weiteren Aspekt wird die Aufgabe durch eine Dispersion mit den Merkmalen des Anspruchs 3 gelöst. Mit der Erfindung lässt sich vorteilhaft ausnutzen, dass Elektronenmangelverbindungen mit Kohlenstoffnanomaterialien wechselwirken können. Es ist mit der Erfindung erreichbar, dass die Elektronenmangelverbindung durch Wechselwirkung mit den Kohlenstoffnanomaterialien die Kompatibilität der Kohlenstoffnanomaterialien mit dem Dispergiermedium verändert, zum Beispiel verbessert oder verschlechtert. Insbesondere ist erreichbar, dass mit der Erfindung das Diepergierverhalten der Kohlenstoffmaterialien in dem Dispergiermedium beeinflusst, zum Beispiel verbessert oder verschlechtert werden.

Im Sinne der vorliegenden Erfindung ist "Kohlenstoffnanomaterial" ein Oberbegriff, der die Kohlenstoffnanomaterialtypen Kohlenstoffnanoröhren, Kohlenstoffnanofasern, Kohlenstoffnanorollen, Graphen und Fulleren und deren Derivate umfasst. Ein Kohlenstoffnanomaterial kann aus einem oder aus einer Mischung der vorgenannten Kohlenstoffnanomaterialtypen bestehen.

"Kohlenstoffnanoröhren" (auch als Carbon Nanotubes oder CNTs bezeichnet) sind röhrenförmige Gebilde aus einem Netzwerk von $sp^2$-hybridisierten Kohlenstoffatomen. Die Kohlenstoffatome nehmen eine wabenartige Struktur mit Sechsecken und jeweils drei Bindungspartnern ein (vorgegeben durch die $sp^2$-Hybridisierung). Es wird grundsätzlich zwischen einwandigen (single-walled carbon nanotubes, SWCNTs) und mehrwandigen Kohlenstoffnanoröhren (multi-walled carbon nanotubes, MWCNTs) unterschieden. Während die SWCNTs aus einer einzigen, zu einer Röhre zusammengefügten Graphitschicht bestehen, weisen die MWCNTs mindestens zwei dieser Schichten auf, die konzentrisch ineinander angeordnet sind. Weiterhin wird zwischen Armchair-, Zickzack- und chiralen Nanoröhren unterschieden, wobei für diese Unterscheidung der Winkel, in dem die Graphitlagen zu einer Röhrenform zusammengefügt sind, ausschlaggebend ist. Weiterhin unterscheidet man zwischen offenen und geschlossenen Kohlenstoffnanoröhren, wobei letztere an einem oder beiden Enden mit einem Deckel nach Art einer Fullerenstruktur geschlossen sind. Kohlenstoffnanoröhren können leer oder gefüllt sein.

"Kohlenstoffnanofasern" sind zylindrische Nanostrukturen ähnlich der CNTs. Die einzelnen Graphen-Schichten sind dabei quer zur Faserlänge übereinander gestapelt. Die Graphen-Schichten können dabei plan, gewinkelt, gebogen oder in Form von Kegeln vorliegen.

"Kohlenstoffnanorollen" im Sinne der vorliegenden Erfindung unterscheiden sich von mehrwandigen Kohlenstoffnanoröhren dadurch, dass die Röhrenwände nicht geschlossen, sondern nach Art einer Spirale auf sich selbst aufgerollt sind und dabei ein oder mehrere sich in Längsrichtung der Nanorolle erstreckende Ränder der die wandbildenden Kohlenstoffschicht oder Kohlenstoffschichten aufweisen. Dabei kann eine einzelne Wand oder mehrere übereinanderliegende Wände auf sich selbst aufgerollt sein. Kohlenstoffnanorollen können wie Kohlenstoffnanoröhren leer oder gefüllt sein.

"Graphen" im Sinne der vorliegenden Erfindung bezeichnet eine Modifikation des Kohlenstoffs, die wie die Wände der Kohlenstoffnanoröhren und Kohlenstoffnanorollen aus einem Netzwerk von $sp^2$-hybridisierten Kohlenstoffatomen besteht, wobei die Kohlenstoffatome eine wabenartige Struktur mit Sechsecken und jeweils drei Bindungspartnern einnehmen (vorgegeben durch die $sp^2$-Hybridisierung). Anders als bei den Kohlenstoffnanoröhren sind sie jedoch nicht zu einer Röhre zusammengefügt und anders als Nanorollen nicht auf sich selbst aufgerollt. Man unterscheidet zwischen einlagigem und mehrlagigem Graphen, wobei ein einlagiges Graphen aus einem einzigen einlagigen Netzwerk dieser $sp^2$-hybridisierten Kohlenstoffatome besteht, während bei einem mehrlagigen Graphen mehrere und zwar bis zu zehn dieser Schichten nach einer Art einer Graphitstruktur übereinander geschichtet sind.

"Fulleren" im Sinne der vorliegenden Erfindung sind sphärische Moleküle aus Kohlenstoffatomen. Die Kohlenstoffatome sind teilweise zu Fünfecken und teilweise zu Sechsecken zusammengefügt, wobei die Unmöglichkeit, eine Ebene mit regelmäßigen Fünfecken oder mit einer Kombination aus regelmäßigen Fünfecken und Sechsecken vollständig zu bedecken, die sphärische Wölbung ergibt. Das kleinste Fulleren ist ein Dodekaeder, $C_{20}$, und besteht nur aus

pentagonalen Kohlenstoffringen. Ein anderes Fulleren, $C_{60}$, ist aus Fünf- und Sechsecken nach Art eines Fußballs zusammengefügt. Wie Kohlenstoffnanoröhren können auch Fullerene ein- und mehrschalig sowie gefüllt und ungefüllt vorkommen.

"Elektronenmangelverbindungen" im Sinne der vorliegenden Erfindung sind chemische Verbindungen, die Elektronenmangelbindungen aufweisen. Elektronenmangelverbindungen wiederum sind chemische Verbindungen, bei denen bestimmte Atome durch benachbarte elektronenziehende Gruppen über induktive oder mesomere Effekte positiv polarisiert sind. Dazu weisen die Elektronenmangelverbindungen typischerweise elektronenziehende Gruppen, wie beispielsweise -COOR, -COOH, -CHO, -C=(O)R, -CN, -CH=CHCOOH, $-NO_2$, =O oder -NO, auf.

Eine "Dispersion" im Sinne der vorliegenden Erfindung ist eine heterogene Mischung aus dem Kohlenstoffnanomaterial und einem Dispergiermedium, in dem das Kohlenstoffnanomaterial dispergiert ist. Die erfindungsgemäße Dispersion schließt Ausführungsformen ein, bei denen das Dispergiermedium neben der Elektronenmangelverbindung noch weitere Komponenten umfasst. Das Dispergiermedium kann flüssig oder auch fest sein.

In einem weiteren Aspekt der Erfindung wird die Aufgabe durch die Verwendung mit den Merkmalen des Anspruchs 7 gelöst. "Modifizieren" bedeutet, dass das Dispergierverhalten des Kohlenstoffnanomaterials von dem Vorhandensein oder von der Art der Elektronenmangelverbindung abhängig ist. Die erfindungsgemäße Verwendung schließt Ausführungsformen ein, bei denen das Dispergiermedium neben der Elektronenmangelverbindung noch weitere Komponenten umfasst.

In einem weiteren Aspekt der Erfindung wird die Aufgabe durch ein Verfahren mit den Merkmalen des Anspruchs 8 gelöst.

Mit der Erfindung lässt sich ausnutzen, dass Elektronenmangelverbindungen bereitgestellt werden können, die besser mit dem Kohlenstoffnanomaterial wechselwirken, als die Teilchen des Kohlenstoffnanomaterials untereinander. Hierin kann sich die Erfindung insbesondere vorteilhaft von aus dem Stand der Technik bekannten Additivsystemen unterscheiden, bei denen die Wechselwirkung zwischen dem Additiv und den Teilchen des Kohlenstoffnanomaterials sowie die Wechselwirkung zwischen den Teilchen des Kohlenstoffnanomaterials nahezu identisch sind. Es ist ein mit der Erfindung erreichbarer Vorteil, Kohlenstoffnanomaterialien, z. B. Kohlenstoffnanoröhrchen, dauerhaft in eine Polxmermatrix einzubetten. Mit der Erfindung ist erreichbar, eine Polymermatrix mechanisch zu verstärken.

## Bevorzugte Ausgestaltungen der Erfindung

Vorteilhafte Aus- und Weiterbildung, welche einzeln oder in Kombination miteinander eingesetzt werden können, sind Gegenstand der abhängigen Ansprüche.

In einer bevorzugten Ausführung der Erfindung ist die Elektronenmangelverbindung die einzige Elektronenmangelverbindung in dem Dispergiermedium. In einer alternativen Ausführung der Erfindung umfasst das Dispergiermedium neben der Elektronenmangelverbindung eine oder mehrere weitere Elektronenmangelverbindungen.

Gemäß des weiteren Aspekts der Erfindung ist die Elektronenmangelverbindung ein Elektronenmangelaromat. Ein "Elektronenmangelaromat" im Sinne der vorliegenden Erfindung ist eine Elektronenmangelverbindung, die mindestens ein Ringsystem, das nach der Hückel-Regel in konjugierten Doppelbindungen, freien Elektronenpaaren oder unbesetzten p-Orbitalen eine Anzahl von 4n + 2 delokalisierten Elektronen enthält, wobei n >= 0 ist, aufweist. Der Elektronenmangelaromat ist ein Aromat, der mit einer oder mehreren elektronenziehenden Seitengruppen konjugiert ist, z.B. -COOR, -COOH, -CHO, -C=(O)R, -CN, -CH=CHCOOH, $-NO_2$, =O oder -NO. Bei dieser Ausführung der Erfindung lässt sich ausnutzen, dass die Elektronenmangelaromaten besonders starke $\pi$-Wechselwirkungen zu dem Kohlenstoffnanomaterial aufweisen können. Ein aromatisches System, wie es auch das Kohlenstoffnanomaterial aufweist, bildet mit Elektronenmangelaromaten $\pi$-Komplexe. Bei $\pi$-Komplexen ist die Anziehungskraft der beteiligten Moleküle deutlich größer als bei einer $\pi$-Wechselwirkung ohne Elektronenmangelaromat. Dieses Phänomen wurde erstmals von Fritzsche am Beispiel der kristallinen Pikrate beschrieben (J. Fritzsche, "Ueber Verbindungen von Kohlenwasserstoffen mit Pikrinsäure," Journal für praktische Chemie, pp. 282-292, 1858). Geeignete

Elektronenmangelaromaten sind zum Beispiel Pikrate. Es ist ein erreichbarer Vorteil dieser Ausführung der Erfindung, dass durch die besonders starke Kopplung der Elektronenmangelverbindung an das Kohlenstoffnanomaterial letzteres dauerhaft stabil funktionalisiert werden kann. Insbesondere kann dadurch vorteilhafterweise das Dispergier-Verhalten des Kohlenstoffnanomaterials den jeweiligen Erfordernissen angepasst, zum Beispiel verbessert oder verschlechtert werden.

Gemäß der Erfindung umfasst das Dispergiermedium ein Polymer. Ein "Polymer" im Sinne der vorliegenden Erfindung ist ein Makromolekül, das aus einer oder mehreren Struktureinheiten, den sogenannten Repetitionseinheiten aufgebaut ist. Da Polymere die Hauptkomponenten von Kunststoffen sind, können durch diese Ausführung der Erfindung Dispersionen von Kohlenstoffnanomaterialien in Kunststoffen bereitgestellt werden. Es ist ein erreichbarer Vorteil der Erfindung, dass durch ein derartiges Einarbeiten von Kohlenstoffnanomaterialien in Kunststoffe Kunststoffe mit neuen, vorteilhaften Eigenschaften, zum Beispiel vorteilhaften mechanischen, elektrischen, chemischen oder thermischen Eigenschaften bereitgestellt werden können. Ein geeignetes Polymer ist ein Thermoplast, zum Beispiel ein Polystyrol

(PS), Polyethylen (PE), Polypropylen (PP), Polyvinylchlorid (PVC), Polyamid (PA) u.a. Ein weiteres geeignetes Polymer ist ein Duromer oder ein Elastomer, z.B. ein Butadien-Kautschuk, oder ein thermoplastisches Elastomer. In einer bevorzugten Ausführung der Erfindung enthält die Dispersion eine Mischung aus mehreren Polymeren, zum Beispiel mehrere aus der Gruppe der vorgenannten Polymere, zum Beispiel zwei, drei oder vier Polymere.

Das erfindungsgemäße Polymer ist von der Elerktronenmangelverbindung verschieden, auch wenn die Elektronenmangelverbindung, wie weiter unten beschrieben, selbst ein Polymer ist. Im Sinne der vorliegenden Erfindung sind Polymere "verschieden", wenn sie aus verschiedenen Repititionseinheiten aufgebaut sind, z. B. ist Polystyrol verschieden von Polyethylen. Wenn das Dispergiermedium neben der Elektronenmangelverbindung noch eine oder mehrere weitere Elektronenmangelverbindungen aufweist, ist das bevorzugte Polymer besonders vorzugsweise auch von dem oder allen weiteren Elektronenmangelverbindungen verschieden. Die Elektronenmangelverbindung kann vorteilhafterweise vermittelnd zwischen dem Kohlenstoffnanomaterial und dem Polymer wirken. Es ist auch erreichbar, dass die weitere(n) Elektromangelverbindung(en) vermittelnd zwischen dem Kohlenstoffnanomaterial und dem Polymer wirken.

Das Dispergiermedium kann ein Lösungsmittel enthalten, in dem das Polymer, oder bei einem Dispergiermedium mit mehreren Polymeren mehrere oder alle Polymere des Dispergiermediums, gelöst ist oder sind. Ein bevorzugtes Lösungsmittel ist ein organisches Lösungsmittel, zum Beispiel Petrolether, Toluol, Chloroform, Dichlormethan, Dichlorethylen, Tetrachlorethylen, Diethylether, Essigsäureethylester, Aceton, Ethanol. Die Erfindung umfasst aber auch Ausführungsformen mit anorganischen Lösungsmitteln, zum Beispiel Wasser.

Das Dispergiermedium ist zum Zeitpunkt des Dispergierens des Kohlenstoffnanomaterials in dem Dispergiermedium vorzugsweise flüssig. Besonders vorzugsweise erstarrt es zu einem Zeitpunkt nach dem Dispergieren des Kohlenstoffnanomaterials, zum Beispiel durch Entfernen des Lösungsmittels, durch Abkühlen oder durch eine chemische Reaktion im Dispergiermedium.

Gemäß des ersten Aspekts der Erfindung ist die Elektronenmangelverbindung ein Elektronenmangelpolymer. Ein "Elektronenmangelpolymer" im Sinne der vorliegenden Erfindung ist ein Polymer, bei dem wenigsten ein Teil der Repetitionseinheiten Elektronenmangelrepetitionseinheiten sind. "Elektronenmangelrepetitionseinheiten" im Sinne der vorliegenden Erfindung sind Repetitionseinheiten, die als Monomer Elektronenmangelverbindungen im Sinne der eingangs genannten Definition wären. Vorzugsweise sind mehr als zwei, besonders vorzugsweise mehr als ein Zehntel, besonders vorzugsweise mehr als ein Viertel, besonders vorzugsweise mehr als die Hälfte der Repetitionseinheiten Elektronenmangelrepetitionseinheiten. Bei dieser Ausführung der Erfindung kann ausgenutzt werden, dass durch eine Vielzahl von Elektronenmangelrepetitionseinheiten die Wechselwirkung zwischen dem Kohlenstoffnanomaterial und dem Elektronenmangelpolymer vervielfacht werden kann. Es ist ein erreichbarer Vorteil dieser Ausführung der Erfindung, dass durch eine Mehrzahl von Elektronenmangelverbindungen in dem Elektronenmangelpolymer eine besonders stabile Funktionalisierung des Kohlenstoffnanomaterials möglich ist. Dadurch kann vorteilhafterweise die Wechselwirkung zwischen dem Kohlenstoffnanomaterial und dem Dispergiermedium verbessert werden. Insbesondere ist es erreichbar, dass die Dispergierbarkeit des Kohlenstoffnanomaterials in dem Dispergiermedium verändert, zum Beispiel verbessert oder verschlechtert wird.

Eine bevorzugte Elektronenmangelrepetitionseinheit in dem Elektronenmangelpolymer ist ein Elektronenmangelaromat. Ist das Elektronenmangelpolymer ein Homopolymer, kann es zum Beispiel ein Polynitrostyrol, ein Polydinitrostyrol oder ein Polytrinitrostyrol sein.

Ein bevorzugtes Elektronenmangelpolymer ist ein Copolymer. Ein "Copolymer" im Sinne der vorliegenden Erfindung ist ein Polymer, dass aus zwei oder mehr verschiedenartigen Repetitionseinheiten zusammengesetzt ist. Wenigstens ein Teil der Repetitionseinheiten des Polymers sind Elektronenmangelrepetitionseinheiten. Das Copolymer kann zum Beispiel ein statistisches Copolymer oder ein alternierendes Copolymer sein. Die bevorzugte Elektronenmangelrepetitionseinheit des Copolymers ist ein Elektronenmangelaromat, zum Beispiel Dinitrostyrol oder Trinitrostyrol. Die Erfindung umfasst auch Ausführungsformen, in denen das Copolymer mehrere unterschiedliche Elektronenmangelrepetitionseinheiten, zum Beispiel aus der vorgenannten Gruppe von Elektronenmangelrepetitionseinheiten als Repetitionseinheiten aufweist.

Gemäß des ersten Aspekts der Erfindung ist das Elektronenmangelpolymer ist ein Block-Copolymer. Das Block-Copolymer umfasst mindestens zwei Blöcke unterschiedlicher Repetitionseinheiten. Die Repetitionseinheiten wenigstens eines der Blöcke sind Elektronenmangelrepetitionseinheiten. In einer Ausführung der Erfindung ist das Elektronenmangelpolymer ein Pfropf-Copolymer. In diesem Fall ist die Repetitionseinheit wenigstens des Rückgrats oder wenigstens eines Teils der Pfropfen eine Elektronenmangelrepetitionseinheit. Es ist ein erreichbarer Vorteil des Copolymers, dass es sowohl mit dem Kohlenstoffnanomaterial, vorzugsweise via $\pi$-Wechselwirkung, als auch mit einem anderen Polymer Bindungen, vorzugsweise Nebenvalenzbindungen, eingehen kann.

Die Dispersion weist gemäß des weiteren Aspekts der Erfindung neben dem Elektronenmangelpolymer ein weiteres Polymer auf, das heißt, das weitere Polymer ist von dem Elektronenmangelpolymer verschieden. Das weitere Polymer ist zum Beispiel eines aus Gruppe der Thermoplaste, zum Beispiel ein PS, PE, PP, PVC, PA, aus der Gruppe der Duroplaste, zum Beispiel ein Phenol- oder Epoxidharz, oder aus der Gruppe der Elastomere, zum Beispiel ein

Butadien-Kautschuk oder ein thermoplastisches Elastomer. Bei dieser Ausführung der Erfindung kann das Elektronenmangelpolymer vermittelnd zwischen dem Kohlenstoffnanomaterial und dem anderen oder den anderen Polymeren wirken. Insbesondere kann das Dispergierverhalten des Kohlenstoffnanomaterials in dem anderen Polymer verändert, zum Beispiel verbessert oder verschlechtert werden. Dazu weist das Elektronenmangelpolymer besonders vorzugsweise Repetitionseinheiten oder, im Falle eines Block- oder Pfropf-Copolymers Blöcke oder Pfropfe auf, die stärkere Nebenvalenzkräfte mit dem anderen Polymer ausbilden als das Kohlenstoffnanomaterial.

In einer bevorzugen Ausführung der Erfindung enthält das Kohlenstoffnanomaterial Kohlenstoffnanoröhren. Besonders vorzugsweise besteht es aus Kohlenstoffnanoröhren.

Kohlenstoffnanoröhren können besonders günstige Eigenschaften hinsichtlich der mechanischen Belastbarkeit und der elektronischen und thermischen Leitfähigkeit aufweisen. Sie können darüber hinaus Kunststoffe mit ähnlichen Eigenschaften ausstatten, wenn sie diesen als Füllstoff zugegeben werden. Allerdings neigen Kohlenstoffnanoröhren wegen starker van-der-Waals-Kräfte zwischen den Kohlenstoffnanoröhren und inkompatiblen Wechselwirkungen zwischen den Kohlenstoffnanoröhren und der Kunststoffmatrix zu einer ausgeprägten Bildung von Agglomeraten. Dies kann sich auf den praktischen Einsatz der Kohlenstoffnanoröhren als Füllstoff als ungünstig auswirken, zum Beispiel weil die Agglomerate vom Kunststoff nur unvollständig benetzt werden. Tatsächlich können sich die mechanischen Eigenschaften des Polymers aus diesem Grund durch Zugabe von Kohlenstoffnanoröhren sogar verschlechtern. Die erfindungsgemäße Elektronenmangelverbindung kann der Bildung von Agglomeraten entgegenwirken.

Die bevorzugten Nanoröhren haben Durchmesser im Bereich von 1 bis 50 Nanometern.

In einer bevorzugten Ausführung der Erfindung wird das Kohlenstoffnanomaterial, vorzusgweise Kohlenstoffnanoröhren, vor oder beim Dispergieren des Kohlenstoffnanomaterials in dem erfindungsgemäßen Dispergiermedium zusätzlich mittels eines mechanischen Verfahrens dispergiert; geeignete mechanische Verfahren sind dem Fachmann aus dem Stand der Technik bekannt. Bei mechanischem Dispergieren in Gegenwart der Elektronenmangelverbindung kann die Dispergierung bei geringerem Krafteintrag realisiert und die Stabilität der Dispersion deutlich verbessert werden. Dabei kann vorteilhafterweise auch dem möglichen Problem entgegengewirkt werden, dass separierte Teilchen von Kohlenstoffnanomaterialien, insbesondere Kohlenstoffnanoröhren, einen starken Anstieg der Viskosität bei bereits geringen Gewichtsanteilen des Kohlenstoffnanomaterials bewirken können, was die Dispergierung zusätzlich erschweren kann.

In einer Ausführung der Erfindung findet das mechanische Dispergieren vor dem Dispergieren im erfindungsgemäßen Dispergiermedium statt, besonders vorzugsweise in einem Lösungsmittel, z. B. in einem der weiter oben genannten Lösungsmittel. Das Lösungsmittel kann vorteilhafterweise für die Beweglichkeit der Komponenten, die bei den meisten Dispergierverfahren zu einem gewissen Grad vorausgesetzt wird, sorgen. Mit dem mechanischen Dispergierverfahren können vorteilhafterweise Agglomerate des Kohlenstoffnanomaterials aufgebrochen werden, was z. B. bei Kohlenstoffnanoröhren oder Graphen vorteilhaft sein kann, die gewöhnlich herstellungsbedingt zunächst stark agglomeriert vorliegen.

In einer bevorzugten Dispersion sind die Teilchen des Kohlenstoffnanomaterials homogen verteilt. Hierduch lässt sich - zum Beispiel bei einem Kuststoff als Diskergiermedium - eine besonders hohe mechanische Verstärkung erreichen.

In einer anderen bevorzugten Dispersion ist das Kohlenstoffnanomaterial inhomogen in den Dispersionsmedium verteilt. Eine inhomogene Verteilung des Kohlenstoffnanomaterials kann sich positiv auf die elektrische Leitfähigkeit auswirken. Vorzugsweise sind die Teilchen des Kohlenstoffnanomaterials, besonders vorzugsweise Kohlenstoffnanoröhren, in direktem Kontakt untereinander. In einer bevorzugten Ausführung der Erfindung kommen zwei verschiedene erfindungsgemäße Elektronenmangelverbindungen zum Einsatz. Besonders vorzugsweise separiert die eine Elektronenmangelverbindung die Teilchen des Kohlenstoffnanomatierials, z .B. die Kohlenstoffnanoröhren, und mit der anderen Elektronenmangelverbindung werden die Teilchen des Kohlestoffnanomaterials, z.B. die Kohlebnstoffnanoröhren punktuell miteinander verbunden. Bei einem bevorzugten erfindungsgemäßen Verfahren ist in der Dispersion ein Polymer enthalten und dieses Polymer gleicht dem Polymer, mit dem die Dispersion vermischt wird. "Gleich" bedeutet im Sinne der Erfindung "nicht verschieden". Bei einem bevorzugten erfindungsgemäßen Verfahren ist das Polymer, mit dem die Dispersion vermischt wird, verschieden von Elektronenmangelverbindung der Dispersion.

## Kurzbeschreibung der Zeichnungen

Die Erfindung wird im Folgenden anhand schematischer Zeichnungen in weiteren Einzelheiten näher erläutert. Es zeigen

Figur 1: Verfärbung von Lösungen von Naphthalin (0,8 mol/L) und Pyren (1,3 mol/L) in Chloroform unter Lichteinwirkung nach ① 0 Minuten ② 2 Minuten ③ 3 Minuten (4) 4 Minuten ⑤ 9 Minuten ⑥ 47 Minuten; Reihenfolge der Lösungen von links nach rechts: Naphthalin-Lösung an Luft, Naphthalin-Lösung unter Argon-Atmosphäre, Pyren-Lösung an Luft und Pyren-Lösung unter Argon-Atmosphäre angesetzt;

Figur 2: Einen Versuchsaufbau zur Mononitrierung von Polystyrol;
Figur 3: Einen Aufbau zum Umstürzen der Lösung;
Figur 4: Einen Aufbau zur Filtration des Niederschlags;
Figur 5: Eine Polystyrol-Probe nach Einfachnitrierung und vor Lösen in DMF a) gelbe Flocken b) gelbes klumpiges Präzipitat durch zu schnelles Stürzen in 2-Propanol;
Figur 6: Getrocknetes Reaktionsprodukt nach der Einfachnitrierung des Polystyrols;
Figur 7: Während der Nitrierung entstandenes braunes klumpiges Präzipitat;
Figur 8: Getrocknetes Reaktionsprodukt nach der Zweifachnitrierung des Polystyrols in Chloroform;
Figur 9: Während der Nitrierung in 1,2-Dichlorethan entstandenes braun-grünes klumpiges Präzipitat;
Figur 10: Getrocknetes Reaktionsprodukt nach der Dinitrierung in 1,2-Dichlorethan;
Figur 11: Einen Versuchsaufbau zur Trinitrierung von Polystyrol;
Figur 12: Einen Aufbau zum Ausfällen der Lösung;
Figur 13: Getrocknetes Reaktionsprodukt nach der Dreifachnitrierung;
Figur 14: Einen Aufbau zur photographischen Dokumentation des Absetzverhaltens;
Figur 15: Eine Detailaufnahme des Aufbaus zur photographischen Dokumentation des Absetzverhaltens;
Figur 16: Einen Aufbau zur Sonotrierung;
Figur 17: Farbreaktion der Akzeptor-Lösungen bei Zugabe von Naphthalin;
Figur 18: Kristallbildung nach Bildung eines Komplexes von Naphthalin mit a) DDQ und b) TCNE;
Figur 19: Extinktionsspektrum von Naphthalin, DDQ und vom Komplex DDQ-Naphthalin im Wellenlängenbereich von 500-800 nm;
Figur 20: Extinktionsspektrum von Pyren, DDQ und vom Komplex DDQ-Pyren im Wellenlängenbereich von 450-900 nm;
Figur 21: Extinktionsspektrum von Coronen, DDQ und vom Komplex DDQ-Coronen im Wellenlängenbereich von 700-900 nm;
Figur 22: Extinktionsspektrum von Naphthalin, TCNE und vom Komplex TCNE-Naphthalin im Wellenlängenbereich von 350-600 nm;
Figur 23: Extinktionsspektrum von Pyren, TCNE und vom Komplex TCNE-Pyren im Wellenlängenbereich von 400-800 nm;
Figur 24: Extinktionsspektrum von Coronen, TCNE und vom Komplex TCNE-Coronen im Wellenlängenbereich von 500-900 nm;
Figur 25: Job-Plot vom Komplex DDQ-Naphthalin bei 621 nm;
Figur 26: Job-Plot vom Komplex DDQ-Pyren bei 846 nm;
Figur 27: Job-Plot vom Komplex DDQ-Coronen bei 833 nm;
Figur 28: Job-Plot vom Komplex TCNE-Naphthalin bei 430 nm;
Figur 29: Job-Plot vom Komplex TCNE-Pyren bei 494 nm;
Figur 30: Job-Plot vom Komplex TCNE-Coronen bei 725 nm;
Figur 31: Extinktionsspektrum vom Komplex DDQ-Naphthalin bei Variation der Naphthalin-Konzentration und konstanter DDQ-Konzentration von 0,4 mmol/L;
Figur 32: Extinktionsspektrum vom Komplex DDQ-Pyren bei Variation der Pyren-Konzentration und konstanter DDQ-Konzentration von 0,4 mmol/L;
Figur 33: Extinktionsspektrum vom Komplex DDQ-Coronen bei Variation der DDQ-Konzentration und konstanter Coronen-Konzentration von 0,7 mmol/L;
Figur 34: Extinktionsspektrum vom Komplex TCNE-Naphthalin bei Variation der Naphthalin-Konzentration und konstanter TCNE-Konzentration von 2,5 mmol/L;
Figur 35: Extinktionsspektrum vom Komplex TCNE-Pyren bei Variation der Pyren-Konzentration und konstanter TCNE-Konzentration von 0,6 mmol/L;
Figur 36: Extinktionsspektrum vom Komplex TCNE-Coronen bei Variation der TCNE-Konzentration und konstanter Coronen-Konzentration von 0,4 mmol/L;
Figur 37: Bildungskonstanten und Extinktionskoeffizienten verschiedener Charge-Transfer-Komplexe;
Figur 38: FT-IR-Spektrum von Polystyrol (rot) und mononitriertem Polystyrol (blau);
Figur 39: FT-IR-Spektrum von Polystyrol (rot) und in Chloroform dinitriertem Polystyrol (lila);
Figur 40: FT-IR-Spektrum von Polystyrol (rot) und in 1,2-Dichlorethan dinitriertem Polystyrol (grün);
Figur 41: FT-IR-Spektrum von in Chloroform dinitriertem Polystyrol (rot) und trinitriertem Polystyrol (blau);
Figur 42: GPC-Messung des zur Mononitrierung eingesetzten Polystyrols;
Figur 43: GPC-Messung des mononitrierten Polystyrols;
Figur 44: GPC-Messung des zur Dinitrierung in 1,2-Dichlorethan eingesetzten Polystyrols;
Figur 45: GPC-Messung des in 1,2-Dichlorethan dinitrierten Polystyrols;
Figur 46: GPC-Messung des zur Dinitrierung in Chloroform eingesetzten Polystyrols;

Figur 47: GPC-Messung des in Chloroform dinitrierten Polystyrols;
Figur 48: GPC-Messung des trinitrierten Polystyrols;
Figur 49: Thermogravimetrische Messung der Polystyrolprobe (schwarz) und des Reaktionsproduktes der Mononitrierung (grün);
Figur 50: Thermogravimetrische Messung der Polystyrolprobe (schwarz) und des Reaktionsproduktes der Dinitrierung in Chloroform (blau);
Figur 51: Thermogravimetrische Messung der Polystyrolprobe (schwarz) und des Reaktionsproduktes der Dinitrierung in 1,2-Dichlorethan (blau);
Figur 52: Thermogravimetrische Messung des Reaktionsproduktes der Dinitrierung in Chloroform (schwarz) und des Reaktionsproduktes der Trinitrierung (grün)
Figur 53: Proben 1, 2 und 3 direkt nach dem Sonotrieren;
Figur 54: Proben 1, 2 und 3 nach drei Tagen Lagerung;
Figur 55: Proben 4, 5, 6, 7 und 8 direkt nach dem Sonotrieren;
Figur 56: Proben 4, 5, 6, 7 und 8 direkt nach dem Zentrifugieren;
Figur 57: Vergleich der Proben anhand der Massen der abgesetzten CNTs;
Figur 58: Vergleich der Massen an CNTs, die durch ein Additiv zusätzlich in DMF dispergiert wurden;
Figur 59: Eingesetzte Elektronen-Donoren;
Figur 60: REM-Aufnahme von den MWCNTs Nanocyl™ NC7000 bei 500-facher Vergrößerung;
Figur 61: REM-Aufnahme von den MWCNTs Nanocyl™ NC7000 bei 1000-facher Vergrößerung;
Figur 62: Eingesetzte Elektronen-Akzeptoren;
Figur 63: Strukturformeln von Polystyrol, Poly-(4-mononitro-styrol), Poly-(2,4-dinitro-styrol) und Poly-(2,4,6-trinitro-styrol)
Figur 64: Diagramme zur Berechnung der Bildungskonstanten und Extinktionskoeffizienten von verschiedenen Charge-Transfer-Komplexen;
Figur 65: Geometrie des Rotors JA-14 von Beckman Coulter; und
Figur 66: Ein erfindungsgemäßes Elektronenmangel-Blockcopolymer.
Figur 67: Synthese eines Poly-(styrol-co-isoprens)
Figur 68: Hydrierung des Poly-(styrol-co-isoprens)
Figur 69: Nitrierung des Poly-(styrol-co-2-methylbutylen)-blockcopolymers

## Ausführliche Beschreibung anhand von Ausführungsbeispielen

*1 Versuche und Synthesen*

Im Folgenden wird die Erfindung anhand von Versuchen und Synthesen beispielhaft näher erläutert. Die Zahlen in eckigen Klammern verweisen auf Literaturstellen. Durch den Verweis sind ist der im Kontext des Verweises angesprochene Inhalt des Literaturstelle, auf die verwiesen wird, Teil der vorliegenden Offenbarung.

*1. 1 Erste Komplexbildung mit Elektronenmangelverbindungen*

Um aus den hier untersuchten niedermolekularen Elektronenmangelverbindungen die elektronenärmsten herauszufinden, wurden zunächst Versuche mit dem Elektronen-Donor Naphthalin durchgeführt. Bei diesen Versuchen wurde die Farbänderung, die bei der Bildung von Charge-Transfer-Komplexen auftritt, beobachtet. Dabei wurden Lösungen von 0,1 mol/L der Elektronenakzeptoren und -donoren hergestellt. Als Lösungsmittel wurde Chloroform verwendet. Anschließend wurden je 10 mL der Akzeptor-Lösung mit je 10 mL der Naphthalin-Lösung in einem 100 mL-Becherglas vermischt. Diese Proben wurden dann mittels eines Magnetrührers und eines Rührfisches für 15 Minuten mit 400 rpm (Umdrehungen pro Minute) gerührt. Die Farbänderungen sind im Abschnitt 2.1 dargestellt.

Diese Lösungen wurden dann im Abzug (100 mL-Becherglas) offen stehen gelassen, wodurch das Lösungsmittel verdampfen und sich Kristalle bilden konnten. Bei ersten Vorversuchen in einer Petrischale (Ø 90 mm) erfolgte das Abdampfen des Lösungsmittels zu schnell und es konnten sich keine Kristalle bilden.

*1.2 UV/Vis-Messungen*

Mittels der UV/Vis-Messungen wurden die Stöchiometrien und die Bildungskonstanten der Charge-Transfer-Komplexe zwischen den Donoren Naphthalin, Pyren und Coronen und den Elektronenmangelverbindungen DDQ (2,3-Dichlor-5,6-dicyano-1,4-benzochinon) und TCNE (Tetracyanoethylen) bestimmt. Hierfür wurden zwei verschiedenartige Messreihen durchgeführt.

Für die Bestimmung der Stöchiometrie wurden Donor- und Akzeptor-Lösungen gleicher Konzentration in je

einem 100 mL-Rundkolben in Chloroform (als Lösungsmittel) hergestellt. Dabei wurden die Lösungen von DDQ, TCNE und Coronen auf 50° C erwärmt und zusätzlich mittels eines Magnetrührers und eines Rührfisches bei 400 rpm (Umdrehungen pro Minute) gerührt. Außerdem wurde ein Rückflusskühler mit Trockenrohr an dem Rundkolben angebracht. Durch das Erwärmen der Lösungen konnten höhere Konzentrationen erzielt werden.

Anschließend wurden unterschiedliche Mengen dieser Proben in 3 mL-Quarz-Küvetten vermischt (siehe Tabelle 2). Die Extinktion dieser Proben wurde dann bei 25° C mittels eines UV/Vis-Spektrometers (siehe Abschnitt 3.1.4) gemessen.

Tabelle 2: Verwendete Mengen für die UV/Vis-Messung zur Bestimmung der Stöchiometrie

| Messung | Donor-Lösung [mL] | Akzeptor-Lösung [mL] |
|---|---|---|
| 1 | 0,3 | 2,7 |
| 2 | 0,6 | 2,4 |
| 3 | 1,0 | 2,0 |
| 4 | 1,2 | 1,8 |
| 5 | 1,5 | 1,5 |
| 6 | 1,8 | 1,2 |
| 7 | 2,0 | 1,0 |
| 8 | 2,4 | 0,6 |
| 9 | 2,7 | 0,3 |

Im Gegensatz dazu wurden für die Berechnung der Bildungskonstanten Lösungen in Chloroform angesetzt, bei denen entweder die Akzeptor- oder die Donor-Konzentration stark erhöht wurde. Dabei wurde meistens, aufgrund der geringen Löslichkeit der niedermolekularen Elektronenmangelverbindungen, die Donor-Konzentration erhöht. Die Lösungen wurden wieder in einem 100 mL-Rundkolben angesetzt. Dabei wurden die Proben von DDQ, TCNE und Coronen wie bei den vorherigen Messungen durch Erwärmen hergestellt und anschließend verschiedene Mengen (siehe Tabelle 3) in 3 mL-Küvetten überführt. Dabei wurde das Volumen der Lösung mit geringerer Konzentration konstant gehalten und das Volumen der anderen Lösung sukzessive erhöht. Anschließend wurde die Küvette mit Chloroform aufgefüllt. Dann wurde wieder die Extinktion von allen Proben bei 25° C gemessen.

Tabelle 3: Beispiel für verwendete Mengen für die UV/Vis-Messung zur Bestimmung der Bildungskonstante

| Messung | Donor-Lösung [mL] | Akzeptor-Lösung [mL] | Chloroform [mL] |
|---|---|---|---|
| 1 | 0,6 | 0,3 | 2,1 |
| 2 | 0,9 | 0,3 | 1,8 |
| 3 | 1,2 | 0,3 | 1,5 |
| 4 | 1,5 | 0,3 | 1,2 |
| 5 | 1,8 | 0,3 | 0,9 |
| 6 | 2,1 | 0,3 | 0,6 |
| 7 | 2,4 | 0,3 | 0,3 |
| 8 | 2,7 | 0,3 | |

Bei der Durchführung der UV/Vis-Messungen konnte eine Verfärbung der Lösungen von Naphthalin und Pyren in Chloroform bei hohen Konzentrationen festgestellt werden. Die farblose Naphthalin-Lösung wurde nach einigen Stunden Lagerung blau und die gelb/orange Pyren-Lösung verfärbte sich grün.

Um den Einfluss von Sauerstoff und somit eine Oxidation dieser beiden Elektronen-Donoren in der Lösung ausschließen zu können, wurden verschiedene Lösungen von Naphthalin (0,8 mol/L) und Pyren (1,3 mol/L) in Chloroform angesetzt. Dabei wurde jeweils eine Lösung an Luft und eine weitere Lösung unter Argon-Atmosphäre angesetzt.

Bei den zuletzt genannten Lösungen wurde das Chloroform zusätzlich mit Argon durchspült und mit einem Molekularsieb (siehe Abschnitt 3.1.4) wasserfrei gehalten.

Anschließend wurden alle Lösungen mit drei Spiral-Tageslichtlampen der Firma Walimex (125 W) beleuchtet und die Verfärbungen mit einer Kamera (siehe Abschnitt 3.1.4) aufgenommen. Die Ergebnisse dieser Versuche sind in der Figur 1 dargestellt.

Bei diesen Aufnahmen verfärbten sich die jeweilig außen liegenden Proben zuerst. Dies war eine Folge der inhomogenen Bestrahlung der Proben. Das Licht wurde von links, von rechts und von oben auf die Lösungen gerichtet.

Die photographische Dokumentation der Verfärbung in Figur 1 zeigt, dass sich alle Lösungen durch Bestrahlung mit den Spiral-Tageslichtlampen verfärben. Diese Farbänderungen blieben selbst nach einigen Wochen unter Lichtabschluss erhalten. Durch die Verfärbungen aller Lösungen konnte somit der Einfluss von Sauerstoff auf die Verfärbung ausgeschlossen werden.

Ein möglicher Grund für die Verfärbung der Lösungen könnte die Bildung von Radikal-Kationen sein. Eine Energiezufuhr durch Lichtbestrahlung führt bei den Aromaten (*Ar*) Pyren und Naphthalin zu einer Ionisierung. Dabei entsteht ein Radikal-Kation ($Ar^{\bullet+}$) über den TriplettZustand des Aromaten, welches mit einem weiteren Aromaten zu einem Dimer-Radikal-Kation ($Ar_2^{\bullet+}$) reagieren kann (M. Hara et al., "Formation and decay of pyrene radical cation and pyrene dimer radical cation in the absence and presence of cyclodextrins during resonant two-photon ionization of pyrene and sodium 1 -pyrene sulfonate," Physical Chemistry Chemical Physics, pp. 3215-3220, 2004.) (A. Kira et al.,"Spectroscopic Study on Aggregate Ion Radicals of Naphthalene and Pyrene in γ-Irradiated Alkane Glasses," The Journal of Physical Chemistry, pp. 1445-1448, 1976.) (J. T. Richards et al., "Formation of Ions and Excited States in the Laser Photolysis of Solutions of Pyrene," The Journal of Physical Chemistry, pp. 4137-4141 , 1970.) (A. Liu et al.,"Transient absorption spectra of aromatic radical cations in hydrocarbon Solutions," Journal of Photochemistry and Photobiology A: Chemistry, pp. 197-208, 1992.).

$$Ar^{\bullet+} + Ar \rightarrow Ar_2^{\bullet+}$$

Sowohl bei den Radikal-Kationen als auch bei den Dimer-Radikal-Kationen können neue Extinktionsbanden gemessen werden. Allerdings haben diese neugebildeten Kationen eine sehr kurze Halbwertszeit (z.B. $Py_2^{\bullet+}$: $\tau_{1/2}$ = 51 ns) bei einer Pyren-Konzentration von 3 mmol/L einer Bestrahlungsdauer von 5 ns mittels eines Lasers (M. Hara et al.,"Formation and decay of pyrene radical cation and pyrene dimer radical cation in the absence and presence of cyclodextrins during resonant two-photon ionization of pyrene and sodium 1 -pyrene sulfonate," Physical Chemistry Chemical Physics, pp. 3215-3220, 2004.).

Eine weitere Erklärung für die Verfärbung wäre die Bildung von ungeladenen Radikalen (Ar' und $ArH^{\bullet}$), die ebenfalls neue Extinktionsbanden aufweisen sollten.

$$Ar-H \xrightarrow{h\cdot\nu} Ar^{\bullet} + H^{\bullet}$$

$$Ar + H^{\bullet} \xrightarrow{h\cdot\nu} ArH^{\bullet}$$

Es wird vermutet, dass sich bei den durchgeführten Versuchen aufgrund der höheren Konzentrationen (z.B. Pyren 1,3 mol/L) und der länger andauernden Beleuchtung mehr Radikale bilden, die dann zu einer starken Verfärbung der Lösung führen.

Dennoch stimmen die in der Figur 1 dargestellten Versuche nicht mit der Bildung kurzlebiger Radikal-Kationen überein, da die Verfärbung der Pyren- und Naphthalin-Lösungen über einen Zeitraum von mehreren Wochen bestehen blieb (im Gegensatz zu einer Halbwertszeit der Radikal-Kationen von $\tau_{1/2}$ = 51 ns). Die Halbwertszeit der postulierten Radikal-Aromaten ist nicht bekannt.

Dieser Sachverhalt wurde hier nicht weiter untersucht. Für eine Analyse wäre eine Elektronen-Spin-Resonanz-Spektroskopie (ESR) notwendig. Der Einfluss der Verfärbung der Lösungen auf die UV/Vis-Messungen wurde vernachlässigt. Bei diesen Elektronen-Donoren konnte keine Extinktion in dem betrachteten Wellenlängenbereich gemessen werden und die Verfärbung trat erst nach Lagerung der Lösungen auf.

*1.3 Nitrierung von Polystyrol*

In dieser Arbeit wurde Polystyrol durch drei verschiedene Varianten nitriert. Es wurden Versuche zur Mono-, Di- und Trinitrierung durchgeführt. Im diesem Abschnitt sind diese Versuche zusammengefasst.

*1.3.1 Mononitrierung*

**Der Aufbau für die Einfachnitrierung von Polystyrol ist in**

**Figur** 2 dargestellt. Für die Nitrierung wurden zunächst 3 g Polystyrol und 60 mL Chloroform in einen 250 mL-Dreihalskolben gegeben. Unter ständigem Rühren mittels eines Magnetrührers wurde das Polystyrol in dem Chloroform gelöst. Die Polystyrol-Lösung wurde mit Eiswasser auf 5 bis 10° C gekühlt.

Währenddessen wurde in einem Erlenmeyerkolben die Nitriersäure angesetzt. Dabei wurde zuerst 2,5 mL

Wasser, dann 3,5 mL rauchende Salpetersäure und zuletzt 7,2 mL konzentrierte Schwefelsäure in den Erlenmeyerkolben gegeben. Der Kolben wurde ständig mit Eiswasser gekühlt und die Lösung für fünf Minuten mit 400 rpm gerührt.

Anschließend wurde die Nitriersäure in den Tropftrichter gefüllt und zu der Polystyrol-Lösung langsam zugetropft. Die Lösung wurde dabei mit 400 rpm gerührt und mit Eiswasser auf 5 bis 10° C gekühlt. Während des Zutropfens verfärbte sich die farblose Polystyrol-Lösung braun. Die Zugabe der Nitriersäure erfolgte über einen Zeitraum von 45 Minuten.

Die Lösung wurde dann noch weitere drei Stunden bei 5 bis 10° C gerührt und anschließend unter Rühren (600 rpm) in 150 mL eisgekühltes 2-Propanol gestürzt (siehe Figur 3). Dabei verfärbte sich die Lösung gelb und eine gelbe Flockenbildung konnte festgestellt werden. Außerdem hatte sich beim schnellen Umstürzen ein gelbes klumpiges Präzipitat gebildet.

Nach zehn Minuten langsamen Rührens (300 rpm) wurde der Niederschlag mittels Büchnertrichter (Blaubandfilter) abfiltriert (siehe Figur 4) und mit 2-Propanol gewaschen. Der Rückstand (siehe Figur 5) wurde auf einer Heizplatte in einer Porzellanschale (Ø 160 mm) bis zur Gewichtskonstanz getrocknet.

Zur Umkristallisation wurde dieser Niederschlag anschließend in 100 mL N,N-Dimethylformamid unter ständigem Rühren gelöst und nach einer Stunde wurde diese Lösung sehr langsam durch Zugabe über einen Glasstab in deionisiertem Wasser ausgefällt. Das Wasserbad wurde dabei mit 400 rpm, bei einer Temperatur von 40° C, gerührt. Es bildeten sich wieder gelbe Flocken aus und das Wasser färbte sich leicht gelb.

Nach vier Stunden wurde der Niederschlag mittels Büchnertrichter (Blaubandfilter) abfiltriert und mit Wasser und 2-Propanol gewaschen. Der gelbliche Niederschlag wurde auf einer Heizplatte in einer Porzellanschale (Ø 160 mm) bis zur Gewichtskonstanz (2,45 g) getrocknet. Dieser Niederschlag ist in Figur 6 dargestellt.

In Tabelle 4 und Tabelle 5 sind die Ausbeute und die Ergebnisse der Elementaranalyse dieses Reaktionsproduktes dargestellt.

Tabelle 4: Ausbeute bei der Mononitrierung von Polystyrol

| **Ausbeute [g]** | **Ausbeute bei vollständiger Mononitrierung [%]** | **Literatur-Wert [%]** | **Quelle** |
|---|---|---|---|
| 2,45 | 57,05 | 80 | W. Berger et al,"Elektrophile und nukleophile Substitution an Aromaten - Nitrierung," in Organikum, Johann Ambrosius Barth Verlag, 1996, pp. 340-343. |

Tabelle 5: Ergebnisse der Elementaranalyse des Reaktionsproduktes der Mononitrierung

| Elementaranalyse: | **Element** | **gemessen** | **berechnet** |
|---|---|---|---|
| | **C** | 86,9 % | 64,4 % |
| | **H** | 7,1 % | 4,7 % |
| | **N** | 1,7 % | 9,4 % |
| | **O** | 4,3 % | 21,5 % |

*1.3,2 Dinitrierung*

Die Zweifachnitrierung wurde in Anlehnung an die Einfachnitrierung durchgeführt. Der Aufbau zur Mononitrierung wurde auch für die *Dinitrierung* verwendet (siehe Figur 2). Zu Beginn wurden 5 g Polystyrol in 50 mL Chloroform in einem Dreihalskolben unter ständigen-Rühren bei 400 rpm mittels eines Magnetrührers (Rührfisch) gelöst. Die Polystyrol-Lösung wurde durch Eiswasser auf 5-10° C gekühlt.

Während der Kühlung wurde die Nitriersäure in einem Erlenmeyerkolben, ebenfalls unter Eiskühlung und ständigem Rühren, angesetzt. Dabei wurden zuerst 10 mL rauchende Salpetersäure und dann 14 mL konzentrierte Schwefelsäure in den Erlenmeyerkolben gegeben.

Die Nitriersäure wurde nach kurzem Rühren über einen Glastrichter in einen 250 mL-Tropftrichter gefüllt und anschließend der Polystyrol-Lösung tropfenweise zugegeben. Dabei sollte die Temperatur der Lösung zwischen 5 und 10° C liegen. Die Temperaturkontrolle erfolgte durch ein PT100 Thermoelement in einem mit Silikonöl gefülltem Glasfinger. Bereits nach der ersten Zugabe der Nitriersäure entstanden braune Flocken. Außerdem färbte sich die Lösung nach wenigen Sekunden braun.

Die Temperaturführung gestaltete sich bei dieser Nitrierung sehr schwierig. Während des Zutropfens der Nitriersäure stieg die Temperatur aufgrund der extrem exothermen Reaktion auf bis zu 21° C an. Deswegen wurde das

Zutropfen einmal abgebrochen und die Temperatur sank dabei wieder langsam auf 7° C ab. Anschließend wurde die restliche Nitriersäure zugegeben. Die weitere Zugabe bewirkte keine weitere Veränderung der Temperatur der Lösung. Es wurde vermutet, dass die Reaktion nicht wieder ansprang.

Nachdem die gesamte Nitriersäure zugegeben wurde, wurde das Eisbad entfernt und die Temperatur stieg dabei langsam auf 27° C an. Die Lösung wurde wieder 3 Stunden mit 400 rpm (Rührfisch) gerührt. Aus den braunen Flocken, die sich während des Zutropfens gebildet hatten, entstand ein klebriges braunes klumpiges Präzipitat, welches während des Rührens immer größer wurde (siehe Figur 7).

Nach den drei Stunden Reaktionszeit wurde die Lösung langsam und unter ständigem Rühren (600 rpm) in 200 mL eisgekühltes 2-Propanol gestürzt. Das 2-Propanol befand sich dabei in einem 500 mL-Becherglas, welches mit einem Rührfisch ausgestattet war. Das braune Präzipitat musste dabei vorher vom Boden des Dreihalskolbens abgeschabt werden. Diese Lösung wurde weitere drei Stunden gerührt und die größeren Flocken in der Lösung wurden hierbei stark verkleinert.

Anschließend wurde der Niederschlag mittels Büchnertrichter und Blaubandfilter zwei Mal abfiltriert und mit 2-Propanol gewaschen. Dann wurde dieser Niederschlag zur Umkristallisation in einen 250 mL-Rundkolben gegeben und durch Zugabe von 100 mL N,N-Dimethylformamid gelöst. Die Lösung verfärbte sich sofort braun und der feste Rückstand löste sich schnell auf.

Nach 17 Stunden Rühren mit 300 rpm wurde die Lösung sehr langsam über einen Glasstab in ein mit 400 mL deionisiertem Wasser gefülltes Becherglas gegeben. Das Wasser wurde dabei mittels einer Heizplatte auf 40° C erwärmt und mit 600 rpm gerührt. Beim Ausfällen bildeten sich sofort gelb-orange Flocken in der Lösung.

Die Lösung wurde nun weitere vier Stunden bei 400 rpm und 40° C gerührt. Anschließend wurde der Niederschlag mittels Büchnertrichter (Blauband) filtriert und zuerst mit deionisiertem Wasser und dann mit 2-Propanol gewaschen.

Der Niederschlag wurde bis zur Gewichtskonstanz (7,78 g) in einer Porzellanschale (Ø 160 mm) auf einer Heizplatte bei 80° C getrocknet. In der Figur 8 ist diese Probe nach der Trocknung dargestellt. In Tabelle 6 und Tabelle 7 sind die Ausbeute und die Ergebnisse der Elementaranalyse dargestellt.

Tabelle 6: Ausbeute bei der Dinitrierung von Polystyrol in Chloroform

| **Ausbeute [g]** | **Ausbeute bei vollständiger Mononitrierung [%]** | **Literatur-Wert [%]** | **Quelle** |
|---|---|---|---|
| 7,78 | 83,39 | 80 | W. Berger et al,"Elektrophile und nukleophile Substitution an Aromaten - Nitrierung," in Organikum, Johann Ambrosius Barth Verlag, 1996, pp. 340-343. |

Tabelle 7: Ergebnisse der Elementaranalyse des Reaktionsproduktes der Dinitrierung von Polystyrol in Chloroform

| Elementaranalyse: | **Element** | **gemessen** | **berechnet** |
|---|---|---|---|
| | **C** | 57,4 % | 49,5 % |
| | **H** | 4,1 % | 3,1 % |
| | **N** | 11,3 % | 14,4 % |
| | **O** | 27,2 % | 33,0 % |

Da sich während der Dinitrierung von Polystyrol in Chloroform braune Flocken gebildet hatten, wurden auch Versuche mit 1,2-Dichlorethan als Lösungsmittel durchgeführt. Bei dieser Nitrierung gestaltete sich die Temperaturführung ebenfalls sehr problematisch.

Auch mit diesem Lösungsmittel fielen sofort Flocken aus der Lösung aus und es bildete sich ebenfalls ein klebriges klumpiges Präzipitat in der Lösung (siehe Figur 9). Allerdings konnte eine andere Farbänderung im Vergleich zur Dinitrierung in Chloroform festgestellt werden. Es entstanden braun-grüne Flocken, die sich dann am Boden des Dreihalskolbens abgesetzt haben.

Die getrocknete nitrierte Probe zeigte ebenfalls eine andere Farbe als das Reaktionsprodukt der Dinitrierung in Chloroform (siehe Figur 10). Es wurden zur Verifizierung sowohl die Proben aus der Zweifachnitrierung in Chloroform, als auch die Proben der Nitrierung in 1,2-Dichlorethan analysiert.

Tabelle 8: Ausbeute bei der Dinitrierung von Polystyrol in 1 ,2-Dichlorethan

| **Ausbeute [g]** | **Ausbeute bei vollständiger Mononitrierung [%]** | **Literatur-Wert [%]** | **Quelle** |
|---|---|---|---|
| 7,02 | 75,30 | 80 | W. Berger et al,"Elektrophile und nukleophile Substitution an Aromaten - Nitrierung," in Organikum, Johann Ambrosius Barth Verlag, 1996, pp. 340-343. |

Tabelle 9: Ergebnisse der Elementaranalyse des Reaktionsproduktes der Dinitrierung von Polystyrol in 1 ,2-Dichlorethan

| Elementaranalyse: | **Element** | **gemessen** | **berechnet** |
|---|---|---|---|
| | **C** | 59,1 % | 49,5 % |
| | **H** | 4,2 % | 3,1 % |
| | **N** | 10,9 % | 14,4 % |
| | **O** | 25,7 % | 33,0 % |

*1.3.3 Trinitrierung*

Der Aufbau der Dreifachnitrierung entsprach nahezu dem Aufbau der Zweifachnitrierung. Allerdings wurde hier der Tropftrichter nicht benötigt. Aufgrund des geringeren Ansatzes wurde nur ein 100 mL-Dreihalskolben verwendet (siehe Figur 11).

Für die Dreifachnitrierung wurde das bereits nitrierte Polystyrol aus der Zweifachnitrierung in Chloroform verwendet. Von dieser Probe wurde 1 g mit einer Reibschale und einem Pistill zermahlen und in der Dreihalskolben gegeben.

In den Dreihalskolben wurden zusätzlich 5 mL konzentrierte Schwefelsäure gefüllt und anschließend wurde der Kolben in ein Eisbad gestellt. Das Polystyrol löste sich in der Schwefelsäure auf und wurde dabei ständig mit 400 rpm mittels eines Magnetrührers (Rührfisch) gerührt. Die Temperatur, welche zu Beginn der Reaktion bei 6° C lag, wurde mit einem Thermoelement im Glastemperaturfinger überwacht.

Während der Eiskühlung wurden 2,5 g Nitroniumtetrafluoroborat zügig mit einem Spatel in den Dreihalskolben gegeben. Außerdem wurden zusätzlich weitere 5 mL konzentrierte Schwefelsäure mit einer Glaspipette zugegeben.

Auf den Dreihalskolben wurde dann ein Rückflusskühler mit Trockenrohr ($CaCl_2$-Füllung) aufgesetzt und der dritte Hals mit einem Glasstopfen verschlossen. Das Eisbad wurde vom Kolben entfernt und die Temperatur stieg dabei langsam auf 20° C an. Die Polystyrol-Lösung war zu diesem Zeitpunkt braun und das Polystyrol war vollständig aufgelöst.

Anschließend wurde ein Silikonölbad unter den Dreihalskolben gestellt. Um den Dreihalskolben und das Silikonölbad wurde eine Aluminium-Folie gewickelt. Das Silikonöl wurde dann mit einer Heizplatte erwärmt. Dadurch stellte sich in der Polystyrol-Lösung nach drei Stunden eine Temperatur von 150° C ein.

Nach weiteren drei Stunden Rühren (bei 150° C) wurden feste, dunkelbraune Flocken am Boden des Dreihalskolbens sichtbar. Um diese braunen Flocken wieder aufzulösen, wurden weitere 10 mL konzentrierte Schwefelsäure in die Lösung gegeben. Dabei sank die Temperatur auf 120° C ab und stieg anschließend wieder auf 150° C. Allerdings lösten sich die braunen festen Bestandteile, welche am Boden des Dreihalskolbens klebten, nicht nicht wieder auf. Für eine vollständige Nitrierung sollte die nitrierte Probe ständig gelöst sein G. A. Olah und H. C. Lin, "Synthetic Methods and Reactions; XI. A Convenient Direct Preparation of 1 ,3,5-Trinitrobenzene from m-Dinitrobenzene by Nitration with Nitronium Tetrafluoroborate in Fluorosulfuric Acid," Synthesis, pp. 444-445, Juni 1974.

Nach insgesamt 3,8 Stunden Reaktionszeit wurde die Lösung sehr langsam über einen Glasstab in ein mit 500 mL Eiswasser gefülltes Becherglas (1000 mL) gegeben (siehe Figur 12). Dabei wurde das Eiswasser ständig mit 600 rpm gerührt. Bei diesem Ausfällvorgang wurde unter Gasentwicklung sehr viel Wärme frei, was zu einer Schaumbildung an der Wasseroberfläche führte. Das Wasser färbte sich dabei orange und der Niederschlag wurde dunkelbraun.

Das Wasser wurde für insgesamt 17 Stunden mit 300 rpm weiter gerührt. Anschließend wurde der Niederschlag mittels Büchnertrichter (Blauband) abfiltriert und mit einer fünfprozentigen Natriumhydrogencarbonat-Lösung gewaschen.

Der braune Niederschlag wurde auf einer Heizplatte in einer Porzellanschale (Ø 160 mm) bei 80° C getrocknet. Das Gewicht der Probe lag schließlich bei 0,83 g. Dieser Niederschlag ist in der Figur 13 dargestellt. In den folgenden Tabellen sind die Ausbeute und die Ergebnisse der Elementaranalyse dargestellt.

Tabelle 10: Ausbeute bei der Trinitrierung von dinitriertem Polystyrol

| **Ausbeute [g]** | **Ausbeute bei vollständiger Mononitrierung [%]** | **Literatur -Wert [%]** | **Quelle** |
|---|---|---|---|
| 0,83 | 67,09 | 49,3 | G. A. Olah und H. C. Lin, "Synthetic Methods and Reactions; XI. A Convenient Direct Preparation of 1,3,5-Trinitrobenzene from m-Dinitrobenzene by Nitration with Nitronium Tetrafluoroborate in Fluorosulfuric Acid," Synthesis, pp. 444-445, Juni 1974. |

Tabelle 11: Ergebnisse der Elementaranalyse des Reaktionsproduktes der Trinitrierung von dinitriertem Polystyrol

| Elementaranalyse: | **Element** | **gemessen** | **berechnet** |
|---|---|---|---|
| | **C** | 47,0 % | 40,2 % |
| | **H** | 3,0 % | 2,1 % |
| | **N** | 13,5 % | 17,6 % |
| | **O** | 36,1 % | 40,1 % |

*1.4 Verfolgung des Absetzverhaltens von Carbon Nanotubes*

Um den Einfluss von Elektronenmangelverbindungen auf die Dispergierfähigkeit von CNTs in einem Lösungsmittel zu bestimmen, wurde das Absetzverhalten dieser CNTs beobachtet. Hierzu wurden die im Abschnitt 3.1.1 .2. beschriebenen CNTs verwendet.

Zur Analyse des Absetzverhaltens wurde eine Vorrichtung aufgebaut, mit der die Proben in den Zentrifugen-Röhrchen durchstrahlt werden konnten (siehe Figur 14). Dazu wurde ein

Lampenschirm einer Fotolampe (siehe Abschnitt 3.1.4) vollständig mit Aluminium-Folie ausgekleidet und anschließend mit einem kreisförmigen Pappkarton, der innen ebenfalls mit Aluminium-Folie beschichtet wurde, abgedeckt. In den Pappkarton wurde eine rechteckige Öffnung (l = 6 cm, b = 1 cm) geschnitten (siehe Figur 15). Zur genaueren Platzierung der Zentrifugenröhrchen wurden zwei Quader aus schwarz gefärbtem Styropor an den beiden Seiten der rechteckigen Öffnung des Pappkartons angebracht. Durch diesen Aufbau konnte ein rechteckig begrenztes Lichtbündel durch die Probe gestrahlt werden.

Die Untersuchungen werden im Folgenden auf niedermolekulare und hochmolekulare Elektronenmangelverbindungen aufgeteilt.

*1.4.1 Niedermolekulare Elektronenmangelverbindungen*

Für die Untersuchungen der niedermolekularen Elektronenmangelverbindungen wurden Lösungen von DDQ und TCNE in einer Konzentration von jeweils 4 mmol/L in Chloroform hergestellt. In drei 50 mL-Zentrifugen-Röhrchen (Polypropylen) wurden zunächst je 4 mg CNTs gegeben. Anschließend wurde in eines der Röhrchen 40 mL DMF (Probe 1), in ein weiteres 40 mL der DDQ-Lösung (Probe **2**) und in das letzte 40 mL der TCNE-Lösung (Probe **3**) gegeben.

Diese Proben wurden dann je fünf Minuten direkt mit einer Sonotrode (siehe Abschnitt 3.1.4) bei einer Amplitude von 50 % und einem Zyklus von 0,5 beschallt. Dabei wurde das Zentrifugen-Röhrchen in ein mit Eiswasser gefülltes Becherglas (600 mL) gestellt (siehe Figur 16). Zum Vergleich wurden photographische Aufnahmen der verschiedenen Proben direkt nach dem Sonotrieren und nach drei Tagen Lagerung angefertigt.

*1.4.2 Hochmolekulare Elektronenmangelverbindungen*

Für die Untersuchungen wurden zunächst fünf Zentrifugen-Röhrchen (V=50 mL, Polypropylen) für zwölf Stunden bei 90° C im Ofen getrocknet und anschließend für fünf Stunden im Exsikkator platziert. Anschließend wurde das Leergewicht der Zentrifugen-Gefäße bestimmt.

In diesen Behältern wurden dann die in der Tabelle 12 dargestellten Proben (4 bis 8) angesetzt. Diese Proben wurden anschließend für je fünf Minuten bei einer Amplitude von 50 % und einem Zyklus von 0,5 sonotriert. Dabei wurden die Probenbehälter ebenfalls mit Eiswasser gekühlt (siehe Figur 16). Die Lösungen waren nach dem Zentrifugieren schwarz und wirkten gut dispergiert.

Tabelle 12: Proben für die Untersuchung des Absetzverhaltens von CNTs unter dem Einfluss von hochmolekularen Elektronenmangelverbindungen

| **Proben-Nummer** | **Masse der CNTs** | **verwendetes Additiv** | **Masse des verwendeten PS** | **Volumen an DMF** |
|---|---|---|---|---|
| **4** | 10 mg | - | - | 40 mL |
| **5** | 10 mg | reines Polystyrol | 10 mg | 40 mL |
| **6** | 10 mg | Reaktionsprodukt der Mononitrierung von Polystyrol | 10 mg | 40 mL |
| **7** | 10 mg | Reaktionsprodukt der Dinitrierung von Polystyrol in 1,2-Dichlorethan | 10 mg | 40 mL |
| **8** | 10 mg | Reaktionsprodukt der Trinitrierung von Polystyrol | 10 mg | 40 mL |

Anschließend wurden diese Proben drei Stunden mit 7000 rpm zentrifugiert. Dies entspricht einer relativen Zentripetalbeschleunigung von 6683 g (mit g = 9,81 $m/s^2$). Die Berechnung der Zentripetalbeschleunigung ist im Abschnitt 3.5 dargelegt.

Von den oben genannten Proben wurden ebenfalls Aufnahmen direkt nach der Behandlung mit der Sonotrode und nach dem Zentrifugieren angefertigt. Anschließend wurden bei allen Proben die Teile der Flüssigkeit, in denen die CNTs in der Schwebe waren, mittels einer Pipette abgezogen. Dadurch blieben die CNTs, die sich beim Zentrifugieren abgesetzt haben in den Behältern erhalten. Diese Behälter wurden dann bei 90° C für drei Tage unter Vakuum (100 mbar) getrocknet und anschließend wieder gewogen. Um Nullproben von den Zentrifugen-Röhrchen zum Vergleich zu erhalten, wurden drei weitere Behälter wie oben beschrieben getrocknet und abgewogen.

Aufgetretene Probleme: Diese Untersuchung war mit sehr vielen Fehlern behaftet. Die verwendete Waage (siehe Abschnitt 3.1.4) konnte Massen nur bis auf eine Genauigkeit von 0,1 mg anzeigen. Außerdem gestaltete sich das Entfernen der Proben-Flüssigkeit aus den Zentrifugen-Röhrchen sehr schwierig, da sich immer wieder CNTs von den Wänden lösten und sehr leicht von der Pipette mit aufgenommen werden konnten.

*2 Ergebnisse und Auswertung*

*2.1 Komplexbildung*

Die Farbveränderung der jeweiligen Akzeptor-Lösung bei Zugabe der Naphthalin-Lösung ist in der Figur 17 dargestellt. Bei den drei Akzeptoren Chloranil, DDQ und TCNE konnte nach Zugabe der Naphthalin-Lösung eine Farbänderung beobachtet werden. Nur bei den Akzeptoren DDQ und TCNE konnte nach dem Verdampfen des Lösungsmittels auch eine Kristallbildung festgestellt werden. Die Kristalle sind in der Figur 18 vergrößert dargestellt. Auf Grund dieser Ergebnisse wurden die restlichen Messungen nur mit den Elektronenmangelverbindungen DDQ und TCNE durchgeführt. Die übrigen Elektronen-Akzeptoren wurden wegen der geringen Wechselwirkung mit Naphthalin nicht weiter betrachtet.

*2.2 Bestimmung der Stöchiometrie der Komplexe*

Charge-Transfer-Komplexe absorbieren in anderen Wellenlängenbereichen als die jeweiligen Donoren und Akzeptoren. Die gemessenen Extinktionsbereiche der Charge-Transfer-Komplexe der Elektronendonoren Naphthalin, Pyren und Coronen und der Elektronenakzeptoren DDQ und TCNE sind in Figur 19 bis Figur 24 dargestellt.

Bei den UV/Vis-Messungen wurden oft nur sehr kleine Extinktionswerte gemessen (siehe beispielsweise Figur 24). Dies liegt daran, dass in dem Lösungsmittel Chloroform keine höheren Konzentrationen erzielt werden konnten. Die Wellenlängen, bei denen ein Extinktionsmaximum auftritt, sind in der Tabelle 13 zusammengefasst.

Tabelle 13: Gemessene Wellenlängen bei maximaler Extinktion verschiedener Charge-Transfer-Komplexe

| **Akzeptor** | **Donor** | **Wellenlänge mit maximaler Extinktion [nm]** |
|---|---|---|
| **DDQ** | Naphthalin | 621 |
| **DDQ** | Pyren | 539, 846 |
| **DDQ** | Coronen | 833 |

(fortgesetzt)

| Akzeptor | Donor | Wellenlänge mit maximaler Extinktion [nm] |
|---|---|---|
| **TCNE** | Naphthalin | 560, 430 |
| **TCNE** | Pyren | 494, 738 |
| **TCNE** | Coronen | 725 |

Zur Bestimmung der Stöchiometrie dieser Charge-Transfer-Komplexe wurden die sogenannten Job-Plots (siehe (I. Ostromisslensky, "Über eine neue, auf dem Massenwirkungsgesetz fußende Analysenmethode einiger binären (sic!) Verbindungen," Berichte der deutschen chemischen Gesellschaft, pp. 268-273, 1911.) (P. Job,"Formation and stability of inorganic complexes in Solution," Annales de chimie, pp. 1 13-203, 1928.) (J. S. Renny et al.,"Method of Continuous Variations: Applications of Job Plots to the Study of Molecular Associations on Organometallic Chemistry," Angewandte Chemie International Edition, pp. 2-18, 2013.) ( W. Likussar und D. F. Boltz, "Theory of Continuous Variations Plots," Analytical Chemistry, pp. 1265-1272, 10 August 1971.)) bei den oben genannten Wellenlängen aufgenommen. Diese sind in Figur 25 bis Figur 30 dargestellt. Aus diesen Diagrammen kann eindeutig festgestellt werden, dass alle Komplexe in einer Stöchiometrie von 1 :1 vorliegen.

*2.3 Bestimmung der Komplexbildungskonstanten*

Die Ergebnisse der UV/Vis-Messungen, unter Variation der Konzentration des Elektronenakzeptors oder -donors, sind in Figur 31 bis Figur 36 festgehalten.

Bei der Wellenlänge, bei der die maximale Extinktion vorhanden ist, wird die Bildungskonstante $K_{CT}$ und der Extinktionskoeffizient $\varepsilon_{CT}$ anhand der Scotts-Form der Benesi-Hildebrand-Gleichung (Formel 1, H. Benesi und J. Hildebrand, "A Spectrophotometric Investigation of the Interaction of lodine with Aromatic Hydrocarbons," Journal of The American Chemical Society, pp. 2703-2707, 1949.) und der Benesi-Hildebrand-Gleichung (Formel 2, R. L. Scott,"Some Comments on the Benesi-Hildebrand-Equation," Recueil des Travaux Chimiques des Pays-Bas, pp. 787-789, 1956.) berechnet. Die zugehörigen Diagramme sind im

Abschnitt 3.3 aufgetragen. Die berechneten Werte sind in Figur 37 dargestellt. Die Höhe der Bildungskonstante stellt eine Aussage über die Stabilität des Komplexes dar. Je höher die Konstante, desto stabiler ist der Komplex (R. L. Scott,"Some Comments on the Benesi-Hildebrand-Equation," Recueil des Travaux Chimiques des Pays-Bas, pp. 787-789, 1956.) (A.-G. EL-Kourashy,"Intermolecular charge-transfer studies on p-tolylthiourea-iodine System," Spectrochimica Acta, pp. 399-403, 1981.) ( R. Abu-Eittah und F. Al-Sugeir,"Charge-transfer interaction of bithienyls and some thiophene derivatives with electron acceptors," Canadian Journal of Chemistry, pp. 3705-3712, 1976.).

Die Figur 37 zeigt, dass die Bildungskonstanten der Charge-Transfer-Komplexe durch Einsatz größerer polycyclischer Aromate steigen. Außerdem wird deutlich, dass DDQ offensichtlich stärkere Charge-Transfer-Komplexe bildet als TCNE. Allerdings erreichen die Bildungskonstanten mit maximal 93 L/mol nur geringe Werte (zum Vergleich ein Komplex aus Imidazol und DDQ: $K_{CT}$ = 507,6·$10^3$ L/mol) (A. Mostafa und H. S. Bazzi,"Synthesis and spectroscopic studies on charge-transfer molecular complexes formed in the reaction of imidazole and 1 -benzylimidazole with σ- and ττ-acceptors," Spectrochimica Acta PartA, pp. 1613-1620, 2011.).

Die von niedermolekularen Elektronenmangelverbindungen gebildeten Komplexe mit Aromaten sind also nicht stabil genug, um auf diesem Prinzip ein CNT-Additiv zu entwickeln. Um dieses Problem zu überwinden, wurde vorgeschlagen, Polymere mit Elektronenmangelaromaten an jeder Repetitionseinheit einzusetzen (G. Wehnert, persönliche Mitteilung, TH Nürnberg, 2014.). Dadurch müsste sich die geringe Komplexbildungskonstante vervielfachen lassen. Für diese Arbeit wurde als Elektronenmangelpolymer Polynitrostyrol ausgewählt.

Da Polynitrostyrole kommerziell nicht erhältlich sind, wurden Versuche zur Mono-, Di- und Trinitrierung von Polystyrol durchgeführt. Die Ergebnisse dieser Versuche sind im Folgenden dargestellt.

Da Polynitrostyrole kommerziell nicht erhältlich sind, wurden Versuche zur Mono-, Di- und Trinitrierung von Polystyrol durchgeführt. Die Ergebnisse dieser Versuche sind im Folgenden dargestellt.

*2,4 Charakterisierung der nitrierten Polystyrole*

Zur leichteren Verständlichkeit werden die Reaktionsprodukte der Mono-, Di- und Trinitrierung auch als mononitriertes, dinitriertes und trinitriertes Polystyrol bezeichnet. Der tatsächliche Nitrierungsgrad wurde durch die Elementaranalyse bestimmt (Abschnitt 6.4.4).

*2.4.1 Gewichtsbestimmung*

Für die Nitrierungen wurden verschiedene Mengen an Polystyrol verwendet. Die nitrierten Proben wurden jeweils getrocknet und anschließend abgewogen. Aus diesen Werten wurde die Ausbeute an nitriertem Polystyrol bei 100-prozentiger Nitrierung berechnet. Diese Werte sind in der folgenden Tabelle zusammengefasst.

Tabelle 14: Bestimmte Mengen und die Ausbeute bei den verschiedenen Nitrierungen

| | Eingewogene Masse an verwendetem Polystyrol [g] | Erhaltenes nitriertes Polystyrol [g] | Ausbeute bei vollständiger Nitrierung [%] | Literatur-Werte für die Ausbeute [%] |
|---|---|---|---|---|
| **Mono-nitirierung** | 3,0004 | 2,4513 | 57,05 | 80 |
| **Dinitrierung in Chloroform** | 5,0006 | 7,7816 | 83,39 | 80 |
| **Dinitrierung in 1,2-Dichlor-ethan** | 5,0038 | 7,0241 | 75,30 | 80 |
| **Trinitrierung** | 1,0023 | 0,8283 | 67,09 | 49,3 |
| Literaturangaben: Für die Mono-nitirierung, die Dinitrierung in Chloroform und die Dinitrierung in 1,2-Dichlor-ethan (W. Berger et al, "Elektrophile und nukleophile Substitution an Aromaten - Nitrierung," in Organikum, Johann Ambrosius Barth Verlag, 1996, pp. 340-343.); Für die Trinitrierung (G. A. Olah und H. C. Lin,"Synthetic Methods and Reactions; XI. A Convenient Direct Preparation of 1 ,3,5-Trinitrobenzene from m-Dinitrobenzene by Nitration with Nitronium Tetrafluoroborate in Fluorosulfuric Acid," Synthesis, pp. 444-445, Juni 1974.) | | | | |

Die Ausbeute bei der Mononitrierung ist vergleichsweise gering (57,05 %), in der Literatur ist eine Ausbeute von 80 % angegeben (W. Berger et al,"Elektrophile und nukleophile Substitution an Aromaten - Nitrierung," in Organikum, Johann Ambrosius Barth Verlag, 1996, pp. 340-343.). Allerdings gilt dieser Wert für eine vollständige Mononitrierung. In dem Abschnitt 2.4.4 ist der tatsächliche Nitrierungsgrad dargestellt.

*2.4.2 Fourier-Transformations-Infrarot-Messungen*

Die hergestellten Proben wurden anschließend durch eine FT-IR-Messung charakterisiert. Die aufgenommenen Spektren konnten nicht mit der Datenbank verglichen werden. Es waren keine Spektren von mono-, di- oder trinitriertem Polystyrol abgelegt. Deswegen wurden zusätzlich zu den FT-IR-Spektren der nitrierten Polystyrole ebenfalls Spektren der verwendeten Polystyrole angefertigt. Die Vergleiche dieser Proben sind in Figur 38 bis Figur 41 zu sehen.

In allen Spektren können neue Banden im Vergleich zum verwendeten Polystyrol festgestellt werden. Diese zeigen eine erfolgreiche Nitrierung der Polystyrole an. Die charakteristischen Banden für Nitro-Gruppen bei 1345 $cm^{-1}$ und 1520 $cm^{-1}$ sind in den Spektren der nitrierten Polystyrole zu finden. Allerdings sind diese beiden Banden bei dem mononitriertem Polystyrol sehr klein (siehe Figur 38). Eine weitere neue Bande ist bei den mono- und dinitrierten Proben bei 856 $cm^{-1}$ zu sehen. Diese ist charakteristisch für einen 1 ,2,4-substituierten Benzol-Ring. Dies deutet auf eine Dinitrierung des Polystyrols hin ( M. D. Fernändez, M. J. Fernändez und I. J. McEwen,"Blends of poly(styrene-ran-2,4-dinitrostyrene with poly(vinyl methyl ether) and poly(2,6-dimethyl-1 ,4-phenylene oxide)," Polymer, pp. 2767-2772, 1997.). Außerdem ist diese Bande bei dem trinitrierten Polystyrol verschoben und liegt bei 847 $cm^{-1}$.

*2.4.3 GPC-Messungen*

Im nächsten Schritt wurden Messungen mittels Gel-Permeations-Chromatographie (GPC) durchgeführt. Als Lösungsmittel wurde DMF verwendet. Die einzelnen Messungen sind in Figur 42 bis Figur 48 zu sehen. Die Zusammenfassung der Ergebnisse ist in der Tabelle 15 enthalten ($M_{n_w gemessen}$).

*Tabelle 15: Anhand der Molekulargewichte berechneter Nitrierungsgrad der nitrierten Polystyrole*

| | Werkstoff | $M_{nwgemessen}$ [g·mol$^{-1}$] | $M_{nwberechnet}$ [g·mol$^{-1}$] | Nitrierungsgrad |
|---|---|---|---|---|
| **Mono-nitrierung** | Polystyrol (Edukt) | 65,22 | - | - |
| | einfach nitriertes Polystyrol | 7097 | 9340 | 20,4 % einfach |
| **Di-nitrierung** | Polystyrol (Edukt) | 11901 | - | - |
| | zweifach nitriertes Polystyrol (in 1,2-Dichlorethan) | 18025 | 22186 | 100 % einfach 19,09 % zweifach |
| **Trinitrierung** | Polystyrol (Edukt 1) | 12548 | - | - |
| | zweifach nitriertes Polystyrol (in Chloroform, Edukt 2) | 20976 | 23392 | 100 % einfach 55,45 % zweifach |
| | dreifach nitriertes Polystyrol | 11461 | 28814 | - |

Das Molekulargewicht ist bei den Proben der Mono- und Dinitrierung gestiegen. Dies lässt sich auf die eingebrachten Niitro-Gruppen zurückführen. Allerdings ist das Molekulargewicht des Reaktionsproduktes derTrinitrierung im Vergleich zur eingesetzten dinitrierten Polystyrol-Probe gesunken, was auf einen Abbau der Polymerketten schließen lässt. Dennoch können intensive Nitrobanden im FT-IR-Spektrum (siehe Figur 41) festgestellt werden. Um nun den Nitrierungsgrad der Reaktionsprodukte aus den Nitrierungen zu bestimmen, werden zunächst die Molekulargewichte der nitrierten Polystyrole bei vollständiger Nitrierung berechnet. Die Berechnung hierzu ist im Abschnitt 3.4 dargestellt. Die Ergebnisse ($M_{nwberechnet}$) sind in der Tabelle 15 aufgelistet.

Da das Molekulargewicht des dreifachnitrierten Polystyrols gesunken ist, konnte dessen Nitrierungsgrad nicht über das Molekulargewicht berechnet werden. Dieses wurde mittels der Elementaranalyse bestimmt (siehe Abschnitt 2.4.4). Aus der Tabelle 15 kann bereits geschlossen werden, dass keine vollständige Mono- und Dinitrierung des Polystyrols stattgefunden hat.

*2.4.4 Elementaranalyse*

Ein sehr viel genaueres Verfahren zur Bestimmung des Nitrierungsgrades ist die Elementaranalyse. Die Ergebnisse dieser Messungen sind in der folgenden Tabelle zusammengefasst.

Tabelle 16: Gemessene und berechnete Ergebnisse der Elementaranalyse der Reaktionsprodukte der verschiedenen Nitrierungen von Polystyrol

| | C [%] gem. | ber. | H [%] gem. | ber. | N [%] gem. | ber. | O [%] gem. | ber. |
|---|---|---|---|---|---|---|---|---|
| **Mononitrierung** | 86,9 | 64,4 | 7,1 | 4,7 | 1,7 | 9,4 | 4,3 | 21,5 |
| **Dinitrierung in Chloroform** | 57,4 | 49,5 | 4,1 | 3,1 | 11,3 | 14,4 | 27,2 | 33,0 |
| **Dinitrierung in 1,2-Dichlorethan** | 59,1 | 49,5 | 4,2 | 3,1 | 10,9 | 14,4 | 25,7 | 33,0 |
| **Trinitrierung** | 47,0 | 40,2 | 3,0 | 2,1 | 13,5 | 17,6 | 36,1 | 40,1 |
| Bemerkungen: gem.) gemessen; ber.) berechnet | | | | | | | | |

Die obige Tabelle zeigt, dass keine vollständige Mono-, Di- und Trinitrierung von Polystyrol stattgefunden hat. Die Ergebnisse der Elementanalysen lassen auf folgenden Nitrierungsgrade der Reaktionsprodukte schließen:

- Mononitrierung: 13,3 % nitriert
- Dinitrierung in Chloroform: 131,2 % nitriert → 31,2 % dinitriert
- Dinitrierung in 1,2-Dichlorethan: 124,9 % nitriert --> 24,9 % dinitriert
- Trinitrierung: 176,9 % nitriert --> 76,9 % dinitriert

Die Einfachnitrierung von Polystyrol hat nicht zum Erfolg geführt. Es konnten nur 13,3 % der Styrol-Gruppen nitriert werden. Durch Verwendung einer stärkeren Säure sollte der Nitrierungsgrad steigen. Dies zeigt sich bereits bei den Reaktionsprodukten der Dinitrierung. Allerdings konnte bei den Dinitrierungen von Polystyrol auch kein vollständig

zweifach-nitriertes Polystyrol hergestellt werden. Das könnte an der schlechten Temperaturführung während der Nitrierung (siehe Abschnitt 1.3.2) liegen. Das Reaktionsprodukt der Dreifachnitrierung weist zwar den höchsten Nitrierungsgrad auf, dennoch konnte kein dreifach-nitriertes Polystyrol hergestellt werden. Außerdem hat bei dieser Reaktion ein Polymerkettenabbau stattgefunden (siehe Abschnitt 2.4.3).

*2.4.5 Thermisches Verhalten*

Proben der verschiedenen Nitrierungen wurden im Glühröhrchen bis auf Rotglut erhitzt. Das mono- und dinitrierte Polystyrol zersetzte sich völlig normal unter Rauchbildung. Die trinitrierte Probe zeigte leichte Tendenzen einer exothermen Reaktion. Eine Verpuffung oder gar explosive Zersetzung konnte in keinem Fall beobachtet werden.

Zusätzlich zu den oben genannten Untersuchungen wurden Thermogramme der Proben aus den verschiedenen Nitrierungen angefertigt. Zum Vergleich wurden auch die verwendeten Polystyrol-Proben analysiert. Die Proben wurden dabei unter Stickstoff-Flutung (20 mL/min) jeweils mit 10 K/min bis zu einer Temperatur von 1000° C erhitzt. Diese aufgenommenen Thermogramme sind in Figur 49 bis Figur 52 zu sehen. Die nitrierten Proben verhalten sich bei der Erwärmung ähnlich wie reines Polystyrol.

*2.5 Absetzverhalten von Carbon Nanotubes*

*2.5.1 Niedermolekulare Elektronenmangelverbindungen*

In der Figur 53 sind die Referenzprobe und die Probe mit DDQ und TCNE nach dem Dispergieren mittels einer Sonotrode dargestellt. Bei der Probe 3 können bereits große Agglomerate festgestellt werden. Auch die beiden anderen Proben zeigen mittels Durchlichtbestrahlung starke Agglomeratbildung.

Nach drei Tagen Lagerung kann diese Agglomeratbildung deutlicher festgestellt werden. Weitere Aufnahmen dieser Proben sind in der Figur 54 zu sehen. Diese Aufnahmen zeigen deutlich, dass niedermolekulare Elektronenmangelverbindungen nicht ausreichend für eine Funktionalisierung der CNTs sind. Dies spiegelt sich auch in den geringen Bildungskonstanten (siehe Abschnitt 2.3) wider.

*2.5.2 Hochmolekulare Elektronenmangelverbindungen*

In der Figur 55 sind Aufnahmen der verschiedenen Proben von CNTs und Polystyrol und nitrierten Polystyrolen in DMF direkt nach dem Dispergieren mittels einer Sonotrode dargestellt. Die Aufnahmen zeigen, dass die CNTs bei allen Proben sehr gut dispergiert sind. Es sind keine Agglomerate erkennbar.

Nach Zentrifugation dieser Lösungen erscheint allerdings ein völlig neues Bild (siehe Figur 56). Bei den Proben 4 (CNTs in DMF), 5 (Polystyrol) und 8 (dreifachnitriertes Polystyrol) können abgesetzte CNTs an den Zentrifugenröhrchenwänden beobachtet werden. Beim Durchstrahlen der Proben mit Spiral-Tageslichtlampen (siehe Abschnitt 3.1.4) erscheinen die Flüssigkeiten dadurch heller. Bei dem einfach und zweifach nitrierten Polystyrol (Probe 6 und 7) bleiben die CNTs selbst nach langer und starker Zentrifugation (3 Stunden, ca. 6700 g) in der Schwebe. Die Dispergierung der Carbon Nanotubes wird durch diese zwei Additive sehr stark verbessert.

*2.5.3 Bestimmung der Massen an dispergierten CNTs*

Nicht nur die photographische Dokumentation des Absetzverhaltens allein zeigt eine Verbesserung der Dispergierung durch einfach- und zweifach-nitriertes Polystyrol. Auch die Gewichtsbestimmung der Proben-Behälter macht dies deutlich. Die Figur 57 zeigt, dass durch die Reaktionsprodukte der Mono- und Dinitrierung von Polystyrol mehr CNTs in dem Lösungsmittel DMF dispergiert werden können. Die zugrundeliegende Berechnung hierzu ist im Abschnitt 3.6 aufgeführt.

Mit Hilfe dieses Versuches kann bestimmt werden, welche Menge an CNTs durch den Einsatz von 10 mg des Additivs zusätzlich in DMF dispergiert werden können. Diese Ergebnisse sind in Figur 58 zusammengefasst. Die Figur 58 zeigt, dass durch 10 mg des Reaktionsproduktes der Zweifachnitrierung 2,2 mg CNTs dispergiert werden können.

Auch das Reaktionsprodukt der Dreifachnitrierung zeigt dabei eine Verbesserung der Dispergierfähigkeit, obwohl ein Polymerkettenabbau stattgefunden hat. Diese Ergebnisse zeigen, dass Elektronenmangelpolymere wie beispielsweise Polynitrostyrol ein sehr hohes Potenzial für die Entwicklung wirksamer Additive für CNT-Polymerkomposite besitzen.

*3 Materialien und Methoden*

*3.1 Verwendete Materialien und Laborgeräte*

*3. 1. 1 Donoren*

*3. 1.* 1. *1 Kondensierte Aromate*

In Figur 59 sind die eingesetzten Elektronen-Donoren angegeben.

*3.1.1.2 Carbon Nanotubes*

Für die Untersuchung des Einflusses von Elektronenmangelverbindungen bezüglich des Absetzverhaltens von Carbon Nanotubes wurden die MWCNTs "Nanocyl™ NC7000" der Firma Nanocyl (Firmensitz in Auvelais, Belgien) verwendet. Diese CNTs wurden durch katalytische Kohlenstoff-Gasphasenabscheidung (CCVD) hergestellt. Die Eigenschaften dieser CNTs sind in der folgenden Tabelle dargestellt ( N. S.A., "Nanocyl - The Carbon Nanotube Specialist," 10 März 2009. [Online]. Available: http://www. nanocyl .com/en/Products-Sol utions/Products/Nanocyl-NC-7000-Thin-Multiwall-Carbon-Nanotubes. [Zugriff am 18 September 2014].).

Tabelle 17: Eigenschaften von "Nanocyl™ NC7000" (N. S.A., "Nanocyl - The Carbon Nanotube Specialist," 10 März 2009. [Online]. Available: http://www. nanocyl .com/en/Products-Sol utions/Products/Nanocyl-NC-7000-Thin-Multiwall-Carbon-Nanotubes. [Zugriff am 18 September 2014].)

| Eigenschaft | Wert | Einheit | Messmethode |
|---|---|---|---|
| **Reinheit** | 90 | % | TGA |
| **Metall-Oxide** | 10 | % | TGA |
| **mittlerer Durchmesser** | 9,5 | nm | TEM |
| **Durchschnittslänge** | 1,5 | $\mu m$ | TEM |
| **spezifische Oberfläche** | 250-300 | $m^2 \cdot g^{-1}$ | BET |

Von diesen CNTs wurden Aufnahmen mittels eines Rasterelektronenmikroskops (siehe Abschnitt 3.1.4) erstellt. Diese sind in Figur 60 und Figur 61 zu sehen. Bei diesen Figuren kann eine starke Agglomeratbildung der CNTs festgestellt werden.

*3.1.2 Akzeptoren*

3. 1.2. 1 *Niedermolekulare Elektronenmangelverbindungen*

Die eingesetzten Elektronenakzeptoren sind in Figur 62 dargestellt. Die Substanzen Nitrosobenzol und Anilin-Hydrochlorid wurden speziell anhand der Hammett-Parameter ausgewählt.

*3.1.2.2 Hochmolekulare Elektronenmangelverbindungen*

Als hochmolekulare Elektronenmangelverbindung wurde nitriertes Polystyrol eingesetzt. Dazu wurden in dieser Arbeit Versuche zur Mono-, Di- und Trinitrierung von Polystyrol durchgeführt. Das verwendete reine Polystyrol wurde eigens hergestellt ( O. Repp, Untersuchungen zur Polymerisation von Styrol, Diplomarbeit, TH Nürnberg, 2012.).

Es wurden Polystyrol-Proben von den folgenden Versuchen verwendet:

- Amorphes Polystyrol (für Mono- und Dinitrierung in Chloroform)
- Amorphes und kristallines Polystyrol (für Dinitrierung in 1,2-Dichlorethan)

Das Molekulargewicht dieser Proben ist im Abschnitt 2.4.3 angegeben. In Figur 63 sind die Strukturformeln von Polystyrol und einfach-, zweifach- und dreifach-nitriertem Polystyrol dargestellt. Für die nitrierten Polystyrole ist jeweils eine mögliche Substitutionsform dargestellt.

*3.1.3 Weitere Chemikalien*

Tabelle 18: Verwendete Chemikalien

| Name | Eigenschaften | CAS-Nummer | Zulieferer | Artikelnummer |
|---|---|---|---|---|
| **Chloroform** | ≥ 99 %, zur Synthese | 67-66-3 | Carl Roth GmbH & Co. KG (Karlsruhe, Deutschland) | Y015.2 |
| **2-Propanol** | ≥ 99,5 %, zur Synthese | 67-63-0 | Carl Roth GmbH & Co. KG (Karlsruhe, Deutschland) | 9866.1 |
| **1,2-Dichlorethan** | ≥ 99 %, zur Synthese | 107-06-2 | Carl Roth GmbH & Co. KG (Karlsruhe, Deutschland) | T869.2 |
| **N,N-Dimethyl-formamid (DMF)** | ≥ 99,5 %, zur Synthese | 68-12-2 | Carl Roth GmbH & Co. KG (Karlsruhe, Deutschland) | 6251.1 |
| **Schwefelsäure** | ca. 96 % -Lösung in Wasser, zur Analyse | 7664-93-9 | Acros Organics, Teil der Fischer Scientific GmbH (Nidderau, Deutschland) | 124640011 |
| **Salpetersäure** | 100 %, rauchend, zur Analyse | 7697-37-2 | Merck KGaA (Darmstadt. Deutschland) | 100455 |
| **Nitronium-tetrafluoroborat** | 96 % | 13826-86-3 | Alfa Aesar GmbH & Co KG (Karlsruhe, Deutschland) | B20167 |

*3.1.4 Verwendete Laborgeräte und chemische Hilfsstoffe*

*Analysen-Waage*

Die Proben wurden jeweils mit der Analysen-Waage Sartorius BA 110 S der Firma Sartorius (Göttingen, Deutschland) abgewogen. Diese Waage hat eine maximale Kapazität von 110 g und eine Ablesbarkeit von 0,1 mg.

*Argon-Schutzgas*

Das Argon 6.0 der Firma Westfalen AG (Münster, Deutschland) kam zum Einsatz. Der Reinheitsgrad des Argon beträgt 99,9999 Vol.-%. Die Nebenbestandteile sind Stickstoff (< 0,0001 Vol.-%), Sauerstoff (< 0,00005 Vol.-%) Wasser und Kohlenwasserstoffe (< 0,00001 Vol.-%) sein. Zusätzlich wurde dieses Gas durch eine Gasnachreinigunspatrone geleitet.

*Gasnachreinigungspatrone*

Es wurde die Kleinpatrone ALPHAGAZ Purifier $O_2$-Free der Firma Air Liquide (Paris, Frankreich) verwendet. Mit dieser Patrone können Sauerstoff (Endreinheit < 5 ppb) und Feuchtigkeit (Endreinheit < 30 ppb) aus dem Gas entfernt werden.

*FT-IR-Spektrometer*

Die IR-Spektren wurden an einem Nicolet 6700 FT-IR-Spektrometer der Firma Thermo Scientific (Waltham, USA) aufgenommen.

*Magnetrührer*

Es wurde der Magnetrührer RCT basic der Firma IKA (Staufen, Deutschland) eingesetzt. Der Heiztemperaturbereich liegt zwischen 25° C und 310° C bei einer Heizleistung von 600 W. Der Drehzahlbereich liegt zwischen 0 und 1500 rpm.

*Molekularsieb*

Das Molekularsieb 4A vom Typ 514 in Perlform der Firma Carl Roth (Karlsruhe, Deutschland) wurde verwendet (Artikelnummer: 8471.2).

*Rasterelektronenmikroskop*

Zur bildlichen Aufnahme der CNTs kam das Rasterelektronenmikroskop LEITZ AMR - 1000 zum Einsatz. Der Vergrößerungsbereich reicht von 10 : 1 bis 100.000 : 1.

*Spiral-Tageslichtlampe*

Zur Beleuchtung der Proben kam eine Spiral-Tageslichtlampe der Firma Walimex zum Einsatz. Diese hat eine Nenn- bzw. Bemessungsleistungsaufnahme von 125 W. Die Farbtemperatur beträgt 5400 K und der Farbwiedergabeindex Ra 82-85. Die Spiral-Tageslichtlampe befand sich in dem Lampenschirm Helios BIGLAMP 501 Mega matt der Firma B.I.G. Brenner Import- und Großhandels GmbH (Weiden). Der Aluminium-Reflektor hat einen Durchmesser von 30 cm.

*Sputter*

Zur Aufnahme der REM-Bilder der CNTs wurden die Proben mit dem SC7620 Mini Sputter Coater der Firma Quorum Technologies behandelt. Das Sputtern erfolgte 90 Sekunden lang unter Argon-Atmosphäre bei einem Strom von 18 mA. In dem Sputter wird ein Gold-Palladium-Target verwendet.

*Spiegelreflexkamera*

Die gezeigten Photographien wurden mittels der digitalen Spiegelreflexkamera Olympus E-5 der Firma Olympus (Shinjuku, Japan) aufgenommen. Als Objektiv wurde das Olympus Zuiko Digital ED 12-60mm, F2.8-4.0 SWD verwendet.

*Temperatur-Messgerät*

Die Temperatur wurde während den Nitrierungen mittels eines VOLTCRAFT K101 Temperatur-Messgerätes der Firma Voltcraft (Wollerau, Deutschland) gemessen. Dieses kann Temperaturen von -200 bis +1370 ° C anzeigen. Als Temperaturfühler wurde ein Thermoelement PT100 eingesetzt.

*Thermo-Mikrowaage*

Die Thermogramme wurden an der Thermo-Mikrowaage TG 209 F1 Libra® der Firma NETZSCH (Selb, Deutschland) aufgenommen.

*Ultraschallprozessor*

Für die Dispergierung der CNTs wurde der Ultraschallprozessor UP400S (400 Watt, 24kHz) der Firma Hielscher Ultrasonics (Teltow, Deutschland) verwendet. Die Titan-Sonotrode hat einen Durchmesser von 22 mm.

*UV/Vis-Spektrometer*

Die UV/Vis-Spektren wurden an einem Varian Cary 100 Scan UV/Vis Spectrophotometer der Firma VARIAN (Santa Clara, USA) bei 25° C aufgenommen. Für die Messungen wurden 3 mL-Quarzküvetten mit einer Breite von 10 mm verwendet. Außerdem wurde die Finnpipette® F3 der Firma Thermo Scientific zum Befüllen der Quarzküvetten eingesetzt. Mittels dieser Pipette können Volumen von 100 bis 1000 μL übertragen werden.

*Vakuum-Pumpsystem*

Das Vakuum-Pumpsystem PC 2004 VARIO der Firma Vacuubrand (Wertheim, Deutschland) kam zum Einsatz. Mit einem maximalen Saugvermögen von 3,8 $m^3/h$ ist ein Endvakuum von bis zu 2 mbar erreichbar.

*Vakuum-Trockenschrank*

Die Proben wurden in dem Vakuum-Trockenschrank APT.line™ BD (E2) der Firma Binder (Tuttlingen, Deutschland) getrocknet.

*Zentrifuge*

Es wurde die Beckman J2-21 Zentrifuge der Firma Beckman Coulter (Brea, Kalifornien) verwendet. Die Leistung beträgt 5000 W. Die kinetische Energie beläuft sich auf 175300 Nm. Für die Zentrifugation kam der Rotor JA-14 zum Einsatz. Es können bis zu 50400 g erreicht werden.

*3.2 Hammett-Parameter*

In der folgenden Tabelle sind die Hammett-Parameter einiger ausgewählter Substituenten, die von Corwin Hansch bestimmt wurden, nach der Größe des mesomeren Effekts geordnet. Tabelle 19: Hammett-Parameter verschiedener Substituenten ( C. Hansch, A. LEO und R. W. Taft, "A Survey of Hammett Substituent Constants and Resonance and Field Parameters," Chemical Reviews, pp. 165-195, 1991.)

| Nr. | Substituent | $\sigma_m$ | $\sigma_p$ | $\sigma_m$-$\sigma_p$(≈ ± M) |
|---|---|---|---|---|
| **31** | NO | 0,62 | 0,91 | -0,29 |
| **325** | $CH=C(CN)_2$ | 0,66 | 0,84 | -0,18 |
| **84** | CN | 0,56 | 0,66 | -0,10 |
| **64** | COCl | 0,51 | 0,61 | -0,10 |
| **118** | COOH | 0,37 | 0,45 | -0,08 |
| **127** | $CONH_2$ | 0,28 | 0,36 | -0,08 |
| **32** | $NO_2$ | 0,71 | 0,78 | -0,07 |
| **117** | CHO | 0,35 | 0,42 | -0,07 |
| **66** | $CCl_3$ | 0,4 | 0,46 | -0,06 |
| **175** | C≡CH | 0,21 | 0,23 | -0,02 |
| **189** | $CH_2CN$ | 0,16 | 0,18 | -0,02 |
| **101** | $CHCl_2$ | 0,31 | 0,32 | -0,01 |
| **120** | $CH_2Cl$ | 0,11 | 0,12 | -0,01 |
| **43** | H | 0 | 0 | 0,00 |
| **193** | $CH=CH_2$ | 0,06 | -0,04 | 0,10 |
| **5** | Cl | 0,37 | 0,23 | 0,14 |
| **2** | Br | 0,39 | 0,23 | 0,16 |
| **28** | I | 0,35 | 0,18 | 0,17 |
| **58** | $NH_3^+$ | 0,86 | 0,6 | 0,26 |
| **15** | F | 0,34 | 0,06 | 0,28 |
| **45** | OH | 0,12 | -0,37 | 0,49 |
| **51** | $NH_2$ | -0,16 | -0,66 | 0,50 |

In dieser Tabelle wird $NH_3^+$ ein positiver mesomerer Effekt zugesprochen (M = 0,26). Allerdings kann nicht nachvollzogen werden, dass dieser Substituent einen +M-Effekt aufweisen soll. Um diesen Substituent zu untersuchen, wurde Anilin-Hydrochlorid als Elektronenmangelverbindung in den Versuchsreihen aufgenommen. Im Experiment (siehe Abschnitt 2.1) ließ sich keinerlei π-Wechsefwirkung des Anilin-Hydrochlorids feststellen.

*3.3 Diagramme zur Bestimmung der Bildungskonstanten und Extinktionskoeffizienten von Charge- Transfer-Komplexen*

In Figur 64 sind die Diagramme abgebildet, die zur Berechnung der Bildungskonstanten und Extinktionskoeffizienten der Charge-Transfer-Komplexe erstellt worden sind.

*3.4 Berechnung des Molekulargewichtes und des Nitrierungsgrades der nitrierten Polystyrole*

Die folgenden Berechnungen beruhen auf der Annahme, dass bei den Nitrierungen kein Polymerkettenabbau stattgefunden hat. Somit bleibt der Polymerisationsgrad nach der Nitrierung erhalten.

*3.4.1 Molekulargewicht*

Der Polymerisationsgrad *P* des verwendeten Polystyrols (PS) und das Molekulargewicht der nitrierten Polystyrole werden folgendermaßen berechnet.

$$P = \frac{M_{PS}}{M_{Styrol}}$$

$$M_{monon.PS} = M_{PS} - P \cdot M_{\frac{1}{2}H_2} + P \cdot M_{NO_2}$$

$$M_{din.PS} = M_{PS} - P \cdot 2 \cdot M_{\frac{1}{2}H_2} + P \cdot 2 \cdot M_{NO_2}$$

$$M_{trin.PS} = M_{PS} - P \cdot 3 \cdot M_{\frac{1}{2}H_2} + P \cdot 3 \cdot M_{NO_2}$$

Die hierzu notwendigen Molekulargewichte sind in der Tabelle 20 zusammengefasst.

Tabelle 20: Molekulargewicht von Styrol, Wasserstoff und einer Nitro-Gruppe

| | Styrol | Wasserstoff | Nitro-Gruppe |
|---|---|---|---|
| **Molekulargewicht M [g·mol$^{-1}$]** | 104,15 | 1,008 | 46,010 |

*3.4.2 Nitrierungsgrad der Mononitrierung*

Um den Nitrierungsgrad zu berechnen muss die Anzahl (*AZ*) an nitrierten Styrol-Gruppen bekannt sein. Mittels der folgenden Gleichungen und der durch die GPC-Messung ermittelten Molekulargewichte wird die Anzahl an nitrierten Styrol-Gruppen folgendermaßen berechnet.

$$AZ_{mononStyGr.} = \frac{M_{monon.PS\exp} - M_{PS}}{M_{NO_2} - M_{\frac{1}{2}H_2}}$$

Mittels dieser Werte kann schließlich der Nitrierungsgrad (NG) berechnet werden.

$$NG_{Monon.} = \frac{AZ_{mononStyGr}}{P}$$

*3.4.3 Nitrierungsgrad der Dinitrierung*

Die Berechnung des Nitrierungsgrades der Dinitrierung beruht auf der Annahme, dass zunächst alle Styrol-Gruppen vollständig mononitriert werden. Somit gilt für das Molekulargewicht der durch Dinitrierung zugefügten Nitro-Gruppen folgende Gleichung:

$$M_{zugNO_2-Gr} = M_{dinPS\exp} - M_{mononPS}$$

Nun kann die Anzahl der zusätzlichen Nitrogruppen bestimmt werden.

$$AZ_{zusNO_2-Gr} = \frac{M_{zugNO_2-Gr}}{M_{NO_2} - M_{\frac{1}{2}H_2}}$$

Dadurch ergibt sich für den Nitrierungsgradj:|

$$NG_{Din} = \frac{AZ_{zusNO_2-Gr}}{P}$$

Der Nitrierungsgrad der Trinitrierung kann mit den Werten der GPC-Messung nicht berechnet werden, da das Molekulargewicht des Polystyrols nach der Nitrierung gesunken ist.

*3.5 g-Zahl-Berechnung*

Für die Zentrifugation wurde der Rotor JA-14 der Firma Beckman Coulter verwendet. In diesem Rotor können sechs 250 mL-Z.entrifugen-Gefäße platziert werden. In der Figur 65 ist die Geometrie dieses Rotors dargestellt. Die Radien ($r_{max}$, $r_{av}$, $r_{min}$) sind für 250 mLr Zentrifugenröhrchen angegeben (siehe Tabelle 21).

Da für die Untersuchungen in dieser Arbeit Adapter-Einsätze verwendet wurden, konnten 50 mL-Zentrifug en-Gefäße eingesetzt werden. Deswegen müssen die in der Figur 65 angegebenen Radien $r_{max}$ und $r_{min}$ um die Wandstärke dieser Einsätze (15 mm) korrigiert werden. Die korrigierten Werte sind in der folgenden Tabelle 21 dargestellt.

Tabelle 21: Angegebene und korrigierte Werte für die Radien des Rotor JA-14 von Beckman Coulter (Beckman Coulter, *Beckman Coulter JA-14 Fixed Angle Rotor Manual,* 2014.)

| | $r_{max}$ **[mm]** | $r_{av}$ **[mm]** | $r_{min}$ **[mm]** |
|---|---|---|---|
| **Angegebene Werte** | 137 | 86 | 35 |
| **Korrigierte Werte** | 122 | 86 | 50 |

Mittels der folgenden Gleichungen wurden die relativen Zentripetalbeschleunigungen $a_Z$ für die korrigierten Radien aus Tabelle 21 als Vielfaches der Erdbeschleunigung *g* berechnet.

$$a_Z = \frac{r \cdot \omega^2}{g} \text{ mit } \omega = 2 \cdot \pi \cdot n_D$$

In diesen Gleichungen entspricht $n_D$ der Drehzahl und $\omega$ der Winkelgeschwindigkeit. Bei einer Drehzahl von 7000 U/min ergeben sich für die in der Tabelle 22 angegebenen korrigierten Radien folgende Zentripetalbeschleunigungen:

Tabelle 22: Zentripetalbeschleunigung als Vielfaches von *g* bei einer Rotor-Drehzahl von 7000 U/min

| $a_{Zmax}$ **· 9,81 m·s**$^{-2}$ | $a_{Zav}$ **· 9,81 m·s**$^{-2}$ | $a_{Zmin}$ **· 9,81 m·s**$^{-2}$ |
|---|---|---|
| 6683 | 4711 | 2739 |

*3.6 Berechnung der Massen der dispergierten CNTs*

Nach 24 Stunden Trocknung bei 90° C wird zunächst das Leergewicht der Probenbehälter $m_{leer}$ bestimmt.

Nach dem Befüllen der Zentrifugen-Röhrchen mit den CNTs, den Additiven und DMF werden die Proben sonotriert und anschließend die in DMF dispergierten CNTs mit einer Pipette abgezogen. Dabei kann nicht die gesamte Flüssigkeit abgezogen werden, da sonst auch nichtdispergierte CNTs entfernt werden. Die Menge an übrig gebliebener Flüssigkeit wird als $V_{rest}$ definiert.

Die Probenbehälter werden dann unter Vakuum bei 90° C für drei Tage getrocknet und anschließend gewogen ($m_{trocken}$). Dadurch kann folgende Massenänderung ($m_{diff}$) bestimmt werden.

$$m_{diff} = m_{trocken} - m_{leer}$$

Dadurch, dass bei allen Proben 10 mg Additiv in 40 mL DMF gelöst werden, ist die Konzentration bei diesen Proben konstant ($c$ = 0,25 mg/mL). Somit kann das Gewicht des Additivs bestimmt werden.

$$m_{Additiv} = c \cdot V_{rest}$$

Um den Einfluss der Probenbehälter auf die Gewichtsveränderung zu berücksichtigen, werden leere Zentrifugen-Röhrchen (Nullproben) zunächst für 24 Stunden bei 90° C im Ofen getrocknet und dann gewogen. Dann werden diese bei 90° C für drei Tage im Trockenschrank unter Vakuum getrocknet und wieder gewogen. Dabei kann ein mittlerer Gewichtsverlust von $m_{Verl}$ = 2,7 mg festgestellt werden.

Mit diesen Werten kann nun die Masse an nicht-dispergierten und dispergierten CNTs bestimmt werden.

$$m_{nichtdisp} = m_{diff} - m_{Additiv} + m_{Verl}$$

$$m_{disp} = 10\,\text{mg} - m_{nichtdisp}$$

Durch Subtraktion der in der Referenzprobe 4 (nur DMF) dispergierten Menge an CNTs wird schließlich die Masse der durch das Additiv dispergierten CNTs berechnet.

$$m_{dispAdditiv} = m_{disp} - m_{dispDMF}$$

In der folgenden Tabelle sind die gemessenen und berechneten Daten zusammengefasst.

Tabelle 23: Gewichtsbestimmung der Zentrifugen-Röhrchen

| **Probennummer** | **4** | **5** | **6** | **7** | **8** |
|---|---|---|---|---|---|
| Gewicht der leeren Zentrifugen-Röhrchen $\boldsymbol{m_{leer}}$ [g] | 10,4595 | 10,4542 | 10,4515 | 10,4477 | 10,4461 |
| Gewicht der Zentrifugen-Röhrchen nach dem Sonotrieren und Trocknen | 10,4599 | 10,4549 | 10,4511 | 10,4462 | 10,4473 |
| $\boldsymbol{m_{trocken}}$ [g] Differenz $\boldsymbol{m_{diff}}$ [mg] | 0,4 | 0,7 | -0,4 | -1,5 | 1,2 |
| Restvolumen $\boldsymbol{V_{rest}}$ [mL] | 6 | 3 | 1,5 | 1,3 | 6 |
| Masse an Additiv in Zentrifugen-Röhrchen $\boldsymbol{m_{Additiv}}$ [mg] | - | 0,8 | 0,4 | 0,3 | 1,5 |
| Differenz ohne Additiv und mit zusätzlicher Beachtung der Nullproben $\boldsymbol{m_{nichtdisp}}$ [mg] | 3,1 | 2,6 | 1,9 | 0,8 | 2,4 |
| Dispergierte CNTS $\boldsymbol{m_{disp}}$ [mg pro 10 mg Additiv] | 6,9 | 7,4 | 8,1 | 9,2 | 7,6 |
| Durch das Additiv dispergierte CNTS $\boldsymbol{m_{dispAdditiv}}$ [mg pro 10 mg Additiv] | - | 0,4 | 1,2 | 2,2 | 0,7 |

*4 Elektronenmangel-Copolymer*

*4.1 Elektronenmangel-Block-Copolymer*

Figur 66 zeigt beispielhaft ein erfindungsgemäßes Elektronenmangelpolymer. Das Polymer ist ein Block-Copolymer mit einem Elektronenmangel-Block, der im Beispiel ein Dinitropolystyrol ist (die Repetitionseinheiten sind die Elektronenmangelverbindungen Dinitrostyrol) und einem weiteren Block, der im Beispiel ein Polyethylen ist. Während der Dinitropolystyrol-Block dank der $\pi$-Wechselwirkung für das Kohlenstoffnanomaterial, im Beispiel eine Kohlenstoffnanoröhre, affin ist, ist der weitere Block für das Polymer, in dem das Kohlenstoffnanomaterial dispergiert werde soll, affin.

*4.2 Beispiel der Gewinnung eines Elektronenmangelpolymers*

*4.2.1 Synthese eines Poly-(styrol-co-isoprens)*

Die Synthese des Poly-(styrol-co-isopren) Blockcopolymers erfolgte, wie in Figur 67 dargestellt, über eine anionische Polymerisation bei Raumtemperatur. Dafür wurde ein über Nacht bei 120° C getrockneter Schlenk-Kolben (100 mL) mit einem Septum verschlossen und bei geöffnetem Hahn mit einem Heißluftfön ausgeheizt. Nach dem Abkühlen des Kolbens wurde dieser mit der Hilfe eines Ballons und einer Kanüle über das Septum mit Argon geflutet. Dies geschah bei geöffnetem Hahn über einer Zeitraum von 15 Minuten. Um das Eintreten von Luft in den Kolben zu verhindern, wurde der Argonballon während der Reaktion nur entfernt, um ihn neu zu befüllen. Die Zugabe des Lösungsmittels, des Initiators und der Edukte erfolgte nur mit Spritzen über das Septum bei geöffnetem Hahn. Während der Reaktion wurde der Hahn geschlossen.

In das sauerstoff- und wasserfreie Reaktionsgefäß wurden 50 mL Cyclohexan (vorgetrocknet und frisch destilliert) als Lösungsmittel vorgelegt. Dazu wurde vorsichtig n-BuLi (1,6 M in Cyclohexan) zugetropft, bis eine leichte Gelbfärbung eintrat, die nach 10 Minuten Rühren nicht mehr verschwand. Dann wurden weitere 100 $\mu$L (0,16 mmol) n-BuLi hinzugegeben. Nach 15 Minuten Rühren sind 13,32 mL (9,06g = 133 mmol) Isopren (vorgetrocknet und frisch destilliert) in den Kolben gespritzt worden. Die Reaktionsmischung wurde 24 Stunden gerührt, wobei sich während der ersten 2 Stunden die Gelbfärbung weiter intensivierte.

Am nächsten Tag erfolgte die Zugabe von 4,52 mL (4,10 g = 39,5 mmol) Styrol (vorgetrocknet und frisch destilliert), woraufhin eine hellorange Farbe auftrat, die sich im Laufe der Zeit zu Rot verfärbte. Nach 17 Stunden Rühren wurde die Reaktion mit einer kleinen Menge Methanol abgebrochen. Dabei verschwand die Färbung der Reaktionsmischung.

Die Lösung wurde in 500 mL eisgekühltes Methanol, in dem 0,26 g 2,6-Di-tert.-butyl-p-cresol gelöst waren, über einen Glasstab präzipitiert. Der erhaltene weiße Feststoff hatte eine harzartige Konsistenz. Zur Reinigung wurde das erhaltene Polymer nach dem Abnutschen dreimal mit je 50 mL kaltem Methanol gewaschen und 2 Tage in einem Vakuumofen bei 40° C getrocknet. Das Produkt waren 11,62 g eines weißlichen Polymers, dies entspricht einer Ausbeute von 88,3 %.

4.2.2 Hydrierung des Poly-(styrol-co-isoprens)

Für die Hydrierung, wie in Figur 68 dargestellt, wurden in einem 500 mL Dreihalskolben 320 mL eines Xylol-Isomerengemisches vorgelegt und in diesem 6,25 g des Poly-(styrol-co-isopren) Blockcopolymers unter Rühren gelöst. Diese Menge enthält eine Anzahl von ca. 63 mmol Doppelbindungsäquivalenten. Der Reaktionsmischung wurde während der Reaktion über ein Glasröhrchen Stickstoff zugeführt, zusätzlich befand sich ein Rückflusskühler auf dem Kolben. Nach dem Erhitzen auf 135° C durch ein Ölbad wurden 23,44 g (126 mmol) p-Toluolsulfonylhydrazid über einen Pulvertrichter hinzugegeben und die Apparatur verschlossen. Das Gemisch wurde danach 17 Stunden gerührt.

Die noch heiße Lösung wurde in 700 mL eisgekühltem Methanol über einen Glasstab langsam ausgefällt. Nach dem Abnutschen wurde das Polymer zweimal mit 100mL heißen Wasser gewaschen und über Nacht bei 50° C in einem Vakuumofen getrocknet. Das Produkt waren 5,37 g eines durchsichtigen Polymers, dies entspricht einer Ausbeute von 84,3 %.

4.2.3 Nitrierung des Poly-(styrol-co-2-methylbutylen)-blockcopolymers

Bei der in Figur 69 dargestellten Nitrierung wurde auf einem 100 mL Dreihalskolben ein Rückflusskühler mit Trockenrohr und ein Temperaturmessfühler angebracht. In den Kolben sind 50 mL Chloroform vorgelegt worden, in dem über einem Zeitraum von einer Stunde unter Rühren 1,77 g des Copolymers gelöst wurden. Zur Kühlung stand eine Kältemischung aus Calciumchlorid und Eis im Verhältnis von 1:1 bereit. In einem Becherglas im Eisbad wurde aus 5 mL Salpetersäure (w>99 %) und 7 mL Schwefelsäure (w=96 %) Nitriersäure vorbereitet. Nachdem die Chloroform-Polymerlösung auf -10° C abgekühlt war, ist über einen Tropftrichter mit Druckausgleich vorsichtig die Nitriersäure zugetropft worden, so dass die Temperatur 0° C nicht überschritt. Dann wurde 3 Stunden bei Raumtemperatur gerührt. Es trat eine braun-gelbe Verfärbung auf, nach einiger Zeit konnte ein gelblicher Feststoff erkannt werden, der sich absetzte.

Die Reaktionslösung wurde unter Entwicklung weißen Rauches vorsichtig in 200 mL eiskaltes Isopropanol präzipitiert. Es entstand ein gelber Feststoff, der abgenutscht und zweimal mit 50 mL kaltem Isopropanol gewaschen wurde. Zur weiteren Reinigung wurde der Feststoff in 100 mL DMF gelöst, die Lösung filtriert und dann in 500 mL Wasser ausgefällt. Nach dem Abnutschen wurde viermal mit 100 mL Wasser und 2 mal mit 50 mL Isopropanol gewaschen. Das Produkt waren 1,74 g eines gelben Pulvers, dies entspricht einer Ausbeute von 79,6 % unter der Annahme, dass eine vollständige Dinitrierung vorliegt. Die in der vorstehenden Beschreibung, den Ansprüchen und den Zeichnungen offenbarte Merkmale können sowohl einzeln als auch in beliebiger Kombination für die Verwirklichung der Erfindung in ihren verschiedenen Ausgestaltungen von Bedeutung sein.

## Patentansprüche

1. Dispersion eines Kohlenstoffnanomaterials in einem Dispergiermedium, wobei das Dispergiermedium ein Elektronenmangelpolymer und ein von dem Elektronenmangelpolymer verschiedenes Polymer enthält, **dadurch gekennzeichnet, dass** das Elektronenmangelpolymer ein Block-Copolymer ist.

2. Dispersion nach Anspruch 1, **dadurch gekennzeichnet, dass** das Elektronenmangelpolymer einen Elektronenmangelaromaten aufweist.

3. Dispersion eines Kohlenstoffnanomaterials in einem Dispergiermedium, wobei das Dispergiermedium ein Elektronenmangelpolymer enthält, wobei wenigstens ein Teil der Repetitionseinheiten des Elektronenmangelpolymers Elektronenmangelaromate sind, welche Elektronenmangelaromate mit einer oder mehreren elektronenziehenden Seitengruppen konjugiert sind, **dadurch gekennzeichnet, dass** das Dispergiermedium neben dem Elektronenmangelpolymer ein weiteres Polymer aufweist, das von dem Elektronenmangelpolymer verschieden ist.

4. Dispersion nach Anspruch 3, **dadurch gekennzeichnet, dass** das Elektronenmangelpolymer ein Copolymer ist.

5. Dispersion nach Anspruch 4, **dadurch gekennzeichnet, dass** das Elektronenmangelpolymer ein Block-Copolymer ist.

6. Dispersion nach einem der vorangehenden Ansprüche, **dadurch gekennzeichnet, dass** das Kohlenstoffnanomaterial Kohlenstoffnanoröhren umfasst.

7. Verwendung eines Elektronenmangelpolymers in einem Dispergiermedium zum Modifizieren des Dispergierverhaltens von Kohlenstoffnanomaterial in dem Dispergiermedium, wobei wenigstens ein Teil der Repetitionseinheiten des Elektronenmangelpolymers Elektronenmangelaromate sind, welche Elektronenmangelaromate mit einer oder mehreren elektronenziehenden Seitengruppen konjugiert sind; **dadurch gekennzeichnet, dass** das Dispergiermedium neben dem Elektronenmangelpolymer ein weiteres Polymer aufweist, das von dem Elektronenmangelpolymer verschieden ist.

8. Verfahren zum Herstellen eines polymerhaltigen Werkstoffs, bei dem eine Dispersion eines Kohlenstoffnanomaterials mit einem Dispergiermedium, das ein Elektronenmangelpolymer enthält, mit einem Polymer, das von dem Elektronenmangelpolymer verschieden ist, vermischt wird, **dadurch gekennzeichnet, dass** das Elektronenmangelpolymer ein Block-Copolymer ist.

## Claims

1. A dispersion of a carbon nanomaterial in a dispersion medium, wherein the dispersion medium contains an electron-deficient polymer and a polymer which is different from the electron-deficient polymer, **characterised in that** the electron-deficient polymer is a block copolymer.

2. The dispersion according to claim 1, **characterised in that** the electron-deficient polymer has an electron-deficient aromatic compound.

3. A dispersion of a carbon nanomaterial in a dispersion medium, wherein the dispersion medium contains an electron-deficient polymer, wherein at least part of the repetition units of the electron-deficient polymer are electron-deficient aromatic compounds, said electron-deficient aromatic compounds being conjugated with one or more electron-withdrawing side groups, **characterised in that** the dispersion medium has, besides the electron-deficient polymer, a further polymer which is different from the electron-deficient polymer.

4. The dispersion according to claim 3, **characterised in that** the electron-deficient polymer is a copolymer.

5. The dispersion according to claim 4, **characterised in that** the electron-deficient polymer is a block copolymer.

6. The dispersion according to one of the preceding claims, **characterised in that** the carbon nanomaterial comprises carbon nanotubes.

7. A use of an electron-deficient polymer in a dispersion medium to modify the dispersion behaviour of carbon nanomaterial in the dispersion medium, wherein at least part of the repetition units of the electron-deficient polymer are electron-deficient aromatic compounds, said electron-deficient aromatic compounds being conjugated with one or more electron-withdrawing side groups, **characterised in that** the dispersion medium has, besides the electron-deficient polymer, a further polymer which is different from the electron-deficient polymer.

8. A method for producing a polymer-containing material, in which a dispersion of a carbon nanomaterial with a dispersion medium which contains an electron-deficient polymer is mixed with a polymer which is different from the electron-deficient polymer, **characterised in that** the electron-deficient polymer is a block copolymer.

## Revendications

1. Dispersion d'un nanomatériau de carbone dans un milieu de dispersion, dans lequel le milieu de dispersion contient un polymère déficient en électrons et un polymère différent du polymère déficient en électrons, **caractérisé en ce que** le polymère déficient en électrons est un copolymère séquencé.

2. Dispersion selon la revendication 1, **caractérisée en ce que** le polymère déficient en électrons a un composé aromatique déficient en électrons.

3. Dispersion d'un nanomatériau de carbone dans un milieu de dispersion, dans lequel le milieu de dispersion contient un polymère déficient en électrons, dans lequel au moins une partie des unités de répétition du polymère déficient en électrons sont des composés aromatiques déficients en électrons, lesdits composés aromatiques déficients en électrons étant conjugués à un ou plusieurs groupes latéraux électroattractifs, **caractérisé en ce que** le milieu de dispersion contient, outre le polymère déficient en électrons, un autre polymère qui est différent du polymère déficient en électrons.

4. Dispersion selon la revendication 3, **caractérisée en ce que** le polymère déficient en électrons est un copolymère.

5. Dispersion selon la revendication 4, **caractérisée en ce que** le polymère déficient en électrons est un copolymère séquencé.

6. Dispersion selon l'une des revendications précédentes, **caractérisée en ce que** le nanomatériau de carbone comprend des nanotubes de carbone.

7. Utilisation d'un polymère déficient en électrons dans un milieu de dispersion pour modifier le comportement de dispersion de nanomatériaux de carbone dans le milieu de dispersion, dans lequel au moins une partie des unités de répétition du polymère déficient en électrons sont des composés aromatiques déficients en électrons, lesdits composés aromatiques déficients en électrons étant conjugués à un ou plusieurs groupes latéraux électroattractifs, **caractérisé en ce que** le milieu de dispersion contient, outre le polymère déficient en électrons, un autre polymère qui est différent du polymère déficient en électrons.

8. Méthode de production d'un matériau contenant des polymères, dans laquelle une dispersion d'un nanomatériau de carbone avec un milieu de dispersion contenant un polymère déficient en électrons est mélangée à un polymère différent du polymère déficient en électrons, **caractérisé en ce que** le polymère déficient en électrons est un

copolymère séquencé.

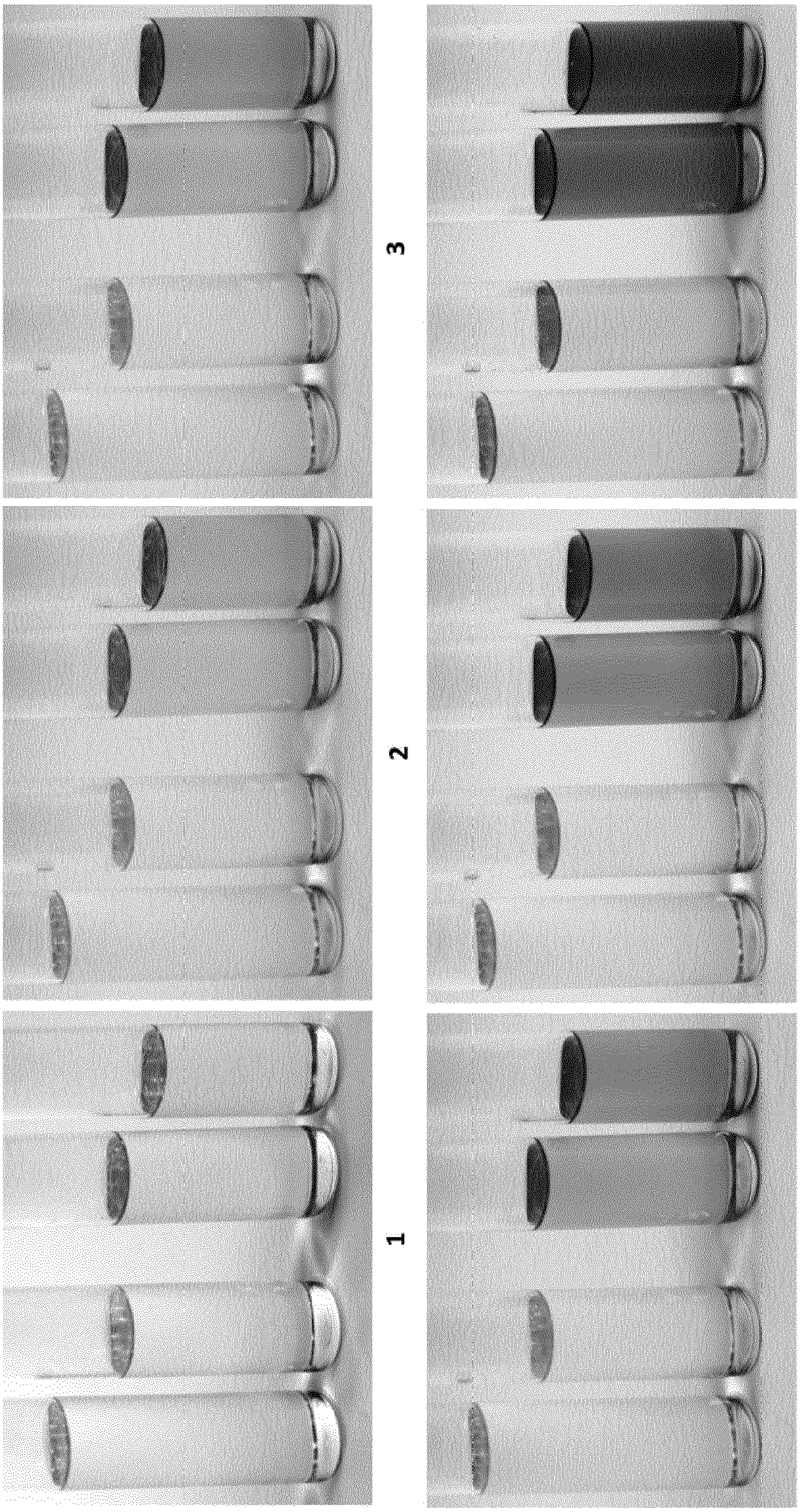


Figur 1

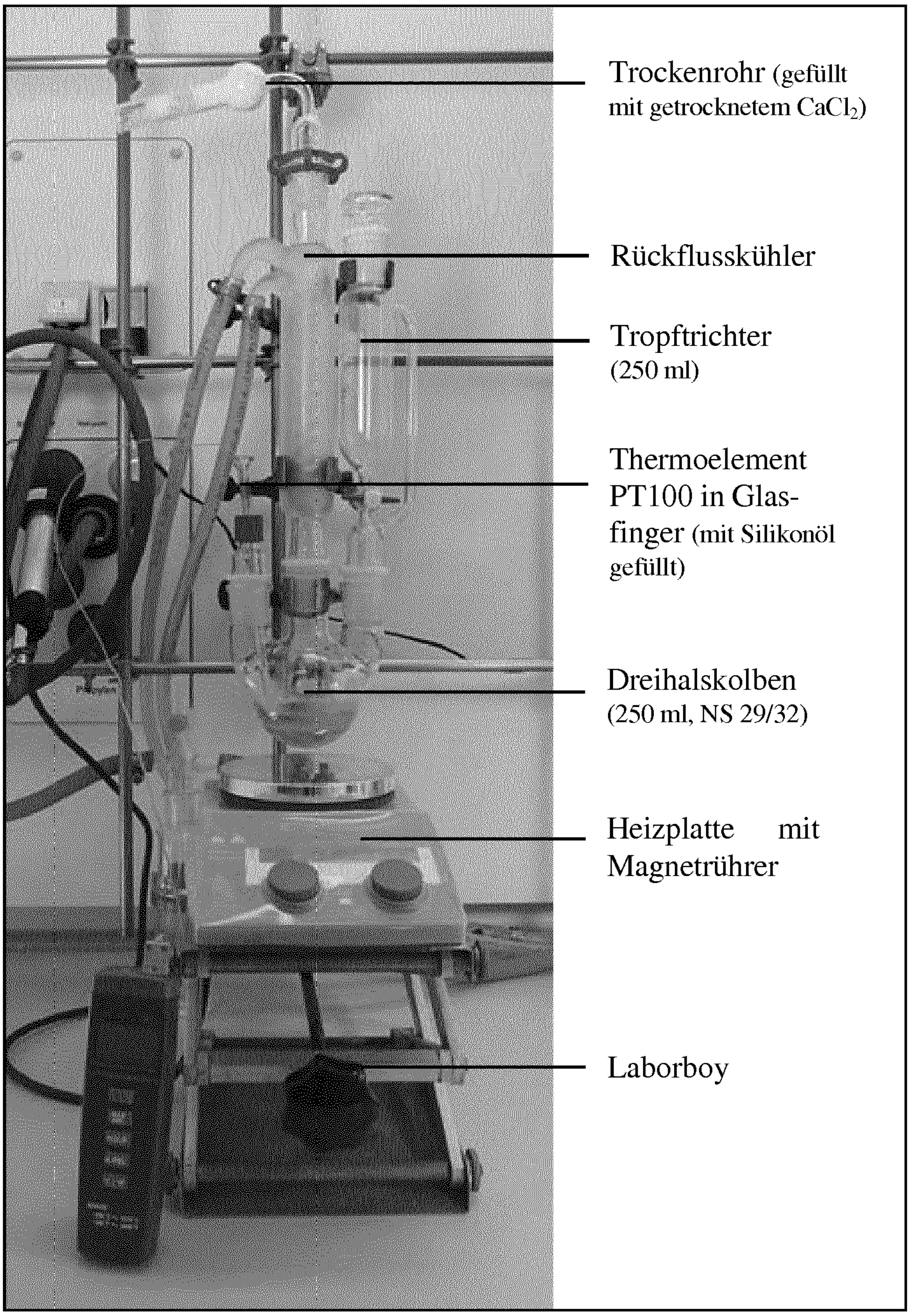
Trockenrohr (gefüllt mit getrocknetem $CaCl_2$)
Rückflusskühler
Tropftrichter (250 ml)
Thermoelement PT100 in Glasfinger (mit Silikonöl gefüllt)
Dreihalskolben (250 ml, NS 29/32)
Heizplatte mit Magnetrührer
Laborboy

Figur 2

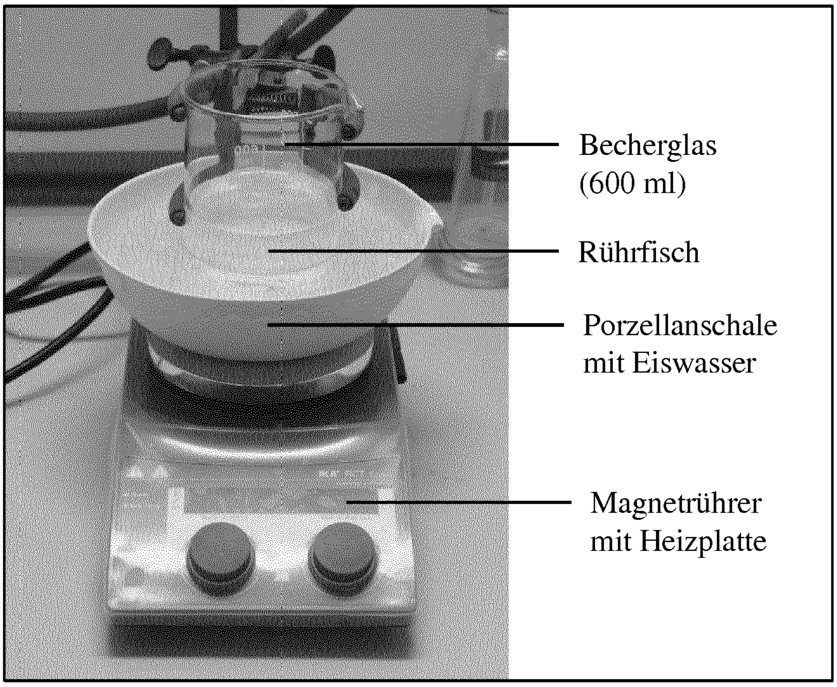


Figur 3

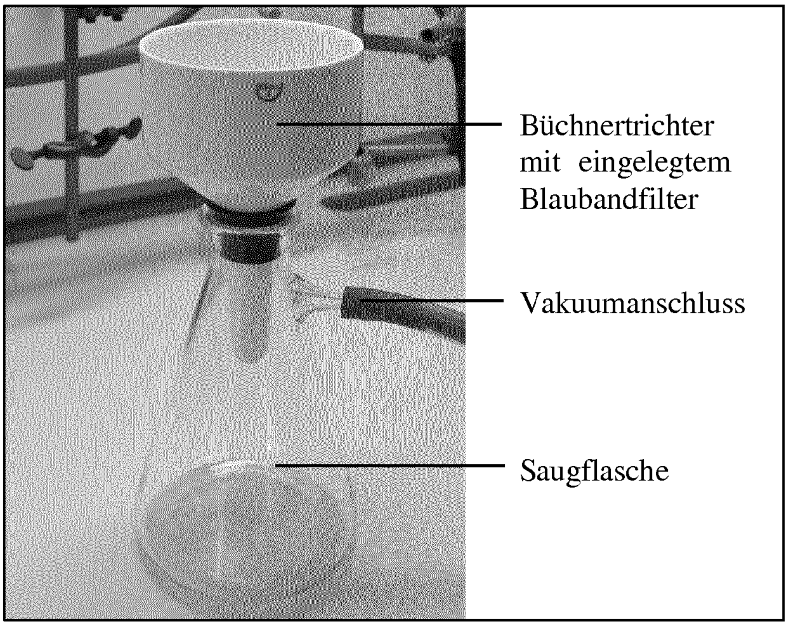


Figur 4

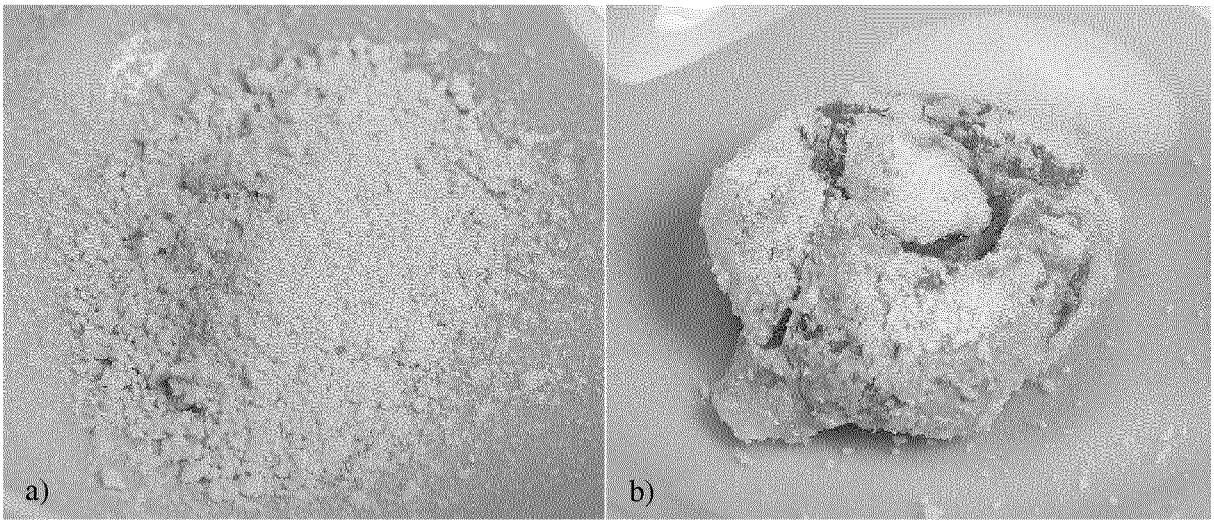


Figur 5

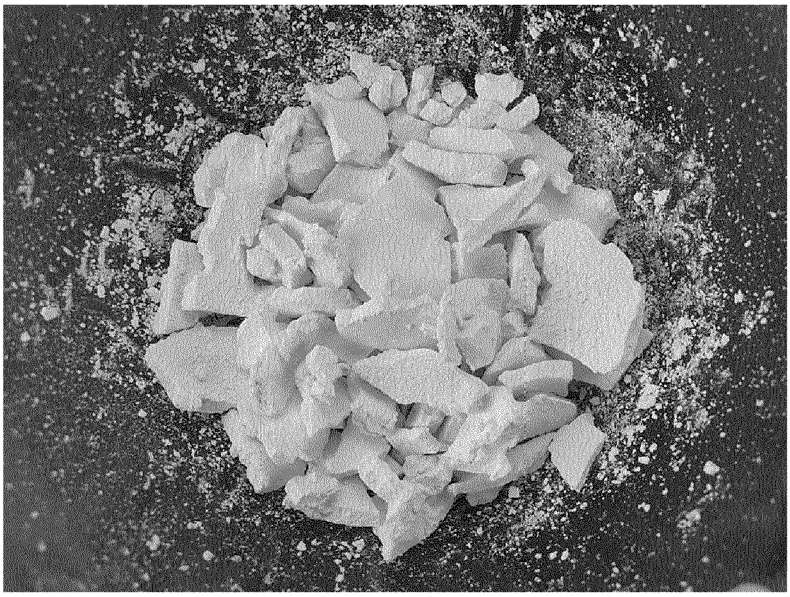

Figur 6

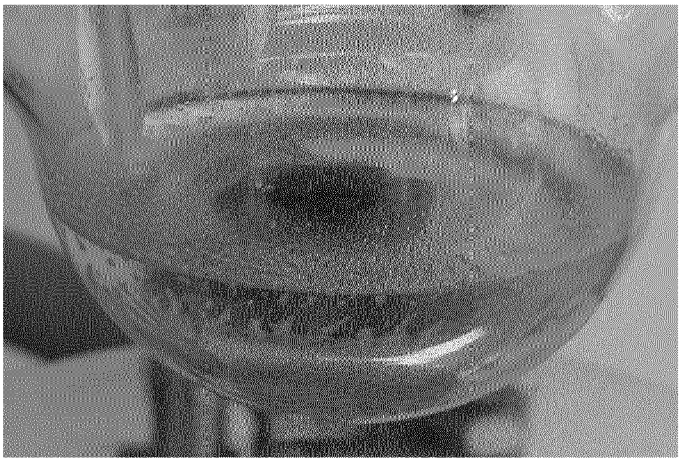

Figur 7

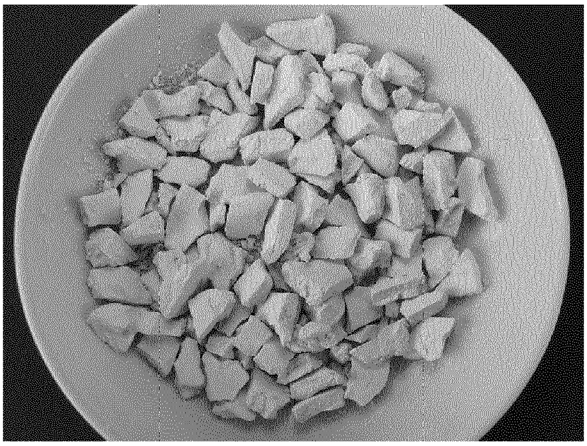

Figur 8

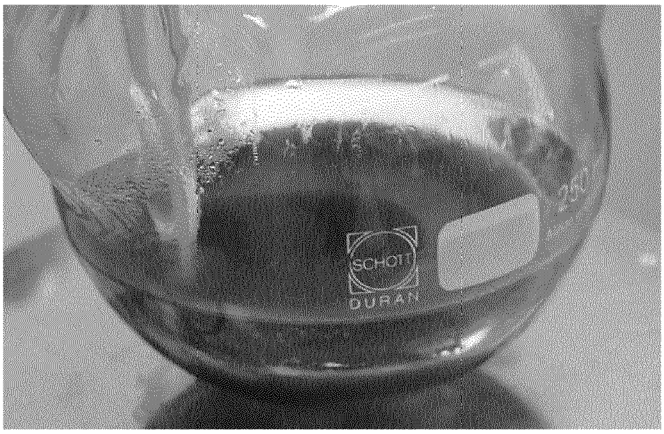


Figur 9

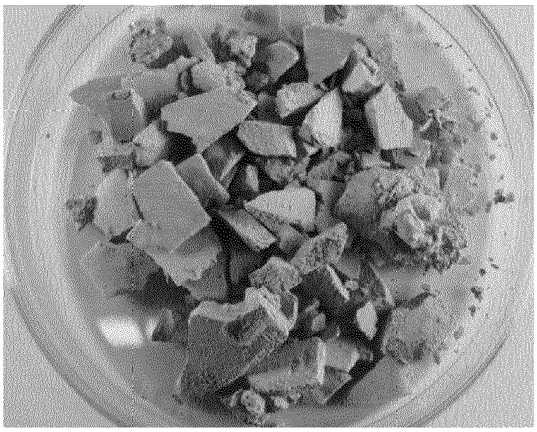

Figur 10

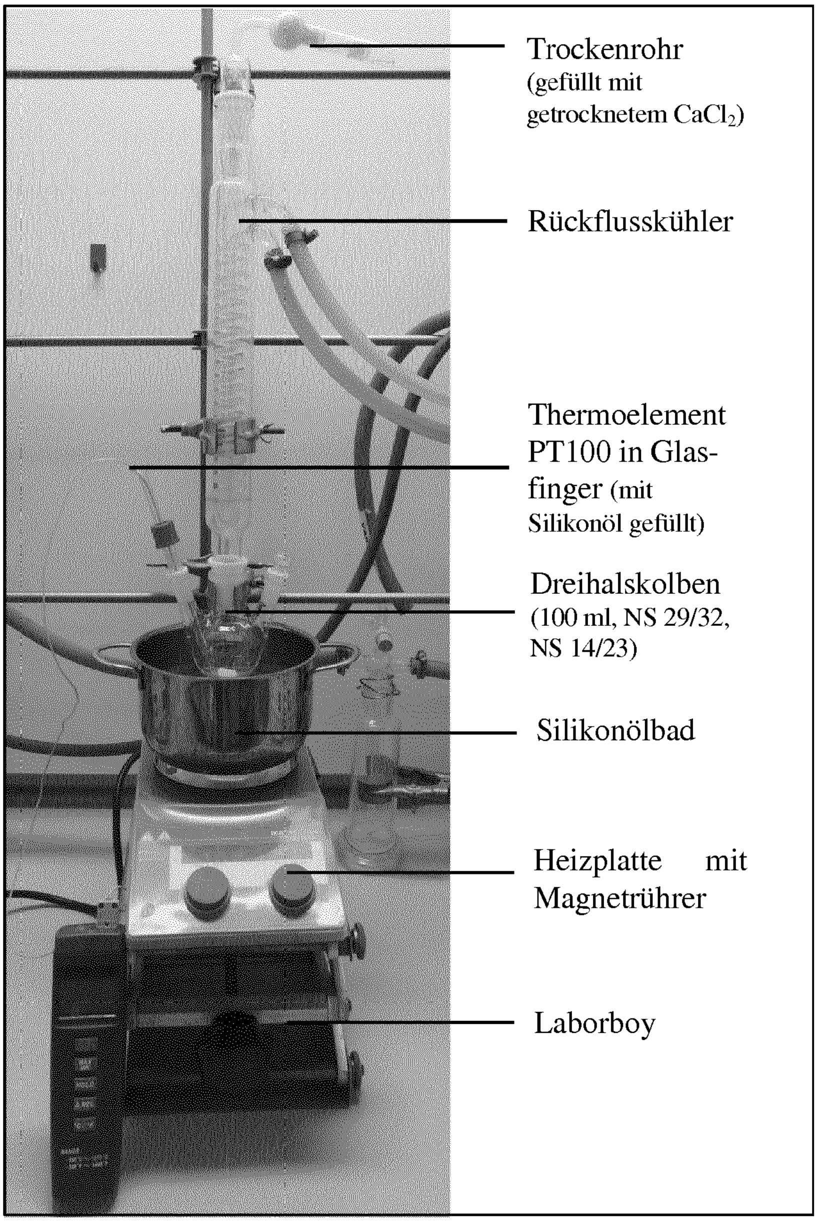
Trockenrohr (gefüllt mit getrocknetem $CaCl_2$)
Rückflusskühler
Thermoelement PT100 in Glasfinger (mit Silikonöl gefüllt)
Dreihalskolben (100 ml, NS 29/32, NS 14/23)
Silikonölbad
Heizplatte mit Magnetrührer
Laborboy

Figur 11

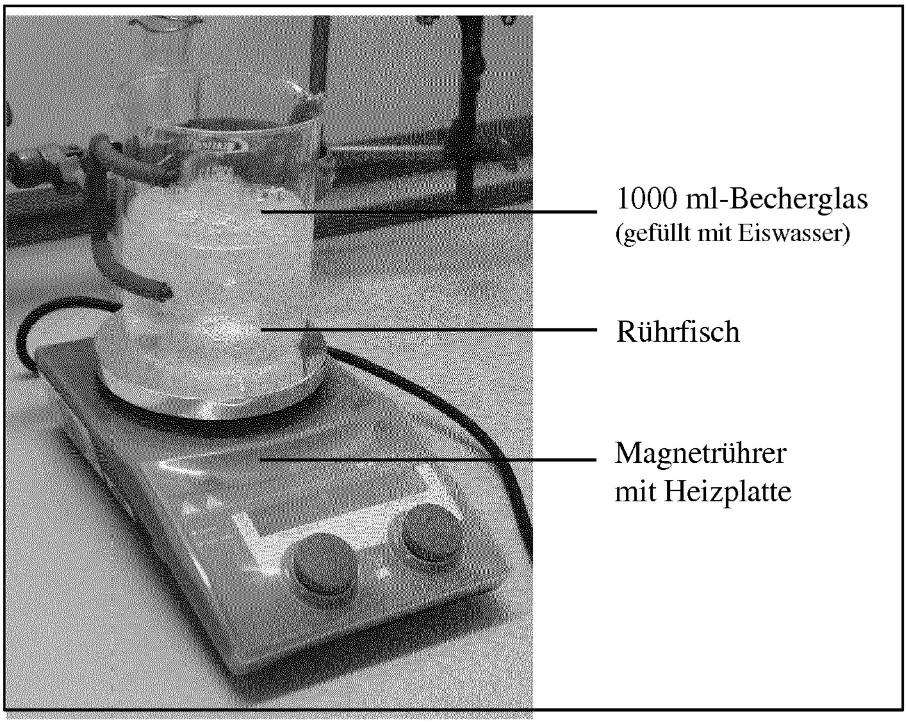


Figur 12

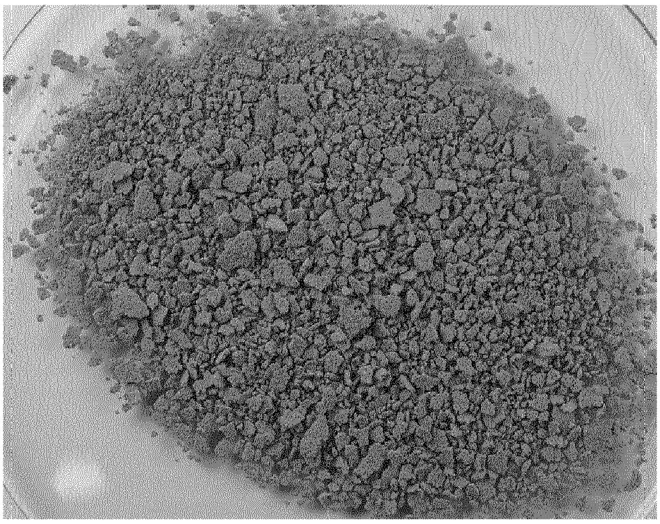

Figur 13

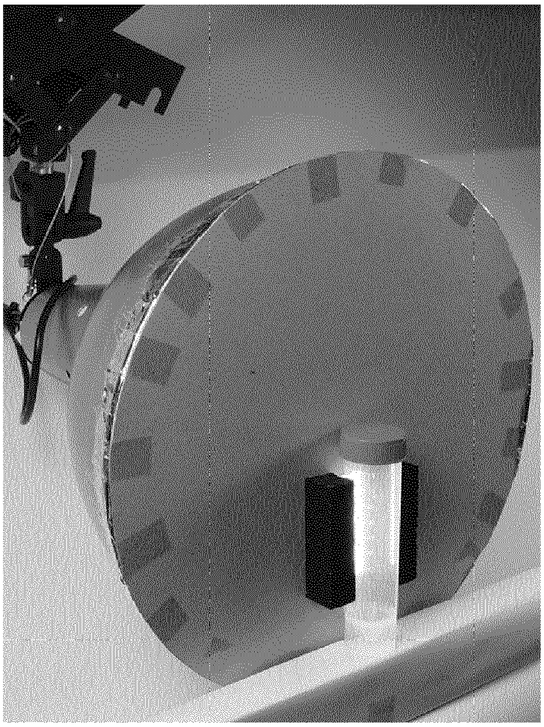

Figur 14

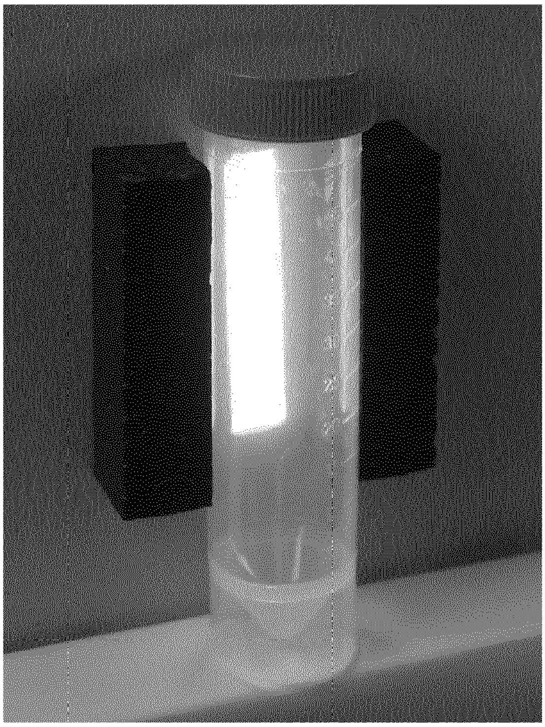

Figur 15

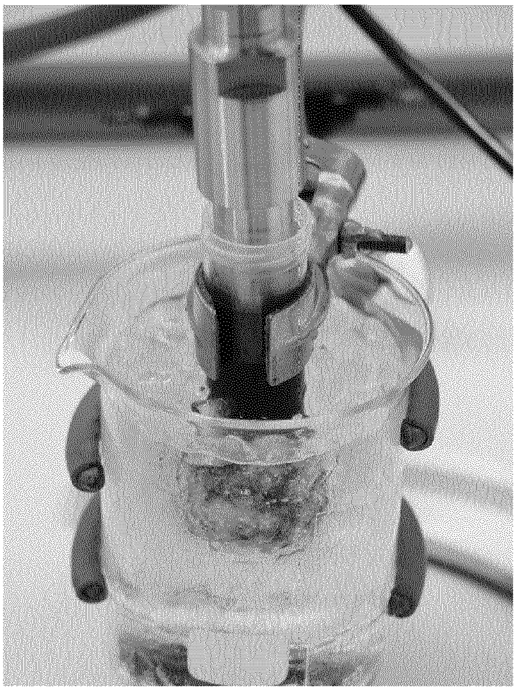

Figur 16

| Akzeptor | Pulver-Farbe | Farbe der Lösung in Chloroform | Farbe nach Naphthalin-Zugabe | Kristallbildung |
|---|---|---|---|---|
| **Chloranil** | gelb<br>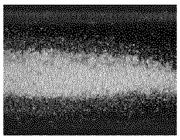 | gelb<br>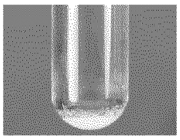 | orange<br>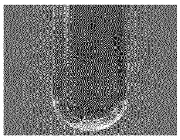 | nein<br>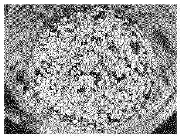 |
| **1,4-Benzo-chinon** | gelb<br>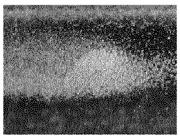 | gelb<br>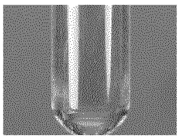 | gelb<br>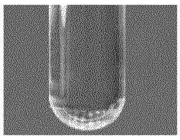 | nein<br>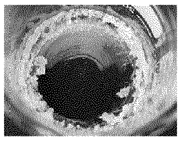 |
| **Cyanurchlorid** | weiß<br>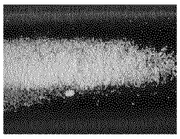 | farblos<br>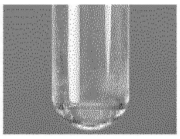 | farblos<br>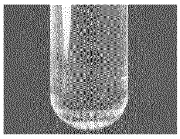 | nein<br>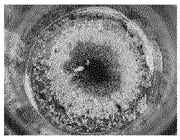 |
| **2,3-Dichlor-5,6-dicyano-1,4-benzochinon (DDQ)** | gelb/orange<br>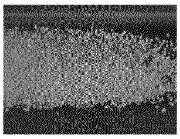 | gelb/orange<br>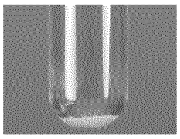 | dunkelgrün<br>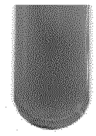 | ja<br>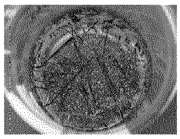 |
| **7,7,8,8-Tetra-cyanochino-dimethan (TCNQ)** | braun/grün<br>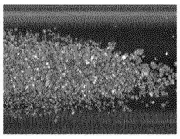 | braun/grün<br>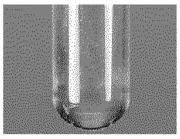 | braun/grün<br>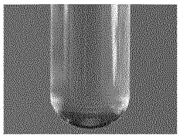 | nein<br>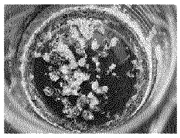 |
| **Tetracyano-ethylen (TCNE)** | grau<br>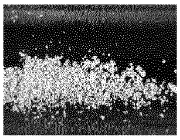 | farblos<br>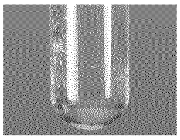 | violett<br>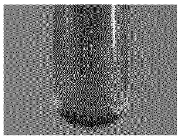 | ja<br>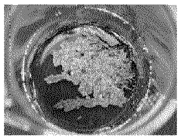 |
| **Nitrosobenzol** | beige<br>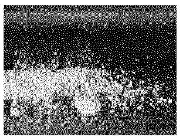 | blau<br>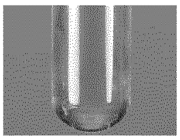 | blau<br>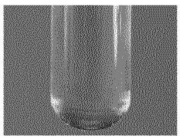 | nein<br>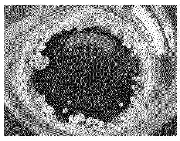 |
| **Anilin-hydrochlorid** | weiß<br>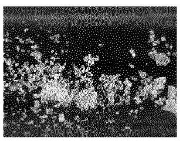 | farblos<br>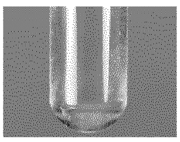 | farblos<br>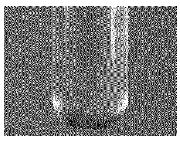 | nein<br>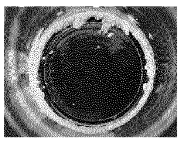 |

Figur 17

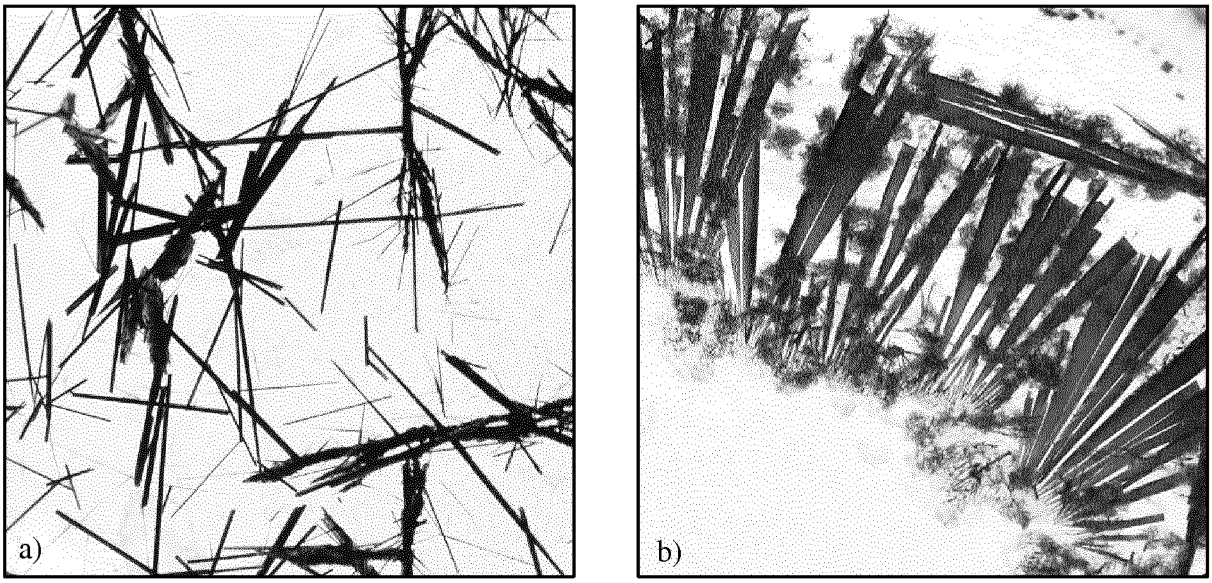


Figur 18

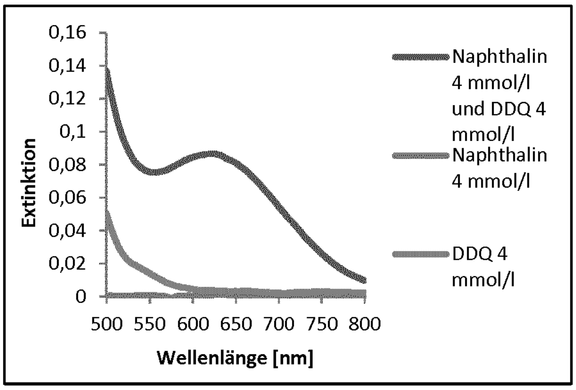


Figur 19

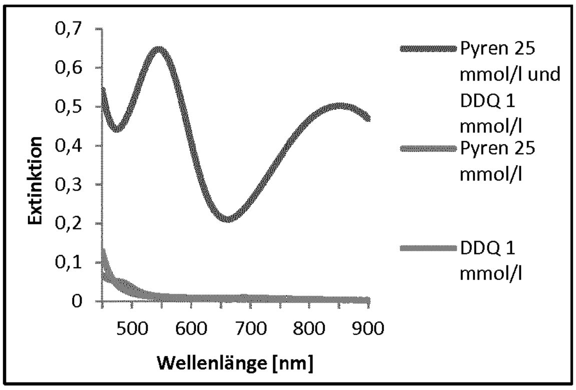


Figur 20

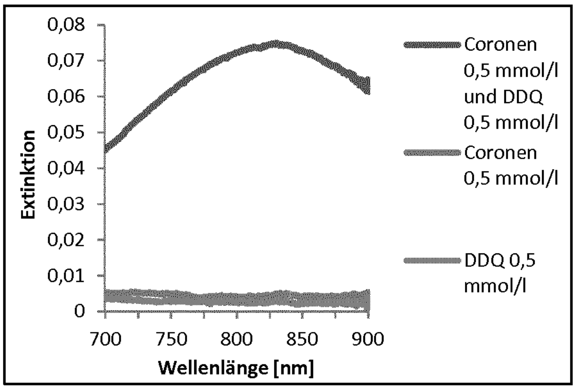


Figur 21

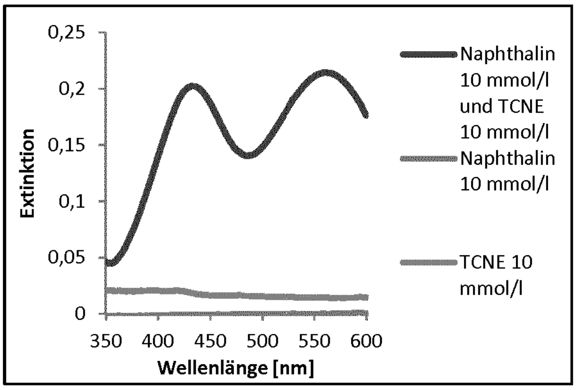


Figur 22

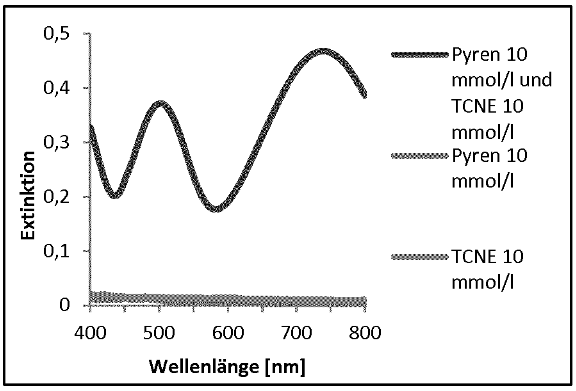


Figur 23

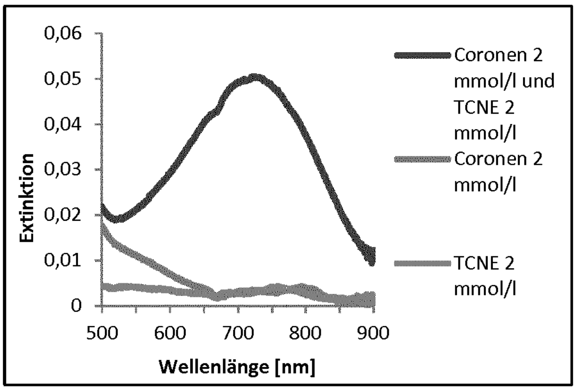


Figur 24

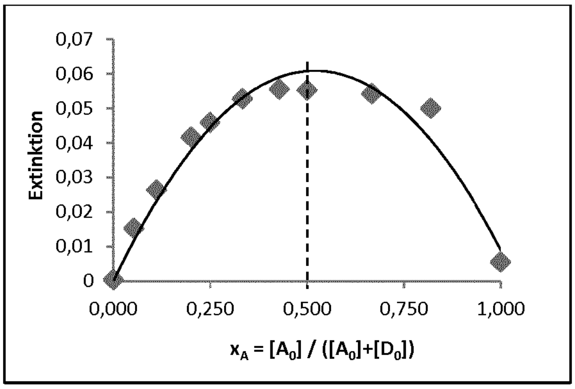


Figur 25

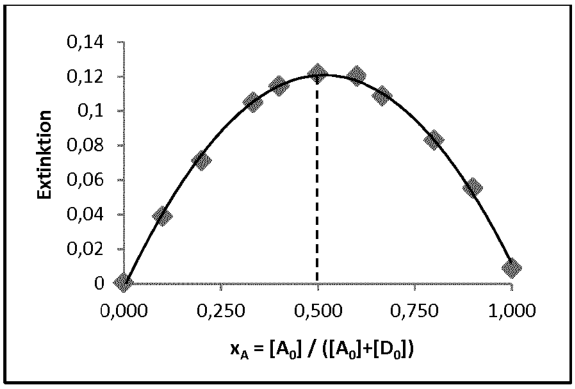


Figur 26

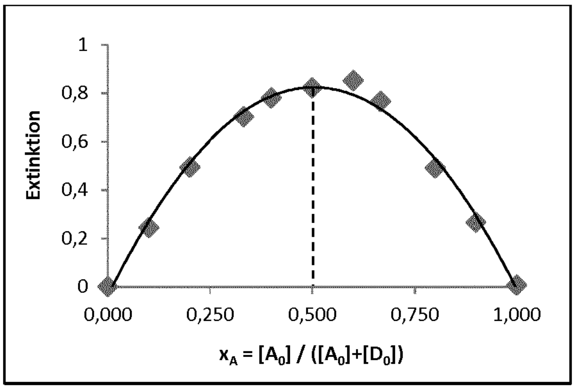


Figur 27

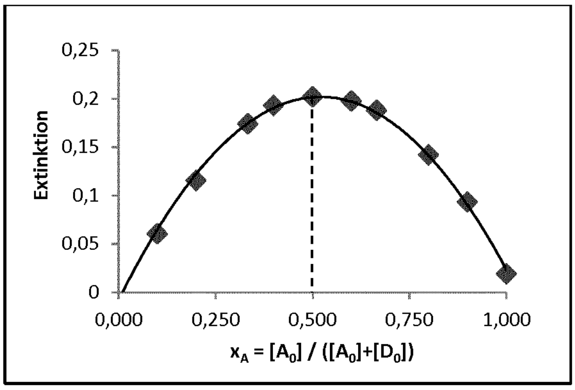


Figur 28

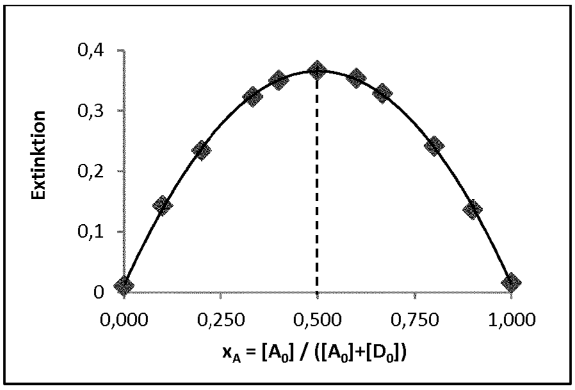


Figur 29

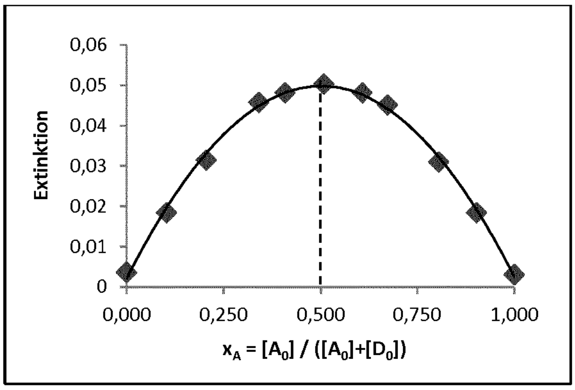


Figur 30

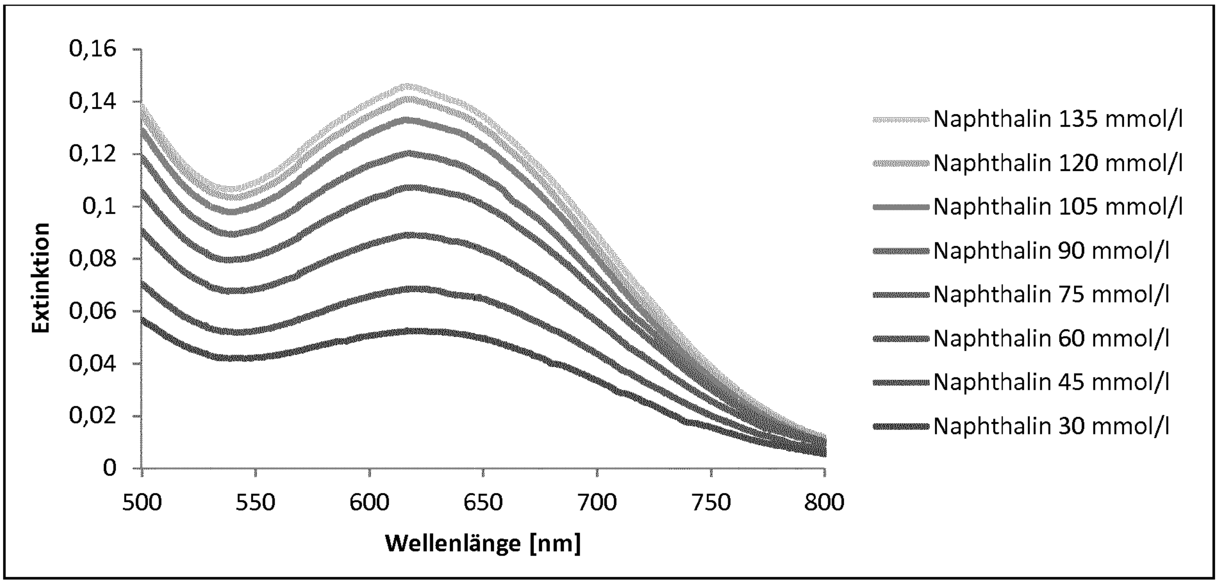


Figur 31

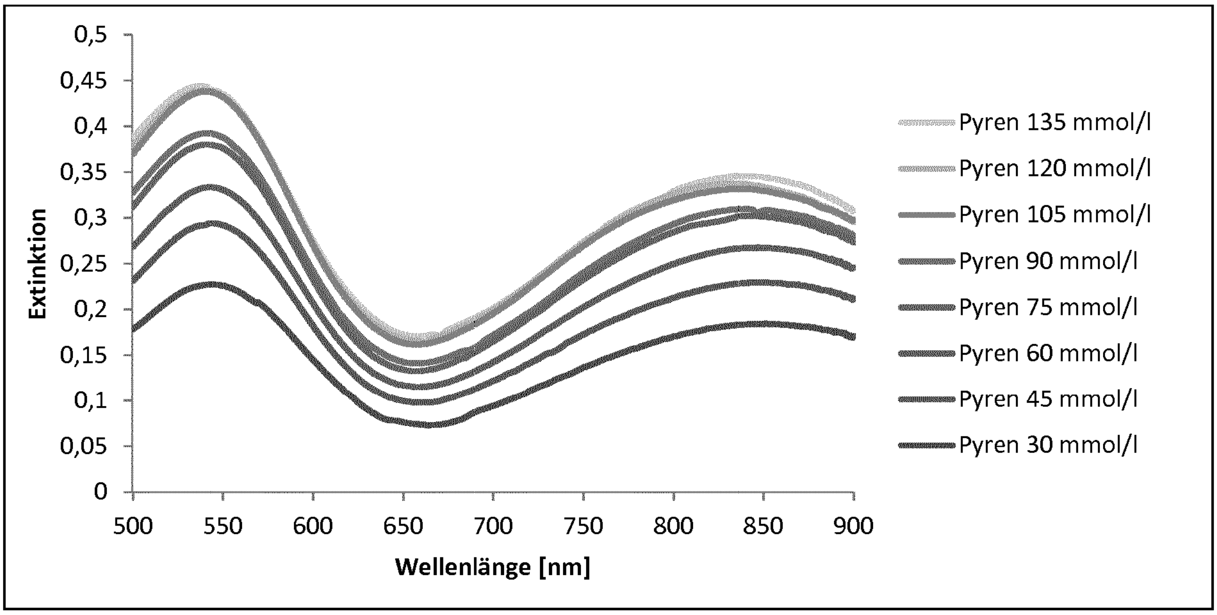


Figur 32

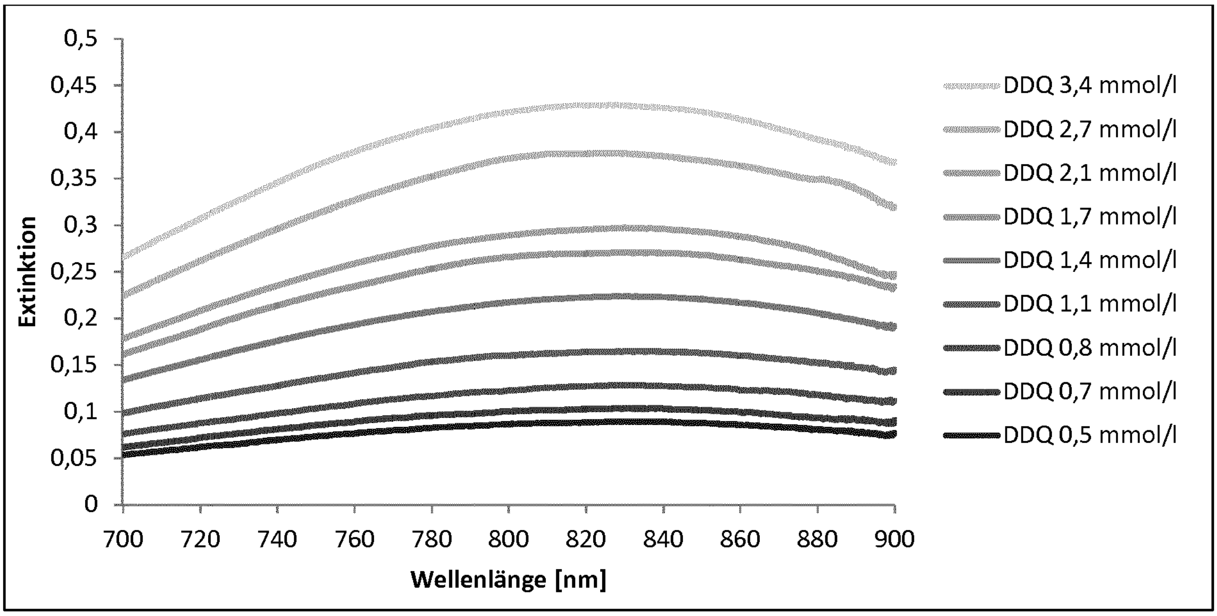


Figur 33

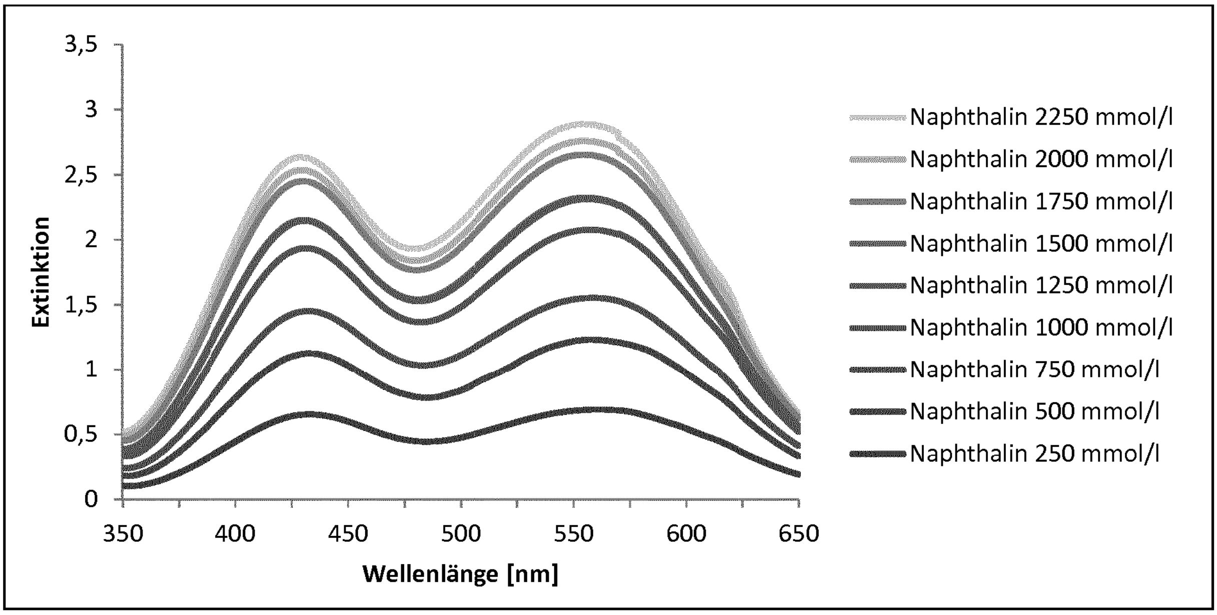


Figur 34

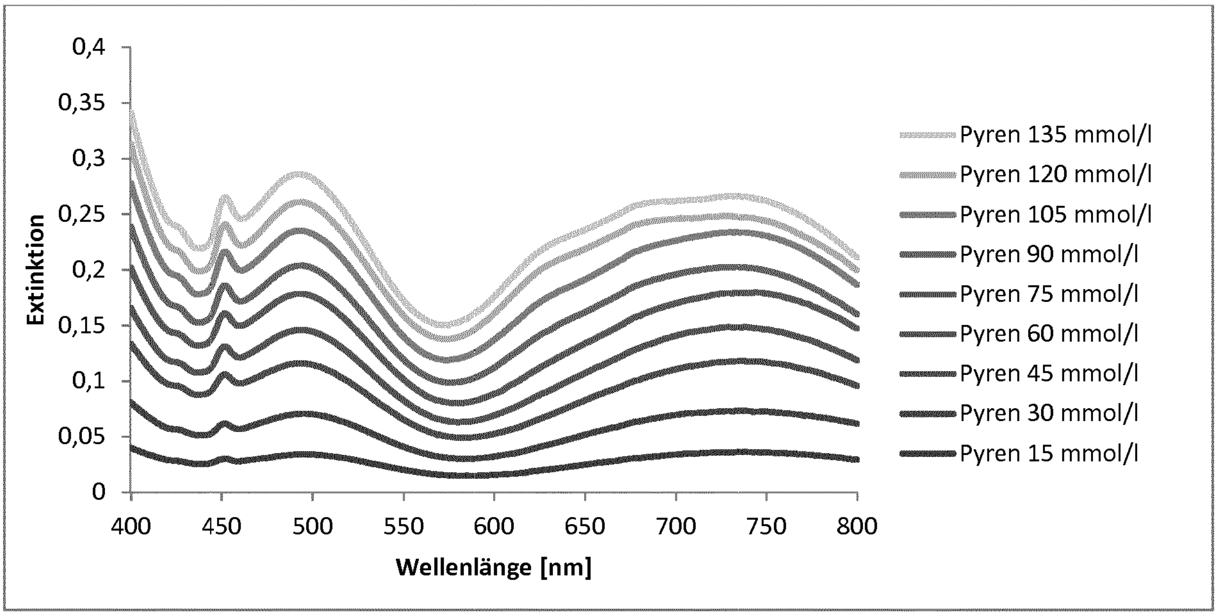


Figur 35

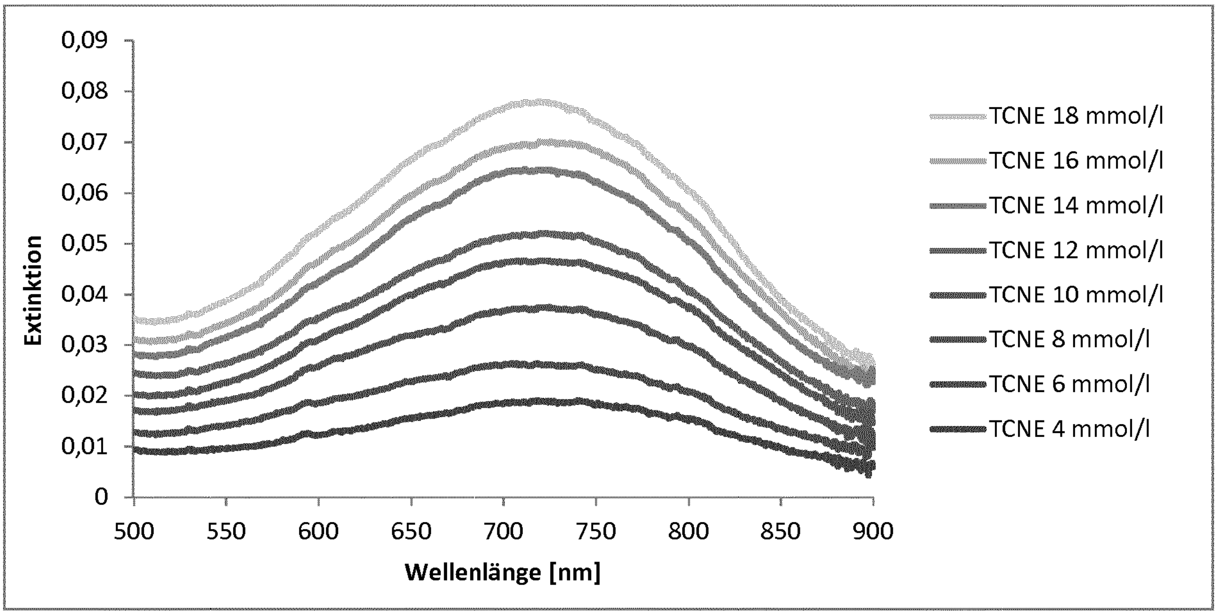


Figur 36

| | | Formel 1<br>$\frac{[A_0]\cdot[D_0]\cdot s_K}{Abs} = \frac{[D_0]}{\varepsilon_{CT}} + \frac{1}{K_{CT}\cdot\varepsilon_{CT}}$ | | | Formel 2<br>$\frac{[A_0]\cdot s_K}{Abs} = \frac{1}{\varepsilon_{CT}} + \frac{1}{K_{CT}\cdot\varepsilon_{CT}\cdot[D_0]}$ | | |
|---|---|---|---|---|---|---|---|
| **Komplex-partner** | Peak-Maximum bei Wellen-länge [nm] | **$K_{CT}$ [l·mol$^{-1}$]** | $\varepsilon_{CT}$ [l·mol$^{-1}$ ·cm$^{-1}$] | Bestimmt-heitsmaß $R^2$ | **$K_{CT}$ [l·mol$^{-1}$]** | $\varepsilon_{CT}$ [l·mol$^{-1}$ ·cm$^{-1}$] | Bestimmt-heitsmaß $R^2$ |
| | | | 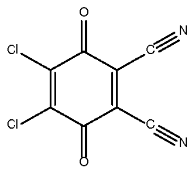 **DDQ** | | | | |
| **Naphthalin**<br>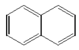 | 621 | **6,26** | 815,86 | 0,9945 | **6,35** | 809,00 | 0,9722 |
| **Pyren**<br>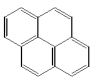 | 539 | **18,25** | 1598,16 | 0,9952 | **19,34** | 1560,11 | 0,9952 |
| | 846 | **21,48** | 1172,14 | 0,9924 | **22,88** | 1144,79 | 0,9963 |
| **Coronen**<br>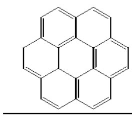 | 833 | **67,43** | 3681,75 | 0,9941 | **93,23** | 2752,85 | 0,7605 |
| | | | 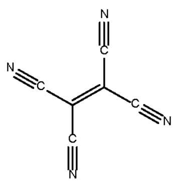 **TCNE** | | | | |
| **Naphthalin**<br>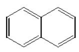 | 560 | **0,66** | 1969,67 | 0,9973 | **0,70** | 1900,42 | 0,9972 |
| | 430 | **0,69** | 1772,83 | 0,9819 | **0,72** | 1722,98 | 0,9817 |
| **Pyren**<br>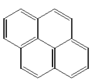 | 494 | **2,80** | 1645,14 | 0,9989 | **2,55** | 1775,51 | 0,9780 |
| | 738 | **4,22** | 1187,13 | 0,9987 | **4,34** | 1162,55 | 0,9818 |
| **Coronen**<br>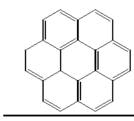 | 594* | **10,36** | 807,69 | 0,9975 | **10,55** | 794,34 | 0,8339 |

* Die Wellenlänge entspricht nicht dem Maximum, da dort eine Auswertung nicht möglich war (Bildungskonstante wird negativ). Die Bildungskonstante kann bei jeder Wellenlänge berechnet werden.

Figur 37

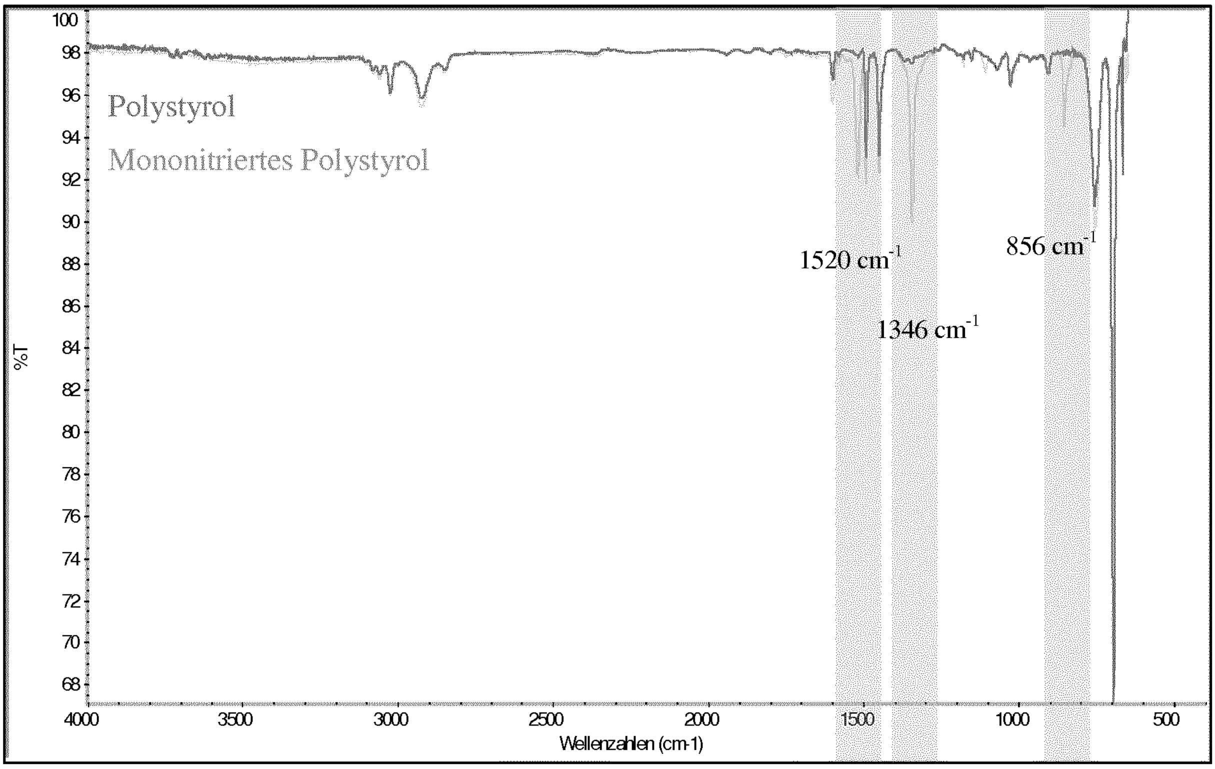


Figur 38

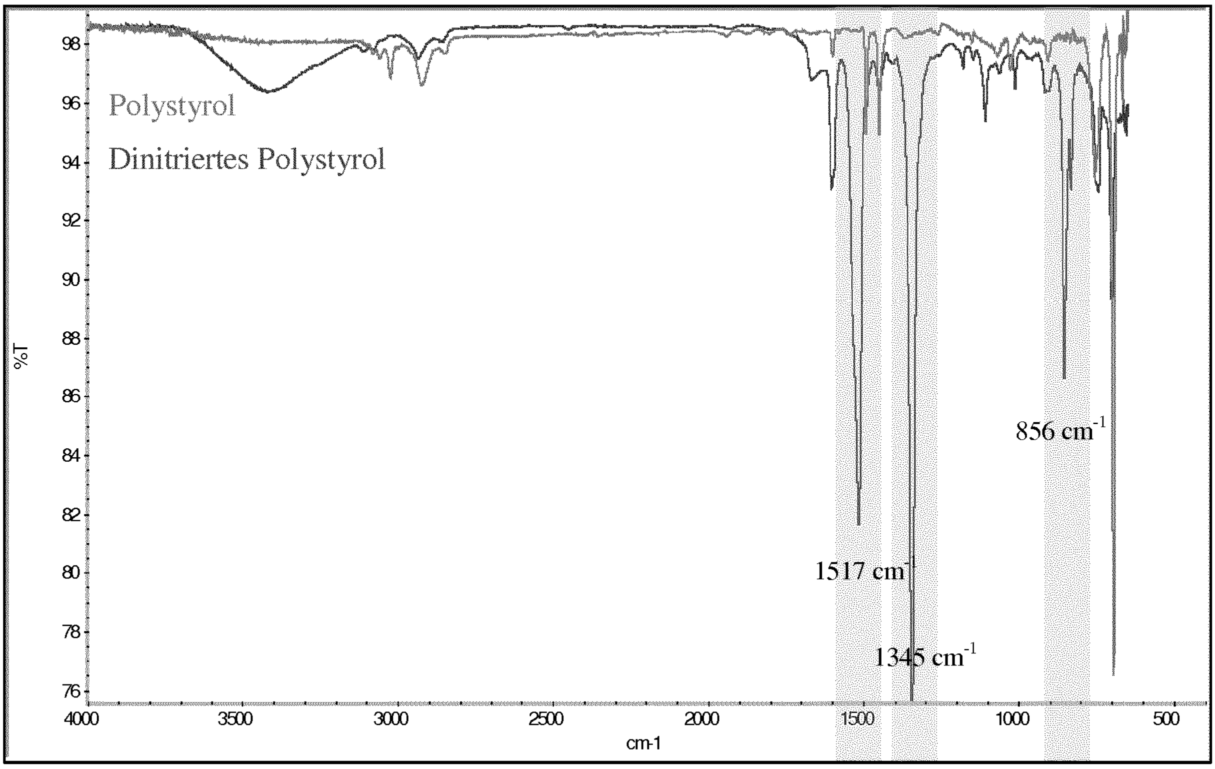


Figur 39

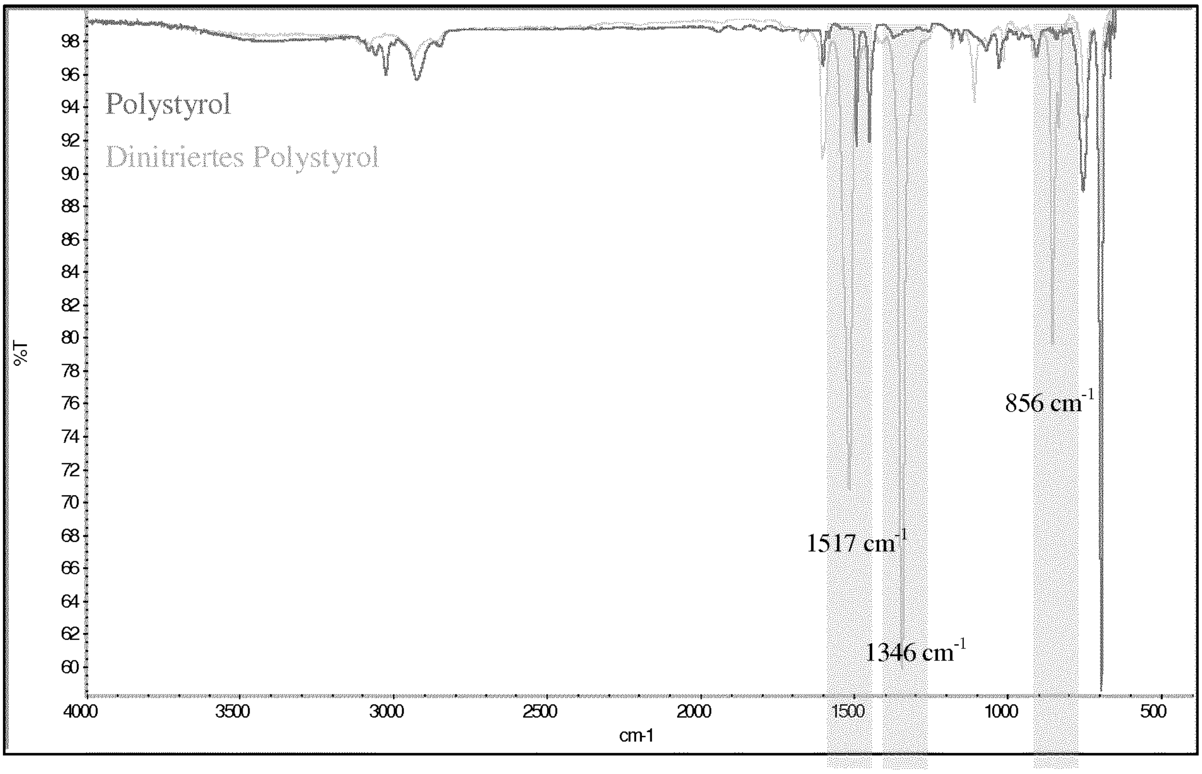


Figur 40

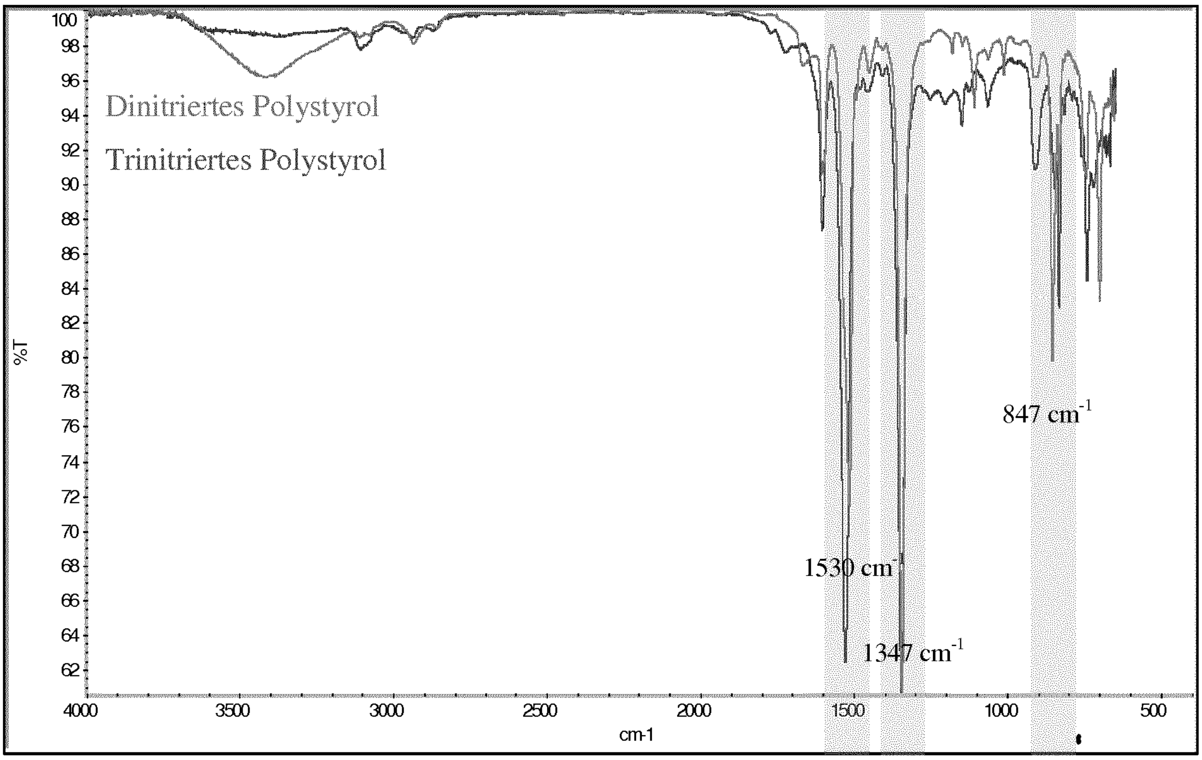


Figur 41

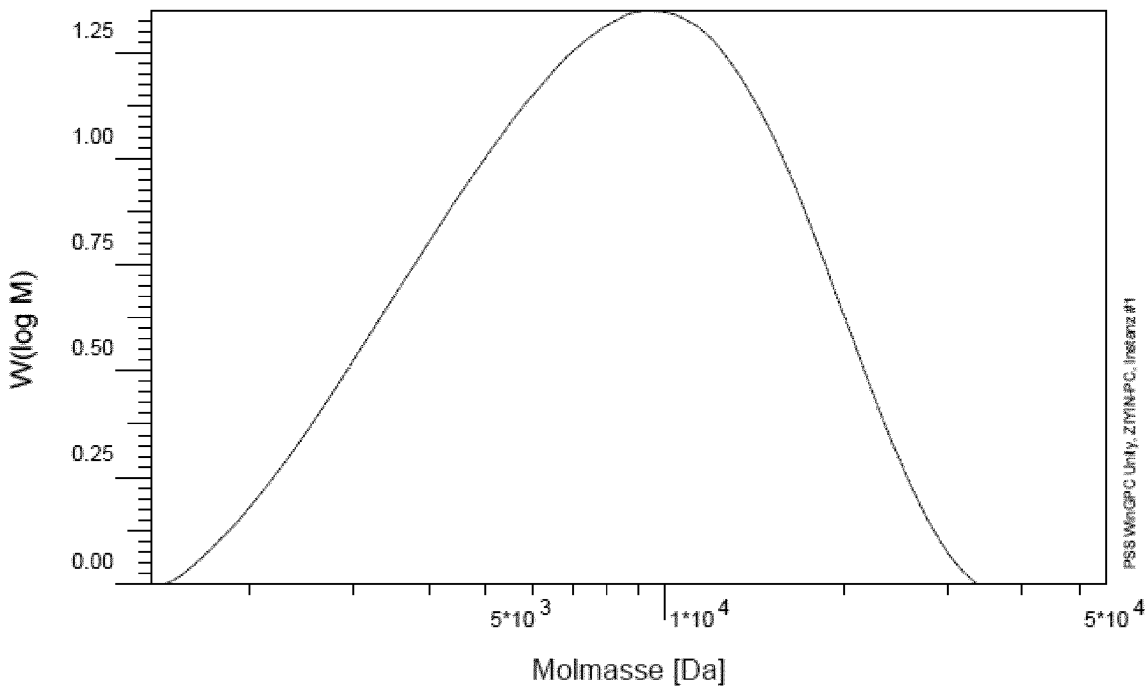


| | | | |
|---|---|---|---|
| **Probe :** | Vial 45: PS-1 - 1 | | |
| **Integration von :** | Donnerstag 28/08/14 15:25:41 | | 20.526 ml |
| **Integration bis :** | Donnerstag 28/08/14 15:36:24 | | 25.884 ml |
| **Kalibration :** | DMF-LiBr_PS_11102013.CAL | **Eluent :** | DMF + LiBr |
| **MHK - A (Kal.):** | 0.000E+0 | **MHK - K (Kal.):** | 1.000E+0 ml/g |
| **Int.Stand.-K :** | 28.800 ml | **Int.Stand.-M :** | 28.777 ml |
| **Pumpe :** | Agilent 1260 Infinity | **Flu遝ate :** | 0.500 ml/min |
| **Konzentration :** | 0.000 g/l | **Injektvolumen :** | 100.000 ul |
| **S鋟le 1 :** | PSS GRAM 5祄 100 | **Temperatur :** | 23.000 C |
| **S鋟le 2 :** | PSS GRAM 5祄 3000 | **Temperatur :** | 23.000 C |
| **Detektor 1 :** | PSS SECcurity DAD A | **Versatz :** | 0.000 ml |
| **Detektor 2 :** | PSS SECcurity DAD B | **Versatz :** | 0.000 ml |
| **Detektor 3 :** | Knauer RI 2300 | **Versatz :** | 0.133 ml |
| **Operateur :** | justus | **Messintervall :** | 1.000 sec |

**Knauer RI 2300**

| | | |
|---|---|---|
| **Mn :** | 6.5217e3 | g/mol |
| **Mw :** | 9.5022e3 | g/mol |
| **Mz :** | 1.2850e4 | g/mol |
| **Mv :** | 0.000000 | g/mol |
| **D :** | 1.4570e0 | |
| **[n]:** | 0.000000 | ml/g |
| **Vp :** | 2.3596e1 | ml |
| **Mp :** | 8.6940e3 | g/mol |
| **FI :** | 2.696e-1 | ml*V |
| **< 1363** | 0.00 | |
| **w% :** | 100.00 | |
| **> 55585** | 0.00 | |

Figur 42

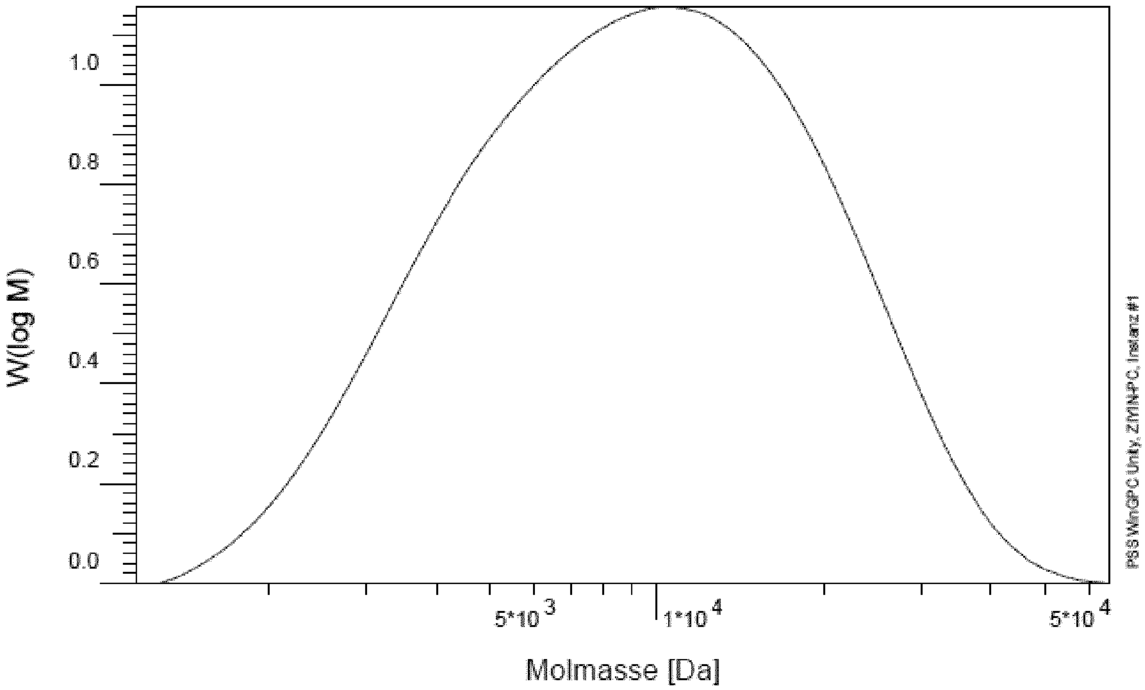


| | | | |
|---|---|---|---|
| **Probe :** | Vial 47: Mononit. PS-4 - 1 | | |
| **Integration von :** | Freitag 29/08/14 11:25:12 | | 20.481 ml |
| **Integration bis :** | Freitag 29/08/14 11:35:51 | | 25.814 ml |
| **Kalibration :** | DMF-LiBr_PMMA_151013.CAL | **Eluent :** | DMF + LiBr |
| **MHK - A (Kal.):** | 0.000E+0 | **MHK - K (Kal.):** | 1.000E+0 ml/g |
| **Int.Stand.-K :** | 28.810 ml | **Int.Stand.-M :** | 28.767 ml |
| **Pumpe :** | Agilent 1260 Infinity | **Flu灣ate :** | 0.500 ml/min |
| **Konzentration :** | 0.000 g/l | **Injektvolumen :** | 100.000 ul |
| **S鰻le 1 :** | PSS GRAM 5祄 100 | **Temperatur :** | 23.000 C |
| **S鰻le 2 :** | PSS GRAM 5祄 3000 | **Temperatur :** | 23.000 C |
| **Detektor 1 :** | PSS SECcurity DAD A | **Versatz :** | 0.000 ml |
| **Detektor 2 :** | PSS SECcurity DAD B | **Versatz :** | 0.000 ml |
| **Detektor 3 :** | Knauer RI 2300 | **Versatz :** | 0.133 ml |
| **Operateur :** | justus | **Messintervall :** | 1.000 sec |

**Knauer RI 2300**

| | | |
|---|---|---|
| **Mn :** | 7.0973e3 | g/mol |
| **Mw :** | 1.1548e4 | g/mol |
| **Mz :** | 1.7289e4 | g/mol |
| **Mv :** | 0.000000 | g/mol |
| **D :** | 1.6271e0 | |
| **[n]:** | 0.000000 | ml/g |
| **Vp :** | 2.3485e1 | ml |
| **Mp :** | 9.1376e3 | g/mol |
| **FI :** | 3.957e-1 | ml*V |
| **< 1150** | 0.00 | |
| **w% :** | 100.00 | |
| **> 65433** | 0.00 | |

Figur 43

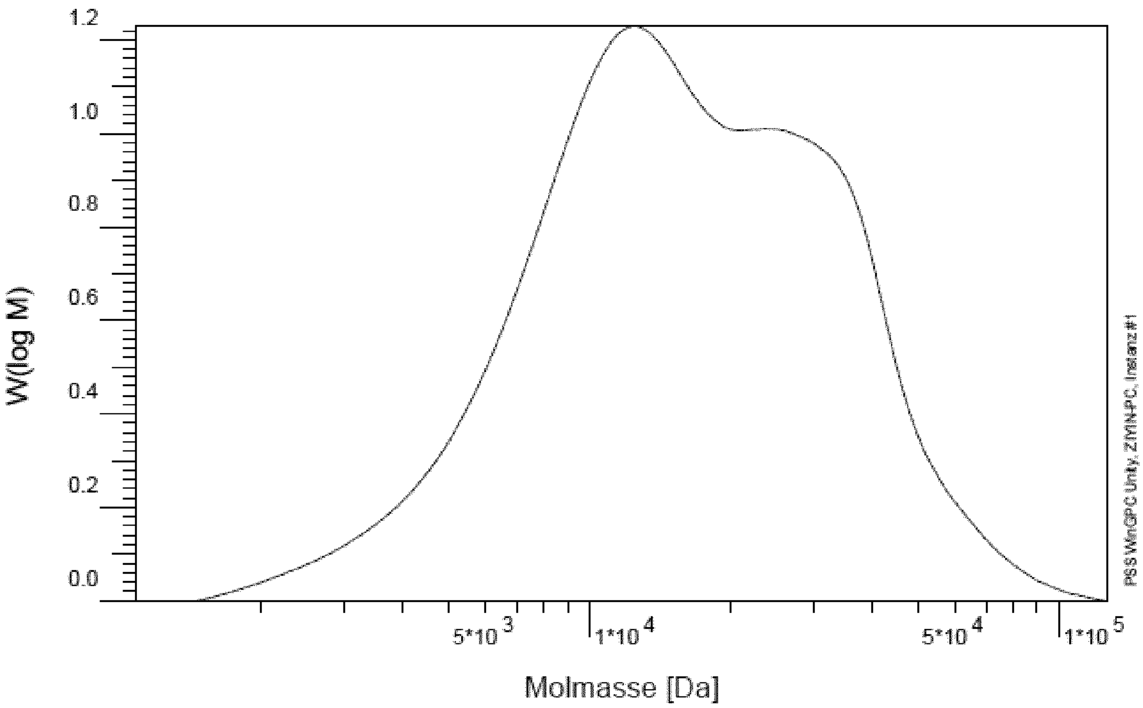


| | | | |
|---|---|---|---|
| **Probe :** | Vial 41: PS-3 - 1 | | |
| **Integration von :** | Dienstag 02/09/14 12:57:51 | | 19.123 ml |
| **Integration bis :** | Dienstag 02/09/14 13:11:22 | | 25.888 ml |
| **Kalibration :** | DMF-LiBr_PMMA_151013.CAL | **Eluent :** | DMF + LiBr |
| **MHK - A (Kal.):** | 0.000E+0 | **MHK - K (Kal.):** | 1.000E+0 ml/g |
| **Int.Stand.-K :** | 28.810 ml | **Int.Stand.-M :** | 28.783 ml |
| **Pumpe :** | Agilent 1260 Infinity | **Flu遭ate :** | 0.500 ml/min |
| **Konzentration :** | 0.000 g/l | **Injektvolumen :** | 100.000 ul |
| **S鋑le 1 :** | PSS GRAM 5祄 100 | **Temperatur :** | 23.000 C |
| **S鋑le 2 :** | PSS GRAM 5祄 3000 | **Temperatur :** | 23.000 C |
| **Detektor 1 :** | PSS SECcurity DAD A | **Versatz :** | 0.000 ml |
| **Detektor 2 :** | PSS SECcurity DAD B | **Versatz :** | 0.000 ml |
| **Detektor 3 :** | Knauer RI 2300 | **Versatz :** | 0.133 ml |
| **Operateur :** | justus | **Messintervall :** | 1.000 sec |

**Knauer RI 2300**

| | | |
|---|---|---|
| Mn : | 1.1901e4 | g/mol |
| Mw : | 2.0108e4 | g/mol |
| Mz : | 3.1013e4 | g/mol |
| Mv : | 0.000000 | g/mol |
| D : | 1.6896e0 | |
| [n]: | 0.000000 | ml/g |
| Vp : | 2.3146e1 | ml |
| Mp : | 1.1975e4 | g/mol |
| FI : | 3.370e-1 | ml*V |
| < 1078 | 0.00 | |
| w% : | 100.00 | |
| > 127235 | 0.00 | |

Figur 44

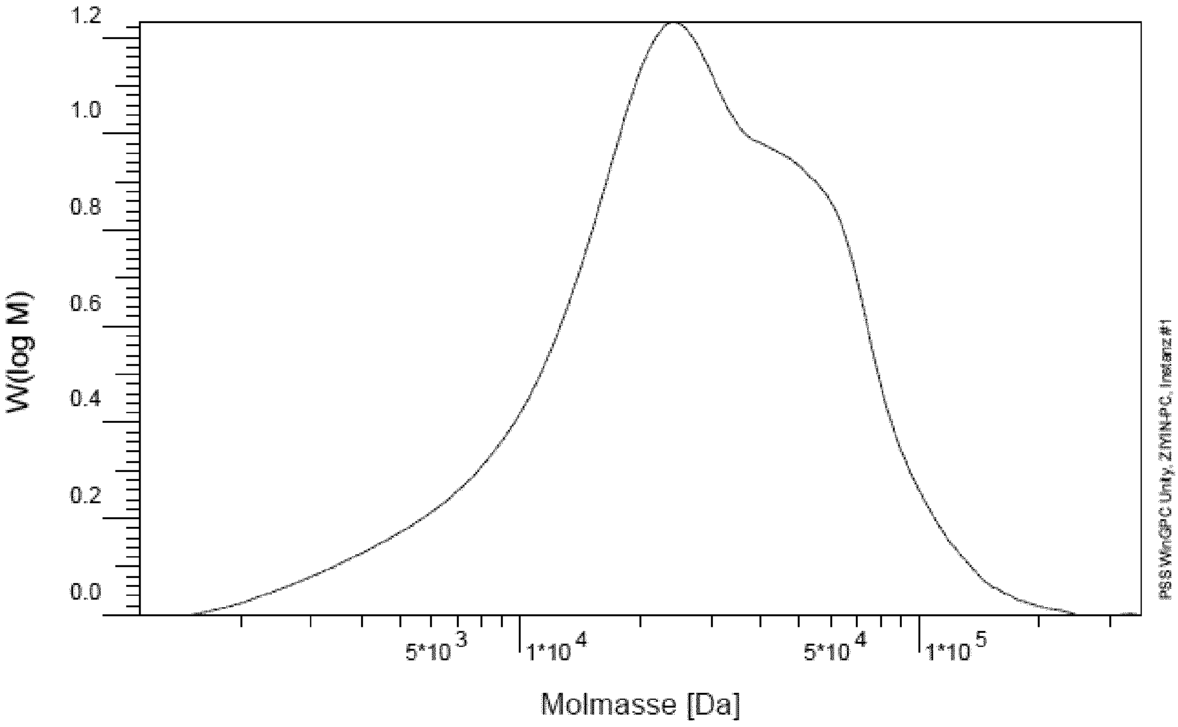


| | | | |
|---|---|---|---|
| **Probe :** | Vial 45: Dinitri. PS-6 - 1 | | |
| **Integration von :** | Dienstag 02/09/14 15:14:15 | | 16.994 ml |
| **Integration bis :** | Dienstag 02/09/14 15:31:57 | | 25.853 ml |
| **Kalibration :** | DMF-LiBr_PMMA_151013.CAL | **Eluent :** | DMF + LiBr |
| **MHK - A (Kal.):** | 0.000E+0 | **MHK - K (Kal.):** | 1.000E+0 ml/g |
| **Int.Stand.-K :** | 28.810 ml | **Int.Stand.-M :** | 28.789 ml |
| **Pumpe :** | Agilent 1260 Infinity | **Flu濾ate :** | 0.500 ml/min |
| **Konzentration :** | 0.000 g/l | **Injektvolumen :** | 50.000 ul |
| **S鍰le 1 :** | PSS GRAM 5祄 100 | **Temperatur :** | 23.000 C |
| **S鍰le 2 :** | PSS GRAM 5祄 3000 | **Temperatur :** | 23.000 C |
| **Detektor 1 :** | PSS SECcurity DAD A | **Versatz :** | 0.000 ml |
| **Detektor 2 :** | PSS SECcurity DAD B | **Versatz :** | 0.000 ml |
| **Detektor 3 :** | Knauer RI 2300 | **Versatz :** | 0.133 ml |
| **Operateur :** | justus | **Messintervall :** | 1.000 sec |

**Knauer RI 2300**

| | | |
|---|---|---|
| **Mn :** | 1.8025e4 | g/mol |
| **Mw :** | 3.4922e4 | g/mol |
| **Mz :** | 5.6483e4 | g/mol |
| **Mv :** | 0.000000 | g/mol |
| **D :** | 1.9374e0 | |
| **[n]:** | 0.000000 | ml/g |
| **Vp :** | 2.2247e1 | ml |
| **Mp :** | 2.3057e4 | g/mol |
| **FI :** | 2.495e-1 | ml*V |
| **< 1112** | 0.00 | |
| **w% :** | 100.00 | |
| **> 360930** | 0.00 | |

Figur 45

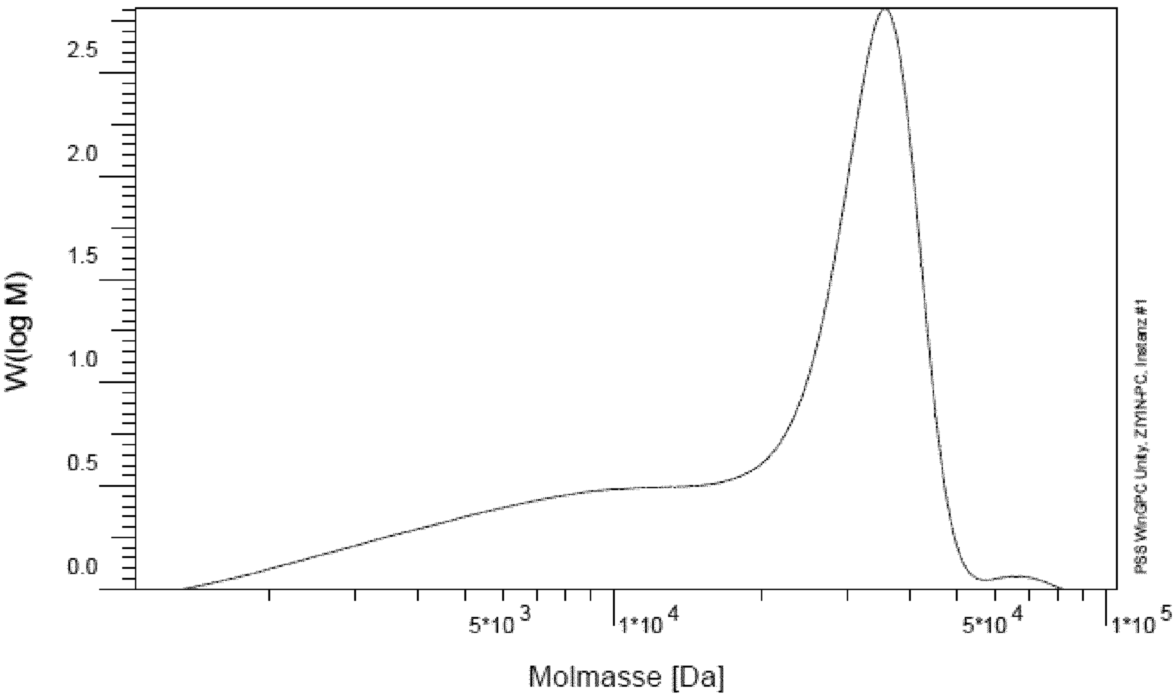


| | | | |
|---|---|---|---|
| **Probe :** | Vial 45: PS-2 - 1 | | |
| **Integration von :** | Donnerstag 28/08/14 16:37:28 | | 19.509 ml |
| **Integration bis :** | Donnerstag 28/08/14 16:50:13 | | 25.895 ml |
| **Kalibration :** | DMF-LiBr_PMMA_151013.CAL | **Eluent :** | DMF + LiBr |
| **MHK - A (Kal.):** | 0.000E+0 | **MHK - K (Kal.):** | 1.000E+0 ml/g |
| **Int.Stand.-K :** | 28.810 ml | **Int.Stand.-M :** | 28.775 ml |
| **Pumpe :** | Agilent 1260 Infinity | **Flu濾ate :** | 0.500 ml/min |
| **Konzentration :** | 0.000 g/l | **Injektvolumen :** | 100.000 ul |
| **S鋖le 1 :** | PSS GRAM 5祄 100 | **Temperatur :** | 23.000 C |
| **S鋖le 2 :** | PSS GRAM 5祄 3000 | **Temperatur :** | 23.000 C |
| **Detektor 1 :** | PSS SECcurity DAD A | **Versatz :** | 0.000 ml |
| **Detektor 2 :** | PSS SECcurity DAD B | **Versatz :** | 0.000 ml |
| **Detektor 3 :** | Knauer RI 2300 | **Versatz :** | 0.133 ml |
| **Operateur :** | justus | **Messintervall :** | 1.000 sec |

**Knauer RI 2300**

| | | |
|---|---|---|
| **Mn :** | 1.2548e4 | g/mol |
| **Mw :** | 2.4548e4 | g/mol |
| **Mz :** | 3.2232e4 | g/mol |
| **Mv :** | 0.000000 | g/mol |
| **D :** | 1.9562e0 | |
| **[n]:** | 0.000000 | ml/g |
| **Vp :** | 2.1584e1 | ml |
| **Mp :** | 3.5283e4 | g/mol |
| **FI :** | 3.422e-1 | ml*V |
| **< 1070** | 0.00 | |
| **w% :** | 100.00 | |
| **> 105900** | 0.00 | |

Figur 46

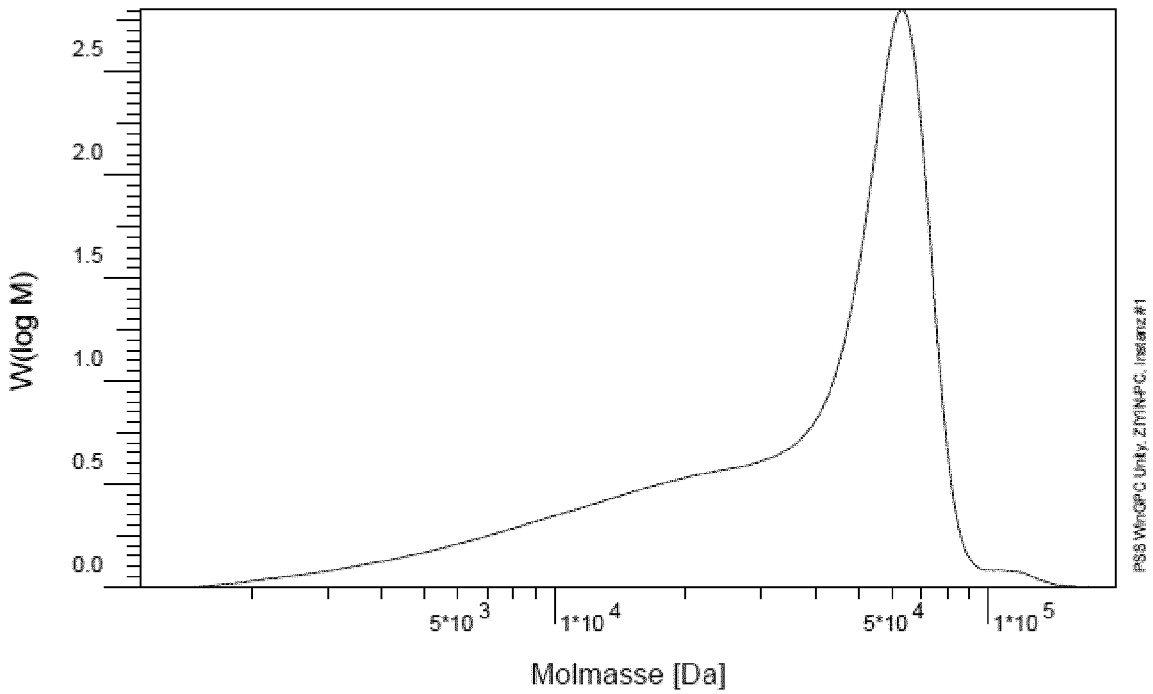


| | | | |
|---|---|---|---|
| **Probe :** | Vial 43: Dinitri. PS-5 - 1 | | |
| **Integration von :** | Dienstag 02/09/14 14:06:19 | | 18.201 ml |
| **Integration bis :** | Dienstag 02/09/14 14:21:37 | | 25.858 ml |
| **Kalibration :** | DMF-LiBr_PMMA_151013.CAL | **Eluent :** | DMF + LiBr |
| **MHK - A (Kal.):** | 0.000E+0 | **MHK - K (Kal.):** | 1.000E+0 ml/g |
| **Int.Stand.-K :** | 28.810 ml | **Int.Stand.-M :** | 28.777 ml |
| **Pumpe :** | Agilent 1260 Infinity | **Flu遭ate :** | 0.500 ml/min |
| **Konzentration :** | 0.000 g/l | **Injektvolumen :** | 50.000 ul |
| **S鋑le 1 :** | PSS GRAM 5祄 100 | **Temperatur :** | 23.000 C |
| **S鋑le 2 :** | PSS GRAM 5祄 3000 | **Temperatur :** | 23.000 C |
| **Detektor 1 :** | PSS SECcurity DAD A | **Versatz :** | 0.000 ml |
| **Detektor 2 :** | PSS SECcurity DAD B | **Versatz :** | 0.000 ml |
| **Detektor 3 :** | Knauer RI 2300 | **Versatz :** | 0.133 ml |
| **Operateur :** | justus | **Messintervall :** | 1.000 sec |

**Knauer RI 2300**

| | | |
|---|---|---|
| **Mn :** | 2.0976e4 | g/mol |
| **Mw :** | 4.2906e4 | g/mol |
| **Mz :** | 5.6691e4 | g/mol |
| **Mv :** | 0.000000 | g/mol |
| **D :** | 2.0455e0 | |
| **[n]:** | 0.000000 | ml/g |
| **Vp :** | 2.0567e1 | ml |
| **Mp :** | 6.2569e4 | g/mol |
| **FI :** | 1.982e-1 | ml*V |
| **< 1107** | 0.00 | |
| **w% :** | 100.00 | |
| **> 197160** | 0.00 | |

Figur 47

### 1.1.1 Trinitriertes Polystyrol

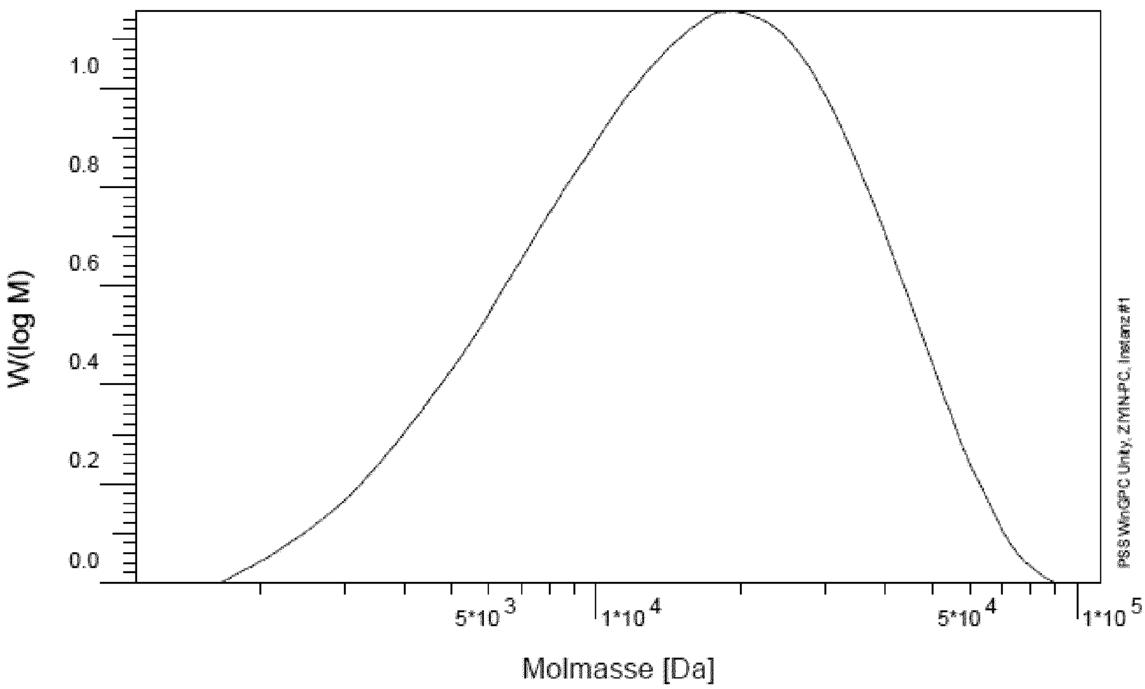


| | | | |
|---|---|---|---|
| Probe : | Vial 47: Trinitri. PS-7 - 1 | | |
| Integration von : | Dienstag 02/09/14 16:28:28 | | 19.387 ml |
| Integration bis : | Dienstag 02/09/14 16:41:24 | | 25.859 ml |
| Kalibration : | DMF-LiBr_PMMA_151013.CAL | Eluent : | DMF + LiBr |
| MHK - A (Kal.): | 0.000E+0 | MHK - K (Kal.): | 1.000E+0 ml/g |
| Int.Stand.-K : | 28.810 ml | Int.Stand.-M : | 28.783 ml |
| Pumpe : | Agilent 1260 Infinity | Flu遰ate : | 0.500 ml/min |
| Konzentration : | 0.000 g/l | Injektvolumen : | 50.000 ul |
| S鋟le 1 : | PSS GRAM 5祄 100 | Temperatur : | 23.000 C |
| S鋟le 2 : | PSS GRAM 5祄 3000 | Temperatur : | 23.000 C |
| Detektor 1 : | PSS SECcurity DAD A | Versatz : | 0.000 ml |
| Detektor 2 : | PSS SECcurity DAD B | Versatz : | 0.000 ml |
| Detektor 3 : | Knauer RI 2300 | Versatz : | 0.133 ml |
| Operateur : | justus | Messintervall : | 1.000 sec |

**Knauer RI 2300**

| | | |
|---|---|---|
| Mn : | 1.1461e4 | g/mol |
| Mw : | 1.9887e4 | g/mol |
| Mz : | 2.9749e4 | g/mol |
| Mv : | 0.000000 | g/mol |
| D : | 1.7351e0 | |
| [n]: | 0.000000 | ml/g |
| Vp : | 2.2696e1 | ml |
| Mp : | 1.6816e4 | g/mol |
| FI : | 1.191e-1 | ml*V |
| < 1107 | 0.00 | |
| w% : | 100.00 | |
| > 112290 | 0.00 | |

Figur 48

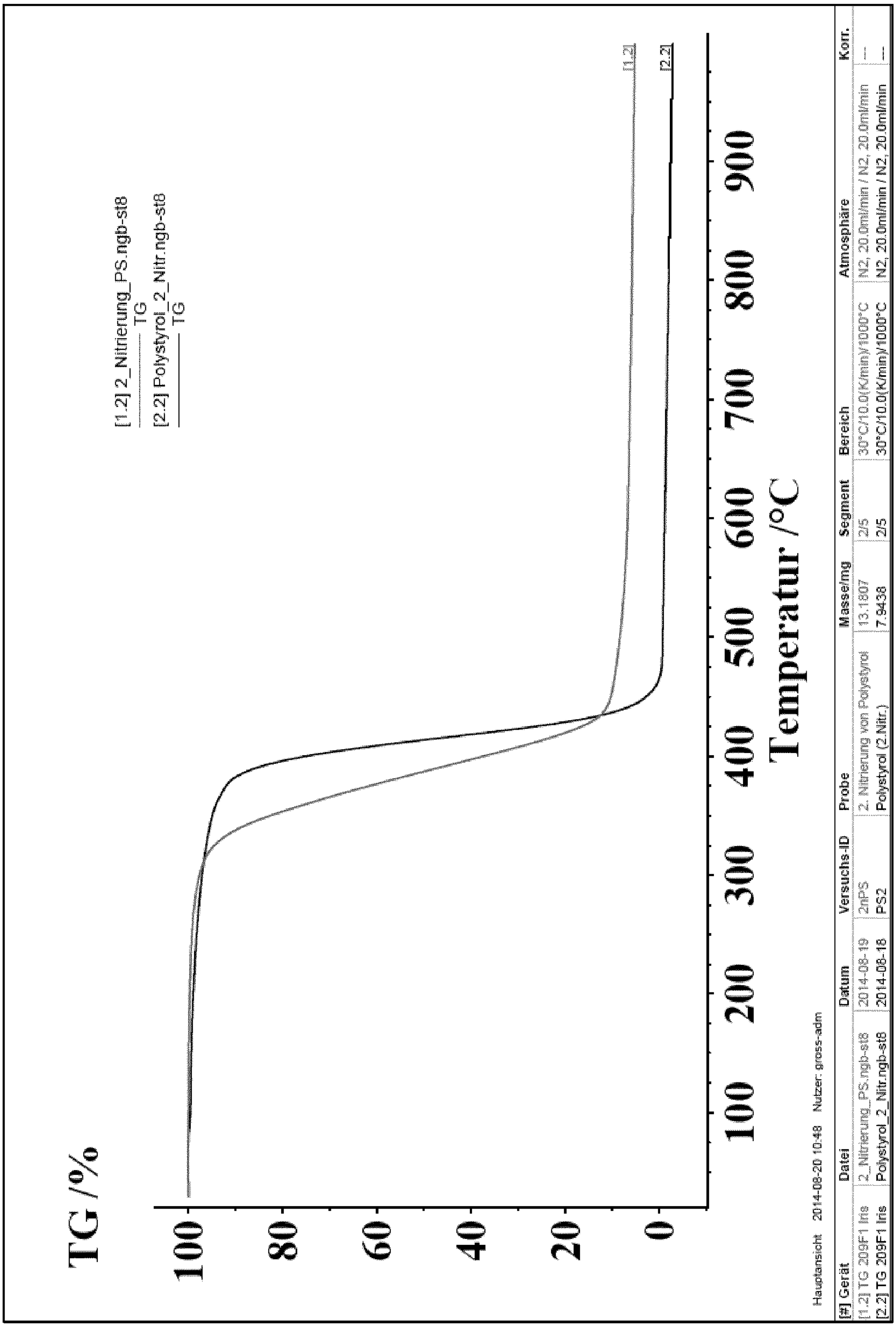

[1.2] 2_Nitrierung_PS.ngb-st8 TG
[2.2] Polystyrol_2_Nitr.ngb-st8 TG
TG /%
100
80
60
40
20
0
100
200
300
400
500
600
700
800
900
Temperatur /°C
[1.2]
[2.2]
Hauptansicht 2014-08-20 10:48 Nutzer: gross-adm
[#] Gerät | Datei | Datum | Versuchs-ID | Probe | Masse/mg | Segment | Bereich | Atmosphäre | Korr.
[1.2] TG 209F1 Iris | 2_Nitrierung_PS.ngb-st8 | 2014-08-19 | 2nPS | 2. Nitrierung von Polystyrol | 13.1807 | 2/5 | 30°C/10.0(K/min)/1000°C | N2, 20.0ml/min / N2, 20.0ml/min | ---
[2.2] TG 209F1 Iris | Polystyrol_2_Nitr.ngb-st8 | 2014-08-18 | PS2 | Polystyrol (2.Nitr.) | 7.9438 | 2/5 | 30°C/10.0(K/min)/1000°C | N2, 20.0ml/min / N2, 20.0ml/min | ---


Figur 49

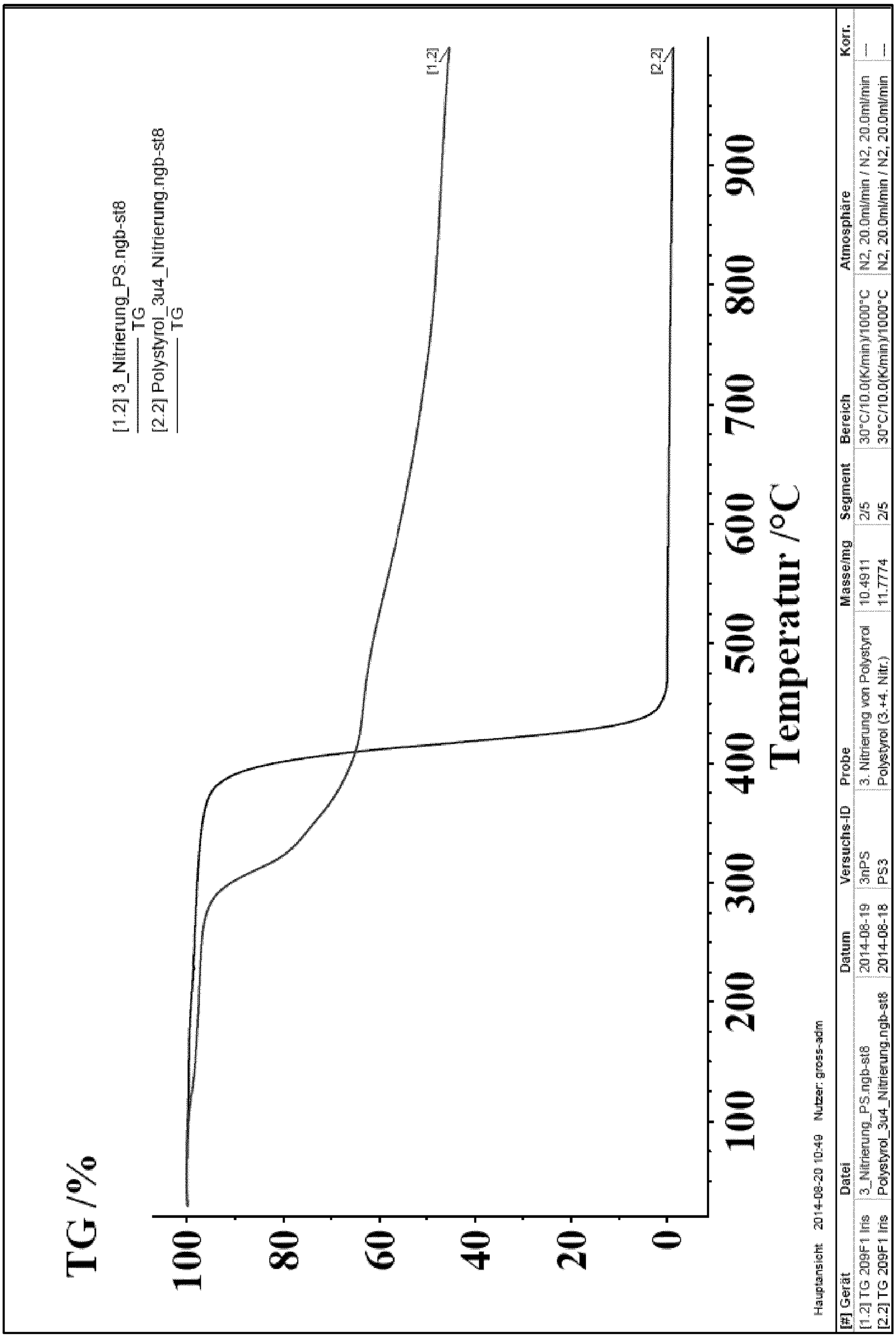

TG /%
100
80
60
40
20
0
100
200
300
400
500
600
700
800
900
Temperatur /°C
[1.2] 3_Nitrierung_PS.ngb-st8
TG
[2.2] Polystyrol_3u4_Nitrierung.ngb-st8
TG
[1.2]
[2.2]
Hauptansicht 2014-08-20 10:49 Nutzer: gross-adm
[#] Gerät | Datei | Datum | Versuchs-ID | Probe | Masse/mg | Segment | Bereich | Atmosphäre | Korr.
[1.2] TG 209F1 Iris | 3_Nitrierung_PS.ngb-st8 | 2014-08-19 | 3nPS | 3. Nitrierung von Polystyrol | 10.4911 | 2/5 | 30°C/10.0(K/min)/1000°C | N2, 20.0ml/min / N2, 20.0ml/min | ---
[2.2] TG 209F1 Iris | Polystyrol_3u4_Nitrierung.ngb-st8 | 2014-08-18 | PS3 | Polystyrol (3.+4. Nitr.) | 11.7774 | 2/5 | 30°C/10.0(K/min)/1000°C | N2, 20.0ml/min / N2, 20.0ml/min | ---


Figur 50

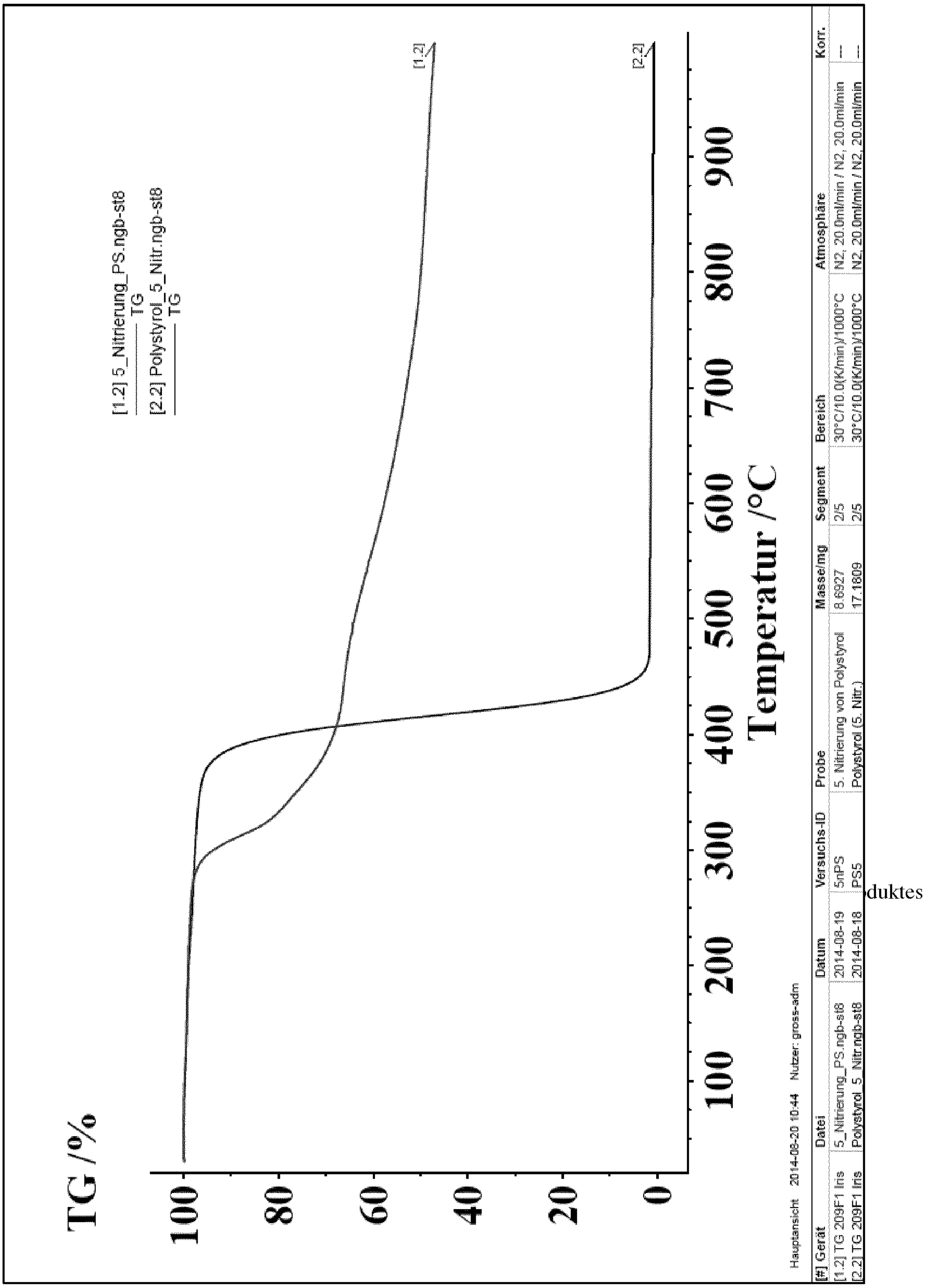


duktes der

Figur 51

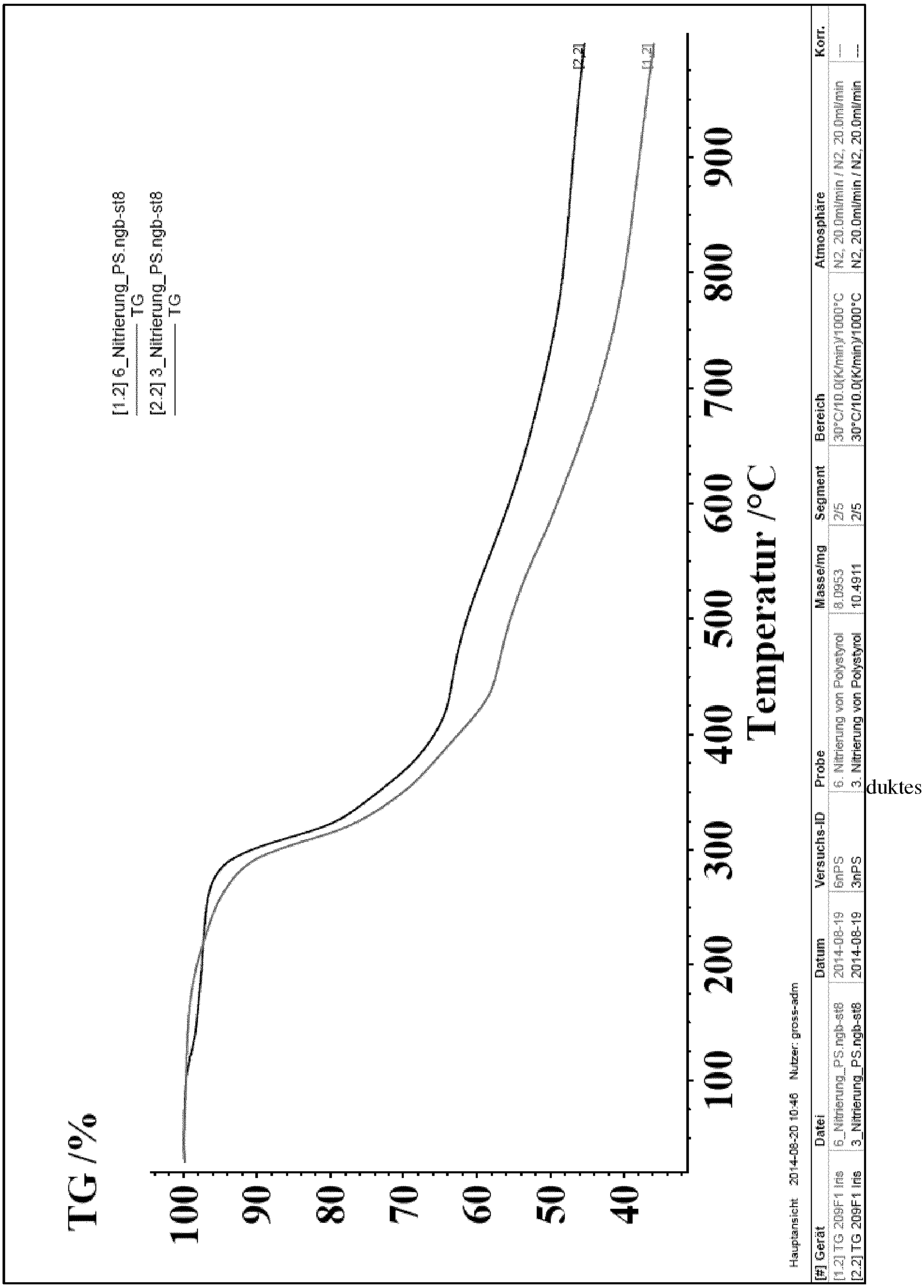


duktes der

Figur 52

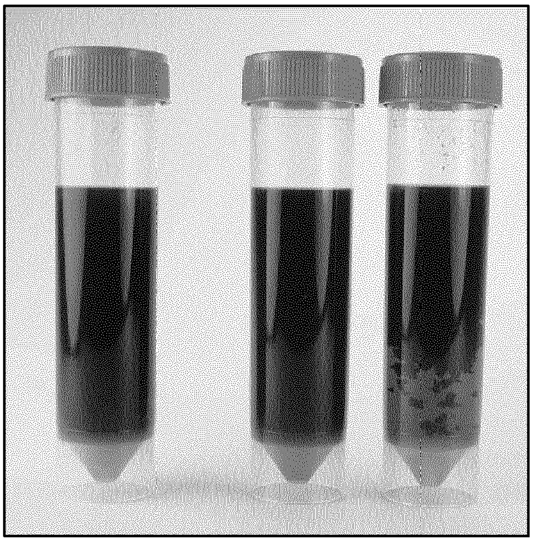

Figur 53

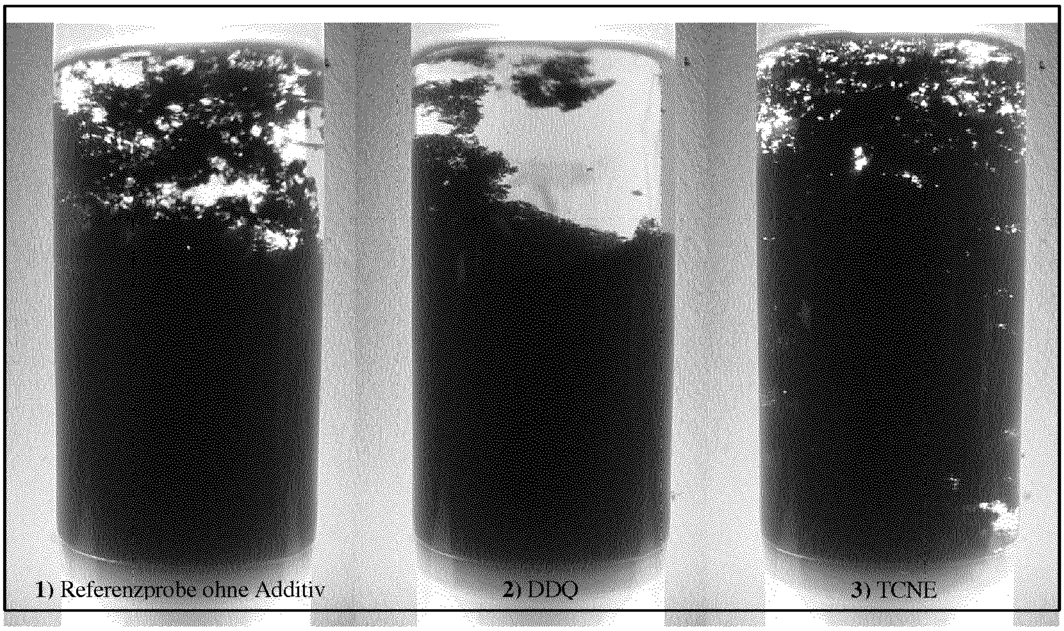


Figur 54

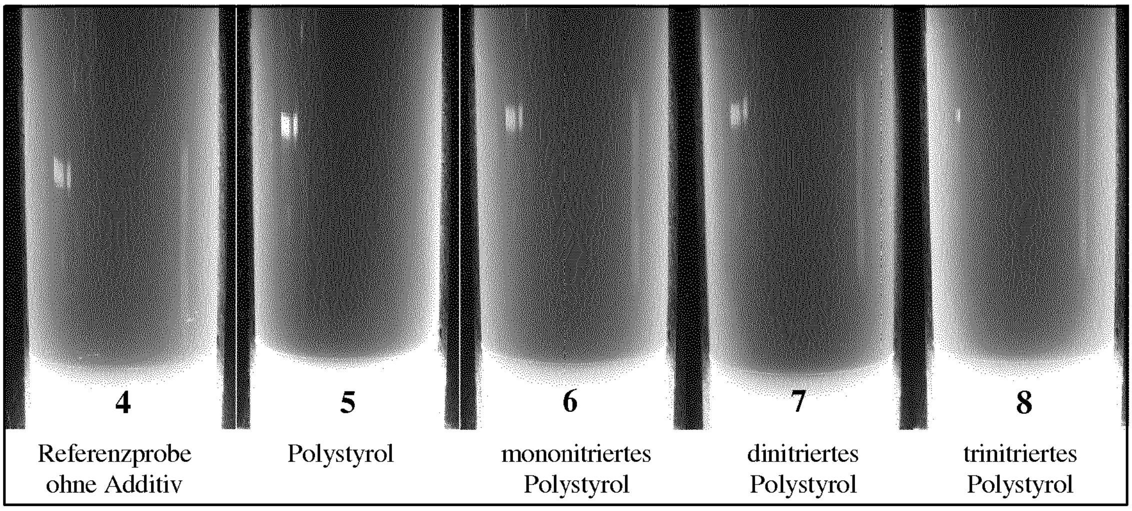


Figur 55

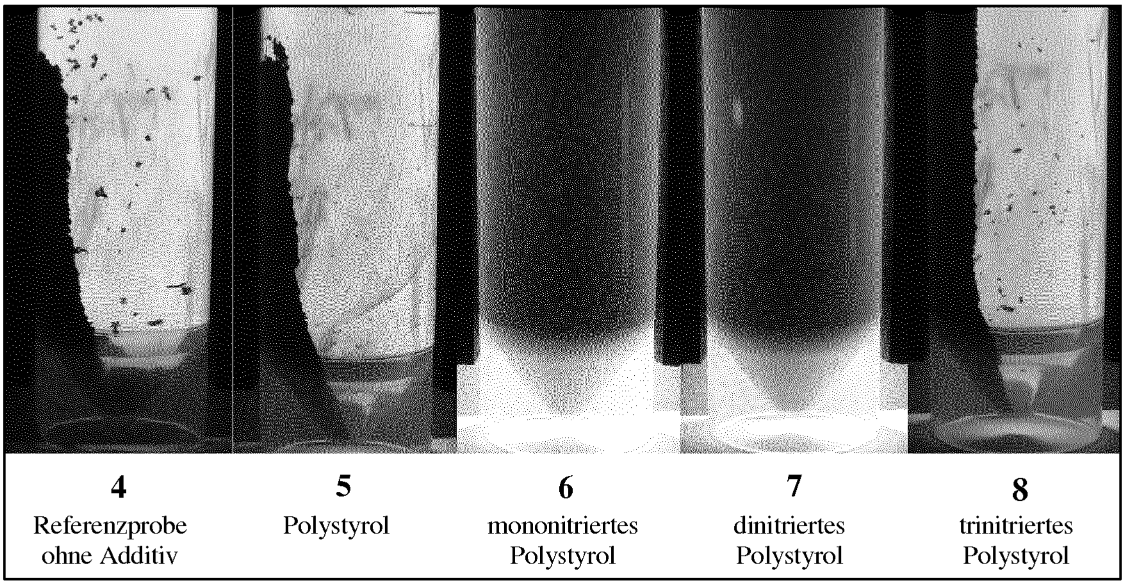


Figur 56

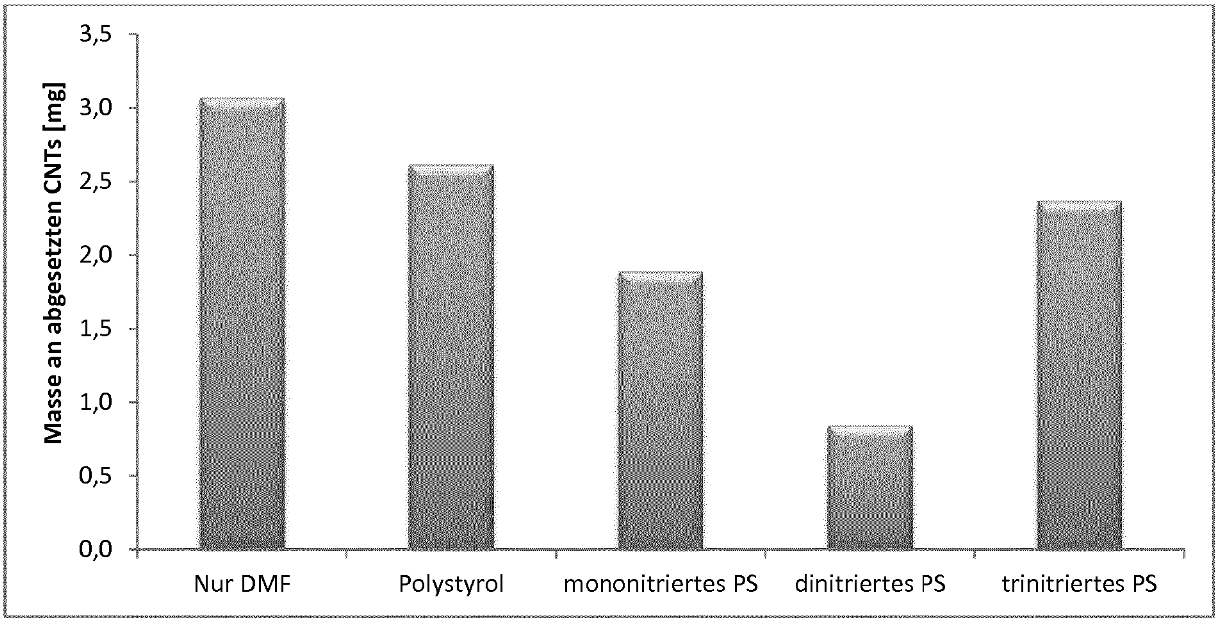


Figur 57

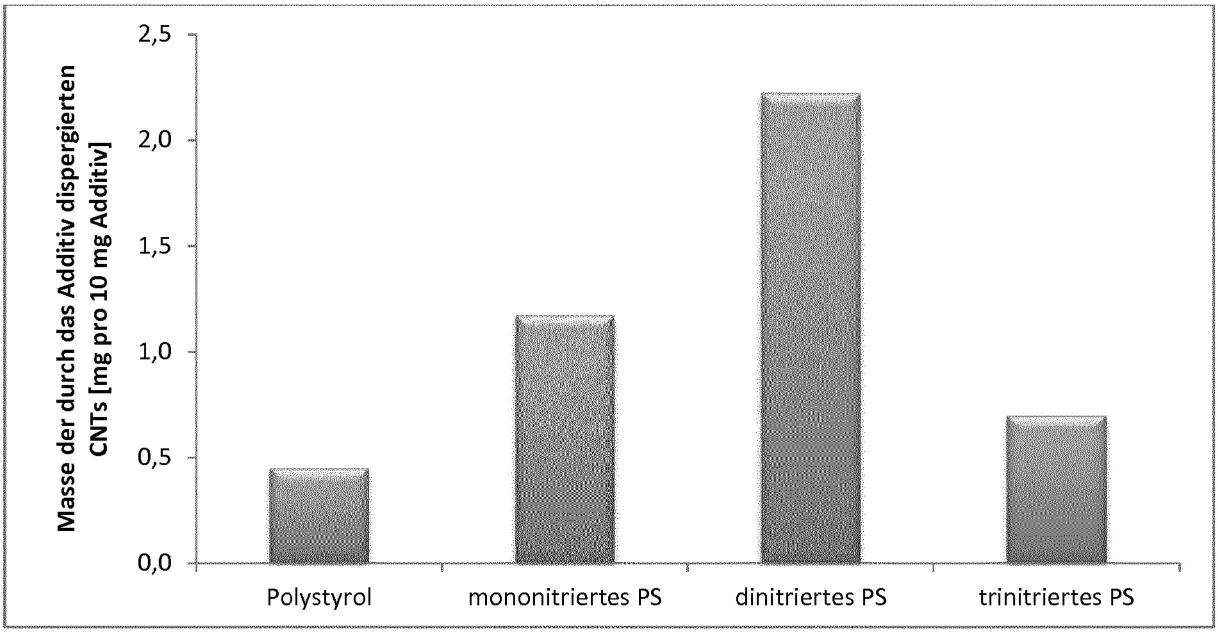


Figur 58

| Substanz | Molekulargewicht M [g·mol$^{-1}$] | CAS-Nummer | Lieferant | Artikel-Nr. |
|---|---|---|---|---|
| **Naphthalin** 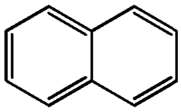 | 128,17 | 91-20-3 | Merck KGaA (Darmstadt, Deutschland) | 8208461000 |
| **Pyren** 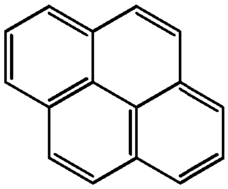 | 202,26 | 129-00-0 | Sigma-Aldrich Co. LLC (St. Louis, USA) | 185515-100G |
| **Coronen** 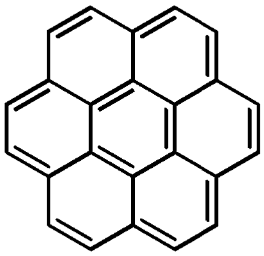 | 300,36 | 191-07-1 | TCI Deutschland GmbH (Eschborn, Deutschland) | C0386 |

Figur 59

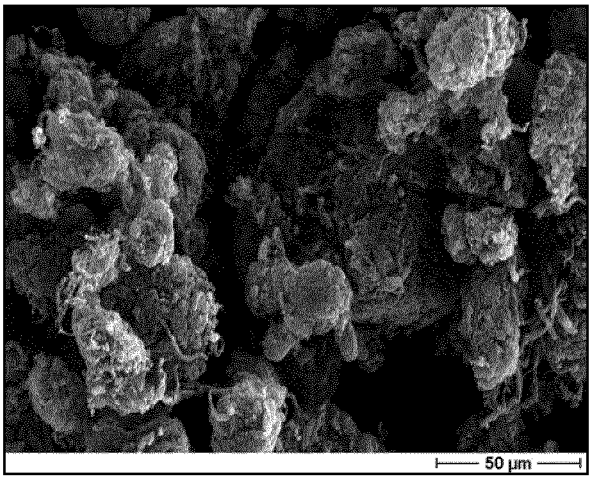


Figur 60

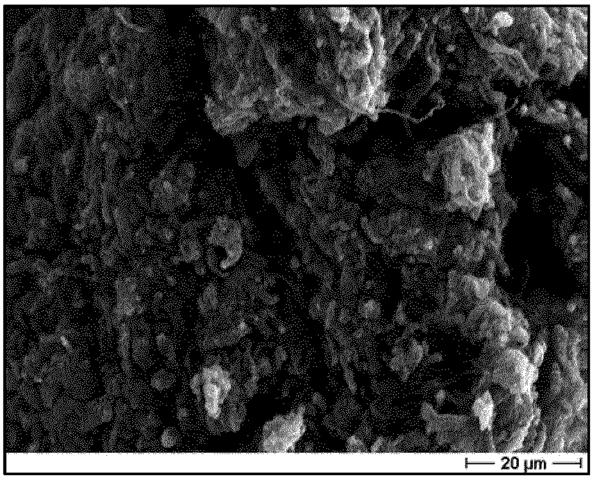


Figur 61

| Substanz | Molekular-gewicht M [g·mol$^{-1}$] | CAS-Nummer | Lieferant | Artikel-Nr. |
|---|---|---|---|---|
| **Tetrachloro-p-benzo-chinone, Chloranil** 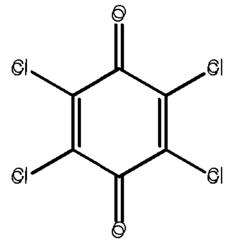 | 245,88 | 118-75-2 | Alfa Aesar GmbH & Co KG (Karlsruhe, Deutschland) | A13495 |
| **1,4-Benzochinon** 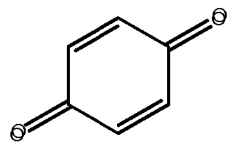 | 108,1 | 106-51-4 | Alfa Aesar GmbH & Co KG (Karlsruhe, Deutschland) | A13162 |
| **Cyanurchlorid** 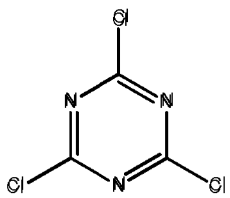 | 184,41 | 108-77-0 | Alfa Aesar GmbH & Co KG (Karlsruhe, Deutschland) | L03442 |
| **2,3-Dichlor-5,6-dicyano-1,4-benzochinon (DDQ)** 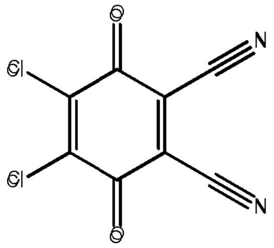 | 227,01 | 84-58-2 | Alfa Aesar GmbH & Co KG (Karlsruhe, Deutschland) | A11879 |

Figur 62

| Substanz | Molekular-gewicht M [$g \cdot mol^{-1}$] | CAS-Nummer | Lieferant | Artikel-Nr. |
|---|---|---|---|---|
| **7,7,8,8-Tetracyanochino-dimethan (TCNQ)** 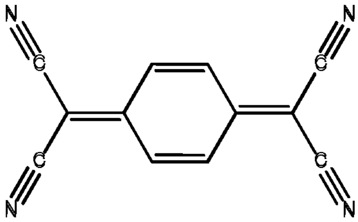 | 204,19 | 1518-16-7 | Alfa Aesar GmbH & Co KG (Karlsruhe, Deutschland) | A10779 |
| **Tetracyanoethylen (TCNE)** 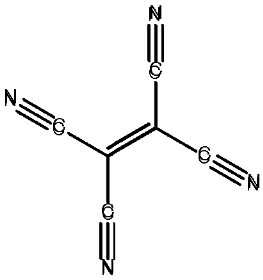 | 128,09 | 670-54-2 | Alfa Aesar GmbH & Co KG (Karlsruhe, Deutschland) | A13945 |
| **Nitrosobenzol** 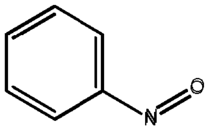 | 107,11 | 586-96-9 | Sigma-Aldrich Co. LLC (St. Louis, USA) | N24609-10G |
| **Anilin-Hydrochlorid** 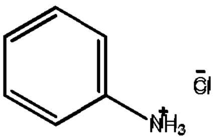 | 129,59 | 142-04-1 | Sigma-Aldrich Co. LLC (St. Louis, USA) | 10414-50G-F |

Figur 62 (fortgesetzt)

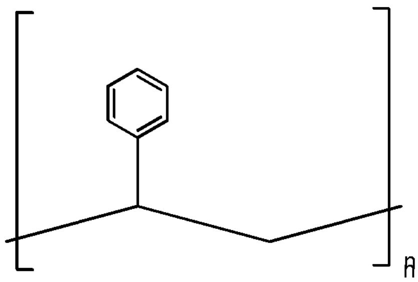

Polystyrol

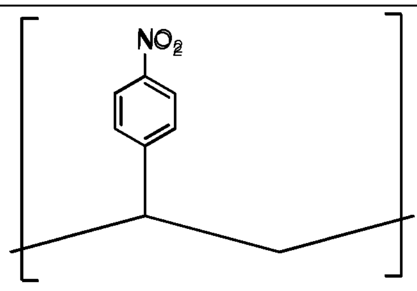

Poly-(4-mononitro-styrol)

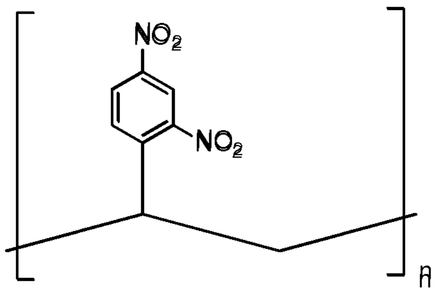

Poly-(2,4-dinitro-styrol)

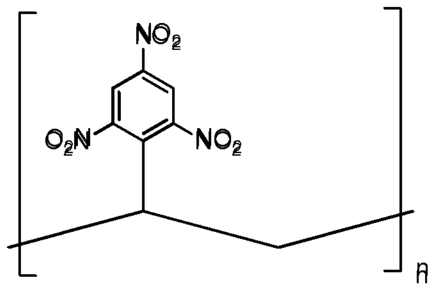

Poly-(2,4,6-trinitro-styrol)

Figur 63

| | Formel 1 $$\frac{[A_0]\cdot s_K}{Abs}=\frac{1}{\varepsilon_{CT}}+\frac{1}{K_{CT}\cdot\varepsilon_{CT}\cdot[D_0]}$$ | Formel 2 $$\frac{[A_0]\cdot[D_0]\cdot s_K}{Abs}=\frac{[D_0]}{\varepsilon_{CT}}+\frac{1}{K_{CT}\cdot\varepsilon_{CT}}$$ |
|---|---|---|
| **DDQ – Naphthalin bei 621 nm** | 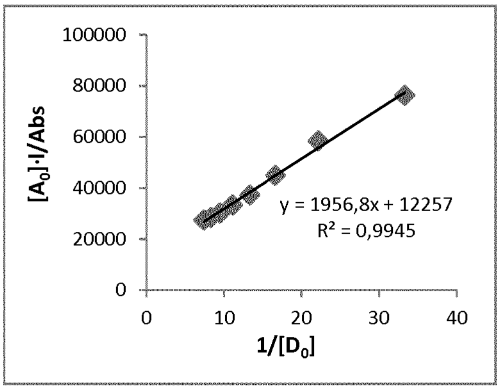  | 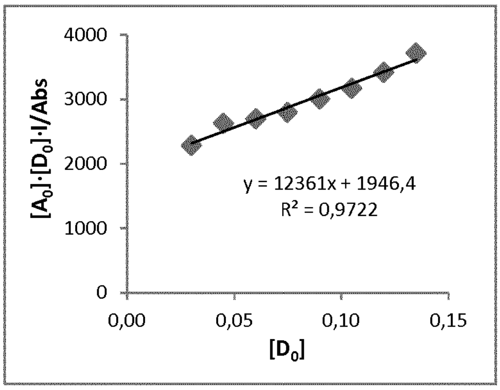  |
| **DDQ – Pyren bei 539 nm** | 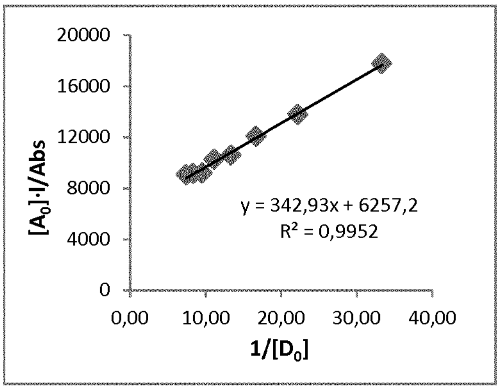  | 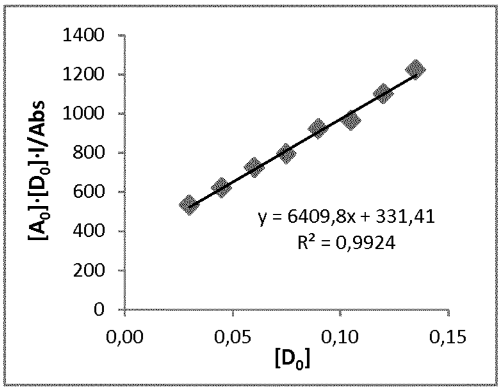  |
| **DDQ – Pyren bei 846 nm** | 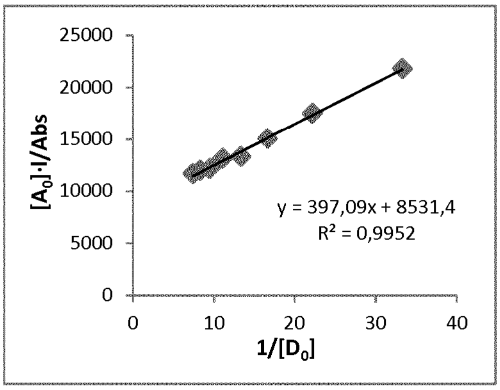  | 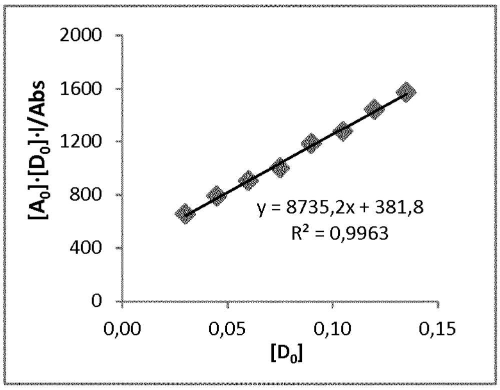  |

Figur 64

| | Formel 1 | Formel 2 |
| --- | --- | --- |
| | $\frac{[A_0]\cdot s_K}{Abs}=\frac{1}{\varepsilon_{CT}}+\frac{1}{K_{CT}\cdot\varepsilon_{CT}\cdot[D_0]}$ | $\frac{[A_0]\cdot[D_0]\cdot s_K}{Abs}=\frac{[D_0]}{\varepsilon_{CT}}+\frac{1}{K_{CT}\cdot\varepsilon_{CT}}$ |

**DDQ – Coronen bei 833 nm**

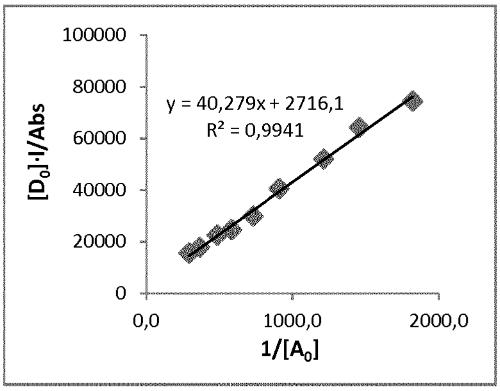


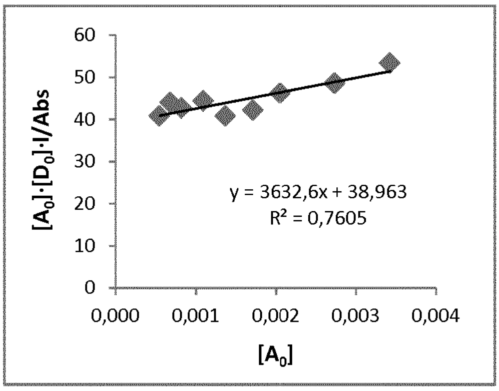


**TCNE - Naphthalin bei 560 nm**

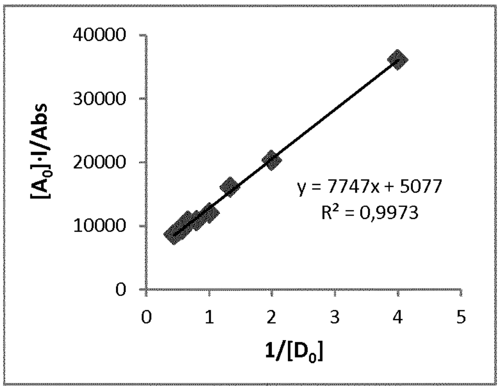


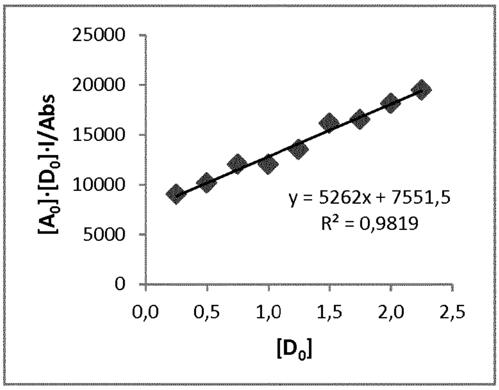


**TCNE - Naphthalin bei 430 nm**

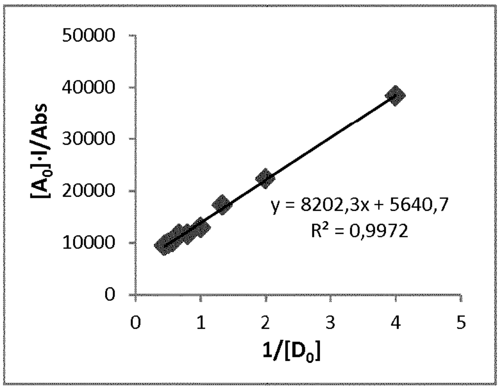


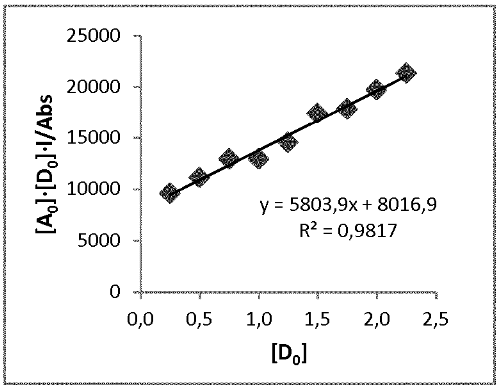


Figur 64 (fortgesetzt)

<table>
<tr><th></th><th>Formel 1<br>$\frac{[A_0]\cdot s_K}{Abs} = \frac{1}{\varepsilon_{CT}} + \frac{1}{K_{CT}\cdot \varepsilon_{CT}\cdot [D_0]}$</th><th>Formel 2<br>$\frac{[A_0]\cdot [D_0]\cdot s_K}{Abs} = \frac{[D_0]}{\varepsilon_{CT}} + \frac{1}{K_{CT}\cdot \varepsilon_{CT}}$</th></tr>
<tr><td>TCNE - Pyren bei 494 nm</td><td>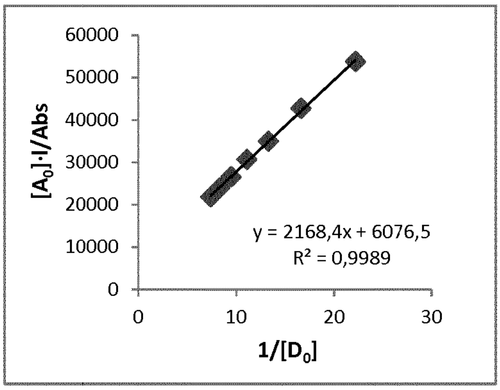
</td><td>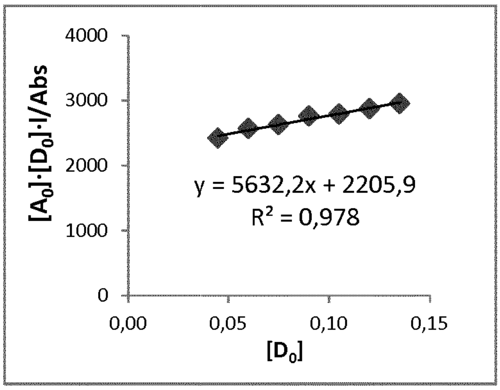
</td></tr>
<tr><td>TCNE - Pyren bei 738 nm</td><td>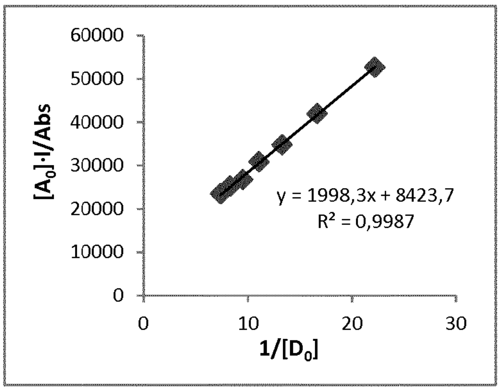
</td><td>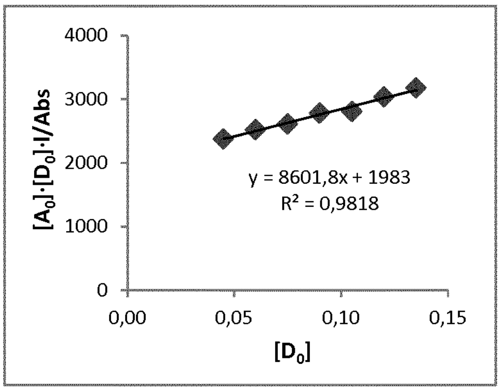
</td></tr>
<tr><td>TCNE - Coronen bei 549 nm</td><td>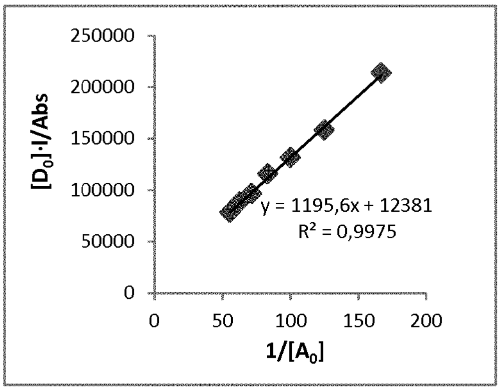
</td><td>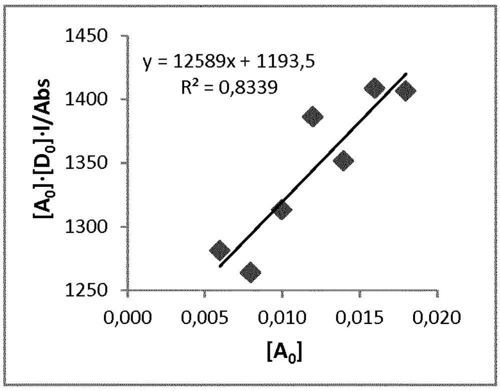
</td></tr>
</table>

Figur 64 (weiter fortgesetzt)

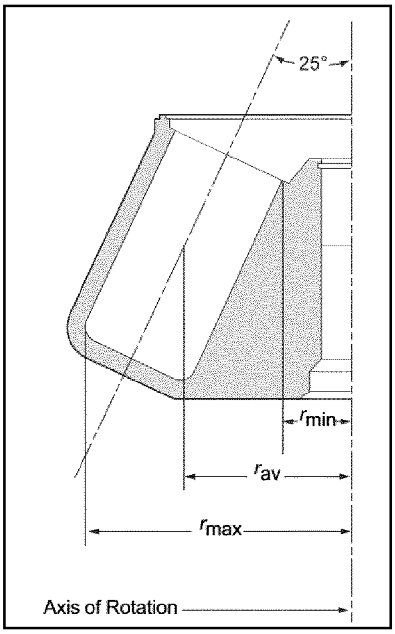


Figur 65

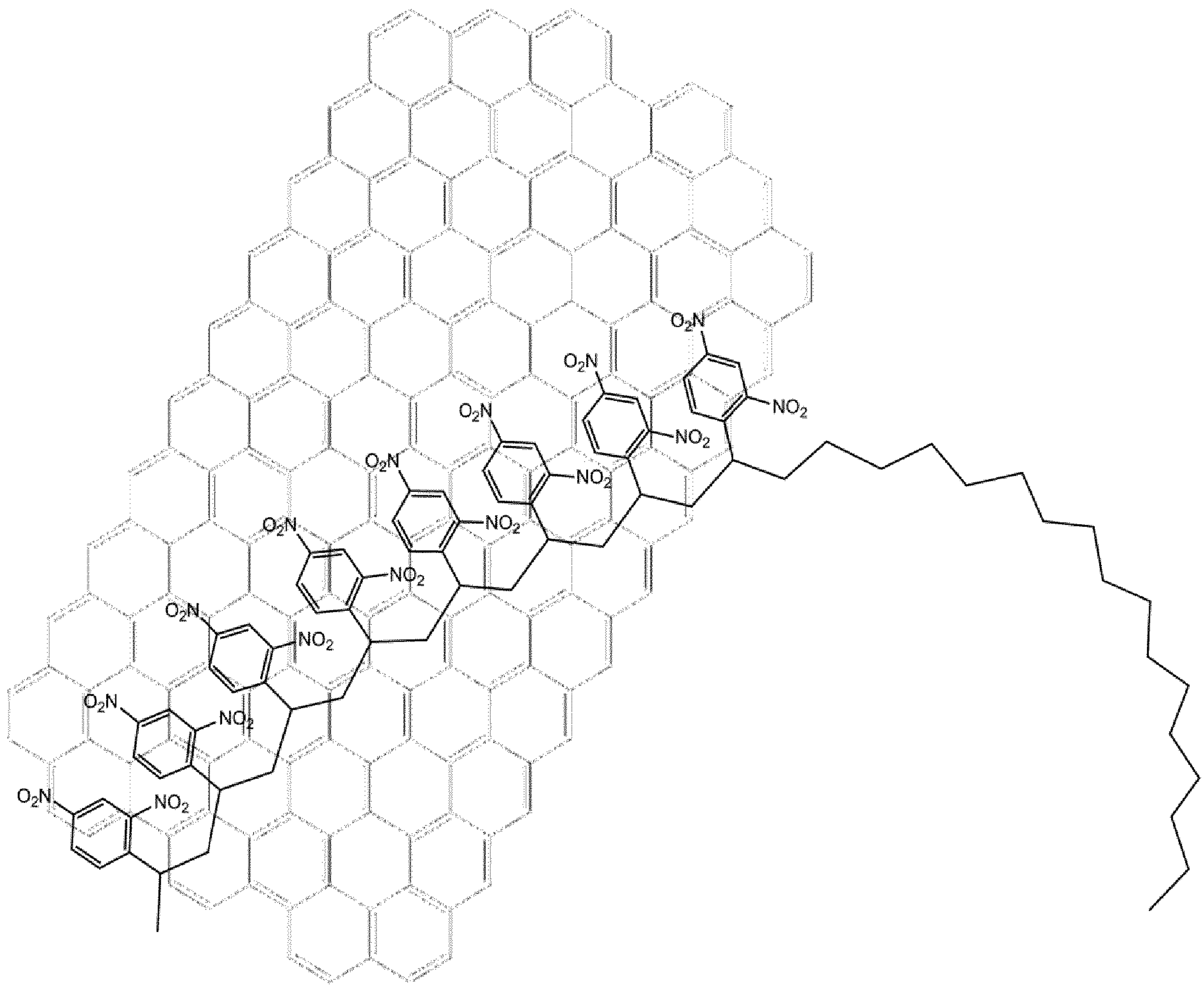

Figur 66

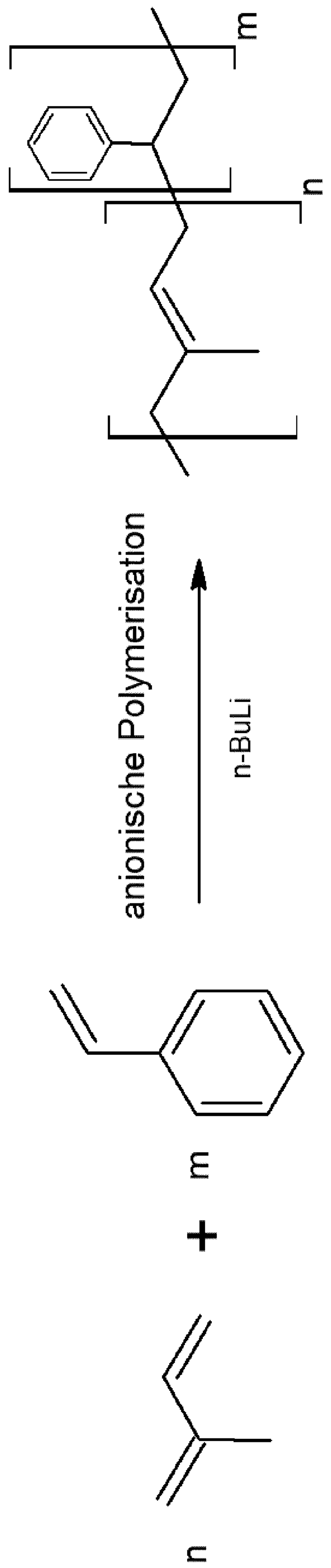


Figur 67

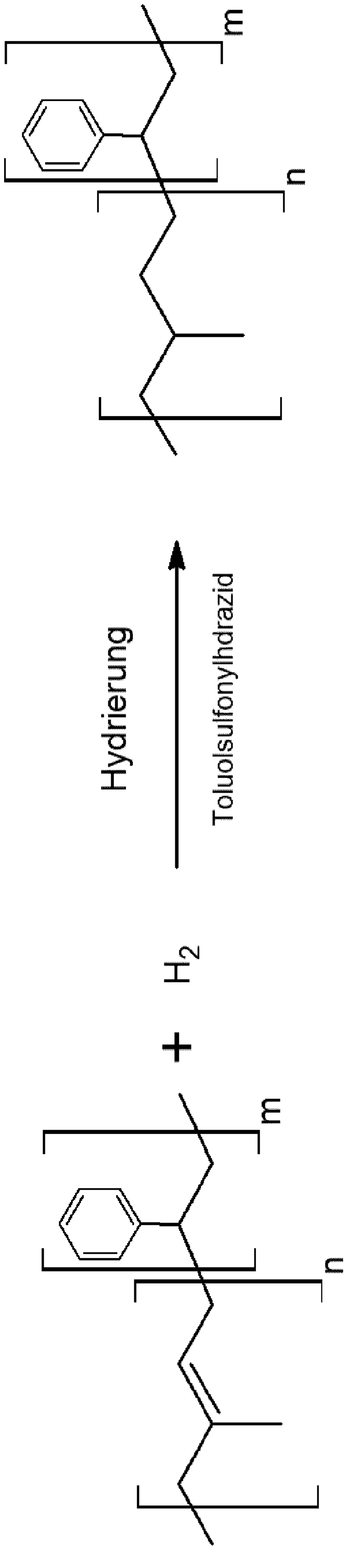


Figur 68

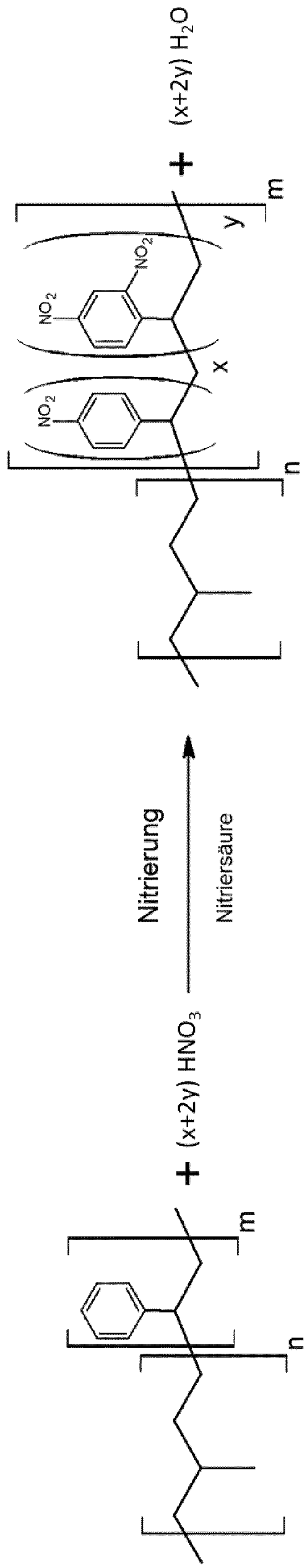


Figur 69

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 20040131859 A1
- WO 02076888 A1
- EP 1965451 A1
- DE 102009013418 A1
- DE 102009012675 A1
- DE 102009012674 A1
- DE 102006055106 A1
- DE 10301996 A1
- WO 2013073259 A1
- WO 2012177975 A1
- KR 20080015532 A
- US 2009061125 A1
- US 2014001416 A1
- US 2012298925 A1


### In der Beschreibung aufgeführte Nicht-Patentliteratur


- **LOU.** *Chem. Mater,* 2004, vol. 16, 4005-4011
- **BAHUN.** *J. Polym. Sci. Part A: Polym. Chem.,* 2006, vol. 44, 1941-1951
- **J. FRITZSCHE.** Ueber Verbindungen von Kohlenwasserstoffen mit Pikrinsäure. *Journal für praktische Chemie,* 282-292
- **M. HARA et al.** Formation and decay of pyrene radical cation and pyrene dimer radical cation in the absence and presence of cyclodextrins during resonant two-photon ionization of pyrene and sodium 1 -pyrene sulfonate. *Physical Chemistry Chemical Physics,* 2004, 3215-3220
- **A. KIRA et al.** Spectroscopic Study on Aggregate Ion Radicals of Naphthalene and Pyrene in γ-Irradiated Alkane Glasses. *The Journal of Physical Chemistry,* 1976, 1445-1448
- **J. T. RICHARDS et al.** Formation of Ions and Excited States in the Laser Photolysis of Solutions of Pyrene. *The Journal of Physical Chemistry,* 1970, 4137-4141
- **A. LIU et al.** Transient absorption spectra of aromatic radical cations in hydrocarbon Solutions. *Journal of Photochemistry and Photobiology A: Chemistry,* 1992, 197-208
- Elektrophile und nukleophile Substitution an Aromaten - Nitrierung. **W. BERGER et al.** Organikum. Johann Ambrosius Barth Verlag, 1996, 340-343
- **G. A. OLAH ; H. C. LIN.** Synthetic Methods and Reactions; XI. A Convenient Direct Preparation of 1 ,3,5-Trinitrobenzene from m-Dinitrobenzene by Nitration with Nitronium Tetrafluoroborate in Fluorosulfuric Acid. *Synthesis,* Juni 1974, 444-445
- **G. A. OLAH ; H. C. LIN.** Synthetic Methods and Reactions; XI. A Convenient Direct Preparation of 1,3,5-Trinitrobenzene from m-Dinitrobenzene by Nitration with Nitronium Tetrafluoroborate in Fluorosulfuric Acid. *Synthesis,* Juni 1974, 444-445
- **I. OSTROMISSLENSKY.** Über eine neue, auf dem Massenwirkungsgesetz fußende Analysenmethode einiger binären (sic!) Verbindungen. *Berichte der deutschen chemischen Gesellschaft,* 1911, 268-273
- **P. JOB.** Formation and stability of inorganic complexes in Solution. *Annales de chimie,* 1928, vol. 1, 13-203
- **J. S. RENNY et al.** Method of Continuous Variations: Applications of Job Plots to the Study of Molecular Associations on Organometallic Chemistry. *Angewandte Chemie International Edition,* 2013, 2-18
- **W. LIKUSSAR ; D. F. BOLTZ.** Theory of Continuous Variations Plots. *Analytical Chemistry,* 10. August 1971, 1265-1272
- **H. BENESI ; J. HILDEBRAND.** A Spectrophotometric Investigation of the Interaction of Iodine with Aromatic Hydrocarbons. *Journal of The American Chemical Society,* 1949, 2703-2707
- **R. L. SCOTT.** Some Comments on the Benesi-Hildebrand-Equation. *Recueil des Travaux Chimiques des Pays-Bas,* 1956, 787-789
- **A.-G. EL-KOURASHY.** Intermolecular charge-transfer studies on p-tolylthiourea-iodine System. *Spectrochimica Acta,* 1981, 399-403
- **R. ABU-EITTAH ; F. AI-SUGEIR.** Charge-transfer interaction of bithienyls and some thiophene derivatives with electron acceptors. *Canadian Journal of Chemistry,* 1976, 3705-3712

- **A. MOSTAFA ; H. S. BAZZI.** Synthesis and spectroscopic studies on charge-transfer molecular complexes formed in the reaction of imidazole and 1 -benzylimidazole with σ- and ττ-acceptors. *Spectrochimica Acta PartA,* 2011, 1613-1620
- **M. D. FERNÄNDEZ ; M. J. FERNÄNDEZ ; I. J. MCEWEN.** Blends of poly(styrene-ran-2,4- dinitrostyrene with poly(vinyl methyl ether) and poly(2,6-dimethyl-1 ,4-phenylene oxide). *Polymer,* 1997, 2767-2772
- **N. S.A.** *Nanocyl - The Carbon Nanotube Specialist,* 10. Marz 2009, http://www.nanocyl .com/en/Products-Sol utions/Products/Nanocyl-NC-7000-Thin-Multiwall-Carbon-Nanotubes.
- **O. REPP.** Untersuchungen zur Polymerisation von Styrol. *Diplomarbeit,* 2012
- **C. HANSCH ; A. LEO ; R. W. TAFT.** A Survey of Hammett Substituent Constants and Resonance and Field Parameters. *Chemical Reviews,* 1991, 165-195